# EUROPEAN PATENT SPECIFICATION

(11) **EP 4 555 676 B1**
(45) Date of publication and mention of the grant of the patent: **11.02.2026**
(21) Application number: 23739325.1
(22) Date of filing: 27.06.2023
(51) Int. Cl.: H04L 9/40, H04W 12/0431, H04W 12/047, H04W 12/033

(54) **SYSTEMS AND METHODS FOR ENCRYPTED GOSSIP COMMUNICATION**
SYSTEME UND VERFAHREN FÜR VERSCHLÜSSELTE GOSSIP-KOMMUNIKATION
SYSTÈMES ET PROCÉDÉS POUR LA COMMUNICATION CHIFFRÉE DE BAVARDAGES

(30) Priority: 11.07.2022 GB 202210171
(43) Date of publication of application: 21.05.2025
(73) Proprietor: Arqit Limited, London SW1E 5BY (GB)
(72) Inventor: WEBB, David Paul, Seaford Essex BN25 1TJ (GB)
(74) Representative: Crowell & Moring U.K. LLP
(86) International application number: PCT/GB2023/051680
(87) International publication number: WO 2024/013466

(56) References cited:
- CHEN YU-YI ET AL: "The Design of Secure Group Communication with Contributory Group Key Agreement Based on Mobile Ad Hoc Network", 2016 INTERNATIONAL SYMPOSIUM ON COMPUTER, CONSUMER AND CONTROL (IS3C), IEEE, 4 July 2016 (2016-07-04), pages 455 - 460, XP032947333, DOI: 10.1109/IS3C.2016.121
- BIN HAO ET AL: "A Round-Optimized Authenticated Group Key Agreement", WIRELESS COMMUNICATIONS, NETWORKING AND MOBILE COMPUTING (WICOM), 2011 7TH INTERNATIONAL CONFERENCE ON, IEEE, 23 September 2011 (2011-09-23), pages 1 - 4, XP032059346, ISBN: 978-1-4244-6250-6, DOI: 10.1109/WICOM.2011.6038692
- ANDREAS NOACK ET AL: "Group key agreement for wireless mesh networks", LOCAL COMPUTER NETWORKS, 2009. LCN 2009. IEEE 34TH CONFERENCE ON, IEEE, PISCATAWAY, NJ, USA, 20 October 2009 (2009-10-20), pages 945 - 952, XP031581386, ISBN: 978-1-4244-4488-5
- HAAS Z J ET AL: "Gossip-based ad hoc routing", PROCEEDINGS IEEE INFOCOM 2002. THE CONFERENCE ON COMPUTER COMMUNICATIONS. 21ST. ANNUAL JOINT CONFERENCE OF THE IEEE COMPUTER AND COMMUNICATIONS SOCIETIES. NEW YORK, NY, JUNE 23 - 27, 2002; [PROCEEDINGS IEEE INFOCOM. THE CONFERENCE ON COMPUTER COMMUNI, vol. 3, 23 June 2002 (2002-06-23), pages 1707 - 1716, XP010593739, ISBN: 978-0-7803-7476-8, DOI: 10.1109/INFCOM.2002.1019424
- ANNE MARIE HEGLAND ET AL: "A survey of key management in ad hoc networks", IEEE COMMUNICATIONS SURVEYS & TUTORIALS, IEEE, USA, vol. 8, no. 3, 1 July 2006 (2006-07-01), pages 48 - 66, XP011201270, ISSN: 1553-877X

## Description

### Field of the Invention

The present application relates to methods and systems for encrypted gossip-based communications. In particular, the present invention relates to network communication in, for example, mesh networks using encrypted gossip-based communications.

### Background to the Invention

With the emergence and ongoing development of the Internet of Things (IoT), the demand for resources required for communication between parties has rapidly increased. In large-scale networks, the costs of communication can grow with the size of the network on a quadratic scale - or even faster. Such a rapid increase in bandwidth, software and hardware requirements places an unprecedented burden on pre-existing communication protocols and systems.

The inventors have devised the claimed invention in light of the above considerations.

The embodiments described below are not limited to implementations which solve any or all of the disadvantages of the known approaches described above.

CHEN YU-YI ET AL: "The Design of Secure Group Communication with Contributory Group Key Agreement Based on Mobile Ad Hoc Network" discloses a Group Key Agreement (GKA) protocol for establishing a group key among all of the group members over a public network and a secure contributory group key agreement protocol based on ring structure.

BIN HAO ET AL: "A Round-Optimized Authenticated Group Key Agreement" discloses a Group Key Agreement (GKA) protocol providing a set of participants with a shared common key to secure a subsequent communication and a round-optimized authenticated group key agreement protocol which needs only n/2 + 1 (about half the number of participants) rounds promoting computation efficiency.

ANDREAS NOACK ET AL: "Group key agreement for wireless mesh networks" discloses wireless mesh networks consist of stationary nodes that communicate over wireless connections.

HAAS Z JET AL: "Gossip-based ad hoc routing" discloses a gossiping-based approach, where each node forwards a message with some probability, to reduce the overhead of the routing protocols. Gossiping exhibits bimodal behavior in sufficiently large networks: in some executions, the gossip dies out quickly and hardly any node gets the message; in the remaining executions, a substantial fraction of the nodes gets the message.

ANNE MARIE HEGLAND ET AL: "A survey of key management in ad hoc networks" discloses a survey of key management in ad hoc networks. The analysis puts some emphasis on their applicability in scenarios such as emergency and rescue operations, as this work was initiated by a study of security in MANETs for emergency and rescue operations.

### Summary of Invention

This Summary is provided to introduce a selection of concepts in a simplified form that are further described below in the Detailed Description. This Summary is not intended to identify key features or essential features of the claimed subject matter; variants and alternative features which facilitate the working of the invention and/or serve to achieve a substantially similar technical effect should be considered as falling into the scope of the invention.

In a general sense, the present disclosure provides methods and systems for securely distributing encrypted messages through a network by leveraging gossip-based communication protocols.

The invention is defined as set out in the appended set of claims. Any examples and embodiments of the description not falling within the scope of the claims do not form part of the invention as defined by the independent claims.

In a first aspect of the present invention, there is provided a method of securely distributing a message to a group of nodes within a network, wherein the network comprises a plurality of nodes, and the group of nodes comprises a subset of the plurality of nodes, the method comprising: agreeing a common group key between all of the nodes in the group of nodes, wherein agreeing the common group key comprises: arranging the group of nodes in an ordered ring; sharing or negotiating a cryptographic key of said node with an adjacent node in the ordered ring, wherein each node has another cryptographic key of an adjacent node; generating a meeting key for said node based on combining the cryptographic key of said node with a shared cryptographic key from an adjacent node; sending the meeting key to an intermediary; receiving an intermediate key from the intermediary, wherein the intermediary computes the intermediate key based on combining two or more meeting keys of corresponding nodes; and creating the group key based on combining the cryptographic key of said node with the received intermediate key, wherein the created group key comprises a combination of at least N-1 of the cryptographic keys of the nodes, wherein the group of nodes comprises N nodes; encrypting, by a first node amongst the group of nodes, a message with the group key such that only nodes that are members of the group of nodes are able to decrypt and read the message; and distributing the encrypted message through the network using a gossip-based protocol.

In some embodiments, distributing the encrypted message through the network using a gossip-based protocol may comprise: transmitting, from the first node to neighbouring nodes in the network, the encrypted message; and propagating the encrypted message through the network by forwarding the encrypted message from each node that receives the encrypted message on to further nodes that are adjacent to said node in the network

In some embodiments, when propagating the encrypted message through the network, each node that receives the encrypted message may not forward the encrypted message to adjacent nodes that have already received the encrypted message.

In some embodiments, the method may further comprise: before agreeing the common group key, initialising, by an orchestration service, the group of nodes by providing each of the nodes amongst the group of nodes, a plurality of unique IDs, wherein each of the unique IDs identifies a respective node amongst the group of nodes.

In some embodiments, initialising the group of nodes by the orchestration service may be performed in response to receiving a request from a first node to initialise a group of nodes comprising the first node and two or more other nodes within the network.

In some embodiments, distributing the encrypted message through the network may include: one or more nodes that are not members of the group of nodes receiving the encrypted message.

In some embodiments, the method may further comprise: discarding, by the one or more nodes that are not members of the group of nodes, the encrypted message.

In some embodiments, the discarding of the encrypted message may be performed in response to determining that the encrypted message has been encrypted with the group key associated with the group of nodes.

In some embodiments, the discarding, by the one or more nodes that are not members of the group of nodes, may be carried out after forwarding the encrypted message from each of the one or more nodes that are not members of the group of nodes on to further nodes that are adjacent to said node in the network.

In some embodiments, the group of nodes may comprise a plurality of nodes that are directly connected to one another.

In some embodiments, the group of nodes may comprise one or more nodes that are not directly connected to the other nodes amongst the group of nodes.

In some embodiments, the method may further comprise: receiving at one or more of the nodes amongst the group of nodes, the encrypted message; and decrypting, by said one or more nodes, the encrypted message.

In some embodiments, decrypting the encrypted message may be performed in response to verifying that the encrypted message has been encrypted with the group key associated with the group of nodes.

In some embodiments, agreeing the common group key may comprise: arranging the group of nodes in an ordered ring; sharing or negotiating a cryptographic key of said node with an adjacent node in the ordered ring, wherein each node has another cryptographic key of an adjacent node; generating a meeting key for said node based on combining the cryptographic key of said node with a shared cryptographic key from an adjacent node; and sending the meeting key to an intermediary; receiving an intermediate key from the intermediary, wherein the intermediary computes the intermediate key based on combining two or more meeting keys of corresponding nodes; and creating the group key based on combining the cryptographic key of said node with the received intermediate key, wherein the created group key comprises a combination of at least N-1 of the cryptographic keys of the nodes, wherein the group of nodes comprises N nodes.

In another aspect, there is provided a network comprising a plurality of nodes, wherein the plurality of nodes are each configured to carry out the methods described herein.

In some embodiments, the network may be a mesh network.

In another aspect, there is provided a computer comprising a processor configured to operate as a node in the network described herein.

In another aspect, there is provided a computer-readable medium comprising instruction that, when executed by a computer cause the computer to carry out the methods described herein.

In another aspect, there is provided a computer program product comprising logic that, when executed by a computer, causes the computer to carry out the methods described herein.

In some embodiments, agreeing the common group key may comprise: arranging the group of nodes in an ordered ring; and, for each node, sharing or negotiating a cryptographic key of said node with an adjacent node in the ordered ring, wherein said node has another cryptographic key of a respectively adjacent node; generating a meeting key for the party based on combining the cryptographic key of said node with a shared cryptographic key from an adjacent node; and sending the meeting key to an intermediary; receiving an intermediate key from the intermediary, wherein the intermediary computes the intermediate key based on combining two or more meeting keys of corresponding nodes; and creating the group key based on combining the cryptographic key of said node with the received intermediate key, wherein the created group key comprises a combination of at least N-1 of the cryptographic keys of the nodes.

As an option, at least N-1 of the nodes may be arranged in the ordered ring, and agreeing the common group key may further comprise: sharing a cryptographic key of said node with an adjacent node in the ring, wherein each node in the ring has another cryptographic key of an adjacent node; generating a meeting key for the node based on combining the cryptographic key of said node with a shared cryptographic key from an adjacent node; and sending the meeting key to the intermediary; receiving an intermediate key from the intermediary, wherein the intermediary computes the intermediate key based on combining two or more meeting keys of corresponding nodes in the ring; and creating the group key based on combining the cryptographic key of said node with the received intermediate key, wherein the group key comprises a combination of at least N-1 of the cryptographic keys of said at least N-1 nodes.

As another option, agreeing the common group key may further comprise: when said node is in the ordered ring: sharing or negotiating a cryptographic key of said node with an adjacent node in the ring, wherein each node in the ring has another cryptographic key of an adjacent node; generating a meeting key for said node based on combining the cryptographic key of the node with a shared cryptographic key from an adjacent node; and sending the meeting key to the intermediary; receiving an intermediate key from the intermediary, wherein the intermediary computes the intermediate key based on combining two or more meeting keys of corresponding nodes in the ring; creating the group key based on combining the cryptographic key of said node with the received intermediate key; and when said node is not in the ring: sharing or negotiating a cryptographic key of an adjacent node in the ring with said node; and receiving the intermediate key of the adjacent node in the ring from the intermediary; and creating the group key based on combining the shared cryptographic key of the adjacent node with the received intermediate key.

As a further option. the intermediary may compute an intermediate key based on combining meeting keys of at least two non-adjacent nodes in the ring excluding the meeting key of the first node; and for other nodes in the ordered ring, the intermediary computes the intermediate key for each node based on combining the meeting key of said each node with the intermediate key computed for the preceding adjacent node in the ordered ring.

As an option, combining of a key with another key may further comprise performing an exclusive OR, XOR, operation on said key with said another key.

As another option, the intermediary may compute the intermediate key based on combining the meeting key with at least one intermediate key of another node such that the intermediate key exhibits the property of a group key being formed when any intermediate key of a node is combined with the cryptographic key of the corresponding node in the ordered ring.

As another option, the intermediary may compute the intermediate key based on combining the meeting key with at least one intermediate key of another node such that the intermediate key exhibits the property that each *i-th* group key value comprising the *i-th* party cryptographic key combined with the *i-th* intermediate key is the same for each *i-th* party *i in* the ordered ring.

As a further option, for an odd number, N, of parties in the group, where N > 2 and all of the N parties are arranged in the ordered ring, agreeing the common group key, performed by each node in the ring, may further comprise receiving an intermediate key from the intermediary, wherein the intermediary computes the intermediate key based on the meeting key and a previous intermediate key of a previous adjacent node.

Optionally, for an odd number, N, of parties in the group, where *N* > 2, all of the N parties may be arranged in an ordered ring, agreeing the common group key, performed by each *p-th* node for *0<=p<=N-1,* may further comprise: when *p=0,* performing the steps of: sharing or negotiating *a p-th* cryptographic key *K_{P}* with the next adjacent *(p+1)-th* node in the ring; generating a p-th meeting key *M_{P}* for the p-th node based on combining the p-th cryptographic key *K_{P}* with a previously shared or negotiated *(N-1)-th* cryptographic key K_{N-1} from the *(N-1)-th* node; and sending the meeting key *M_{P}* to the intermediary, wherein the intermediary computes the *p-th* intermediate key, *X_{P},* based on combining meeting keys of two non-adjacent nodes in the ring excluding the meeting key of the *p-th* node; when *0<p<N,* performing the steps of: if p<N-1, sharing or negotiating a *p-th* cryptographic key *K_{P}* with the next adjacent (p+1)-th node in the ring; if p=N-1,sharing or negotiating a *p-th* cryptographic key *K_{P}* with the *0-th* node in the ring; and generating a p-th meeting key *M_{P}* for the *p-th* node based on combining the p-th cryptographic key *K_{P}* with a previously shared or negotiated *(p-1)-th* cryptographic key *K*_{*P*-1} from the *(p-1)-th* node; and sending the meeting key *M_{P}* to the intermediary, wherein the intermediary computes the *p-th* intermediate key, *X_{P},* based on combining the *p-th* meeting key *M_{P}* with at least one intermediate key of another node; and receiving the *p-th* intermediate key, *X_{P},* from the intermediary; and creating the group key, *K_{G}*, based on combining the p-th cryptographic key *K_{P}* with the *p-th* intermediate key, *X_{P}.*

As an option, each *p-th* cryptographic key, *K_{P}*, may be a precursor key generated by the *p-th* node prior to sharing. Sharing may further comprise sharing the *p-th* cryptographic key, *K_{P}*, of the *p-th* party with an adjacent *((P-1+N) mod N)-th* node, wherein after all nodes in the ring have shared, the *p-th* node has the *((P-1+N) mod N)-th* cryptographic key, *K*₍*_{P-1+N) mod N},* of the *((P-1+N) mod N)-th* node in the ring.

As another option, each *p-th* cryptographic key, *K_{P}*, may be a precursor key negotiated by the *p-th* node with the (p+1)-th node, wherein when *p=N-1, (N-1)-th* cryptographic key, *K*_{*N*-1}, is a precursor key negotiated by the *(N-1)-th* node with the 0-th node.

Optionally, negotiating each p-th cryptographic key, *K_{P}*, may further comprise performing a key exchange or negotiation procedure to negotiate the *p-th* cryptographic key, *K_{P}*, of the *p-th* node with an adjacent *((P-1+N) mod N)-th* node, wherein after all nodes in the ring have been negotiated, the *p-th* node and the adjacent *((P-1+N) mod N)-th* node share the same *((P-1+N) mod N)-th* cryptographic key, *K_{(P-1+N) mod N}.*

Optionally, generating the *p-th* meeting key, *M_{P},* may further comprise generating the *p-th* meeting key, *M_{P}* based on *M_{P}* = *K_{P} XOR K_{(P-1+N) mod N}* for all *p.*

As another option, the intermediary may compute the *p-th* intermediate key, *X_{P},* for the *p-th* node based on: for *p = 0, X₀ = XOR{r = 2 to N-1 step 2} Mᵣ;* and for 0 *< p < N, Xp = X_{P-1} XOR M_{P}*.

As another option, creating the group key, *K_{G}*, for the *p-th* node may further comprise creating the group key, *K_{G}*, based on *K_{G} = X_{P} XOR K_{P},* wherein the group key, *K_{G}*, is the same for all nodes.

As an option, for an even number, N, of nodes in the group, where N > 2 and only N-1 parties of the N nodes are arranged in an ordered ring, the method may further comprise: when a node is in the ring, performing the steps of: sharing or negotiating the cryptographic key of said node with an adjacent node in the ring, wherein each node in the ring has another cryptographic key of an adjacent node; generating a meeting key for the node based on combining the cryptographic key of the node with a shared cryptographic key of an adjacent party; and sending the meeting key to the intermediary; receiving an intermediate key from the intermediary, wherein the intermediary computes the intermediate key based on combining at least two or more meeting keys of the nodes in the ring; creating the group key based on combining the cryptographic key of the party with the received intermediate key; and when a node is not in the ring, performing the steps of: sharing or negotiating a cryptographic key of an adjacent node in the ring with the party; and receiving the intermediate key of the adjacent node in the ring from the intermediary; and creating the group key based on combining the shared cryptographic node of the adjacent party with the received intermediate key.

Optionally, for an even number, N, of parties in the group, where *N* > 2 and the N parties are arranged in an ordered ring for *0<=p<=N-1,* agreeing the common encryption key may comprise: when said node is a *p-th* node in the ordered ring, for *0<=p<N-1:* if *p=0,* performing the steps of: sharing or negotiating a *p-th* cryptographic key *K_{P}* with the next adjacent *(p+1)-th* node in the ring; and generating a p-th meeting key *M_{P}* for the p-th node based on combining the p-th cryptographic key *K_{P}* with a previously shared *(N-2)-th* cryptographic key K_{N-2} from the *(N-2)-th* node in the ring; and sending the meeting key *M_{P}* to the intermediary, wherein the intermediary computes the *p-th* intermediate key, *X_{P},* based on combining meeting keys of two non-adjacent nodes in the ring excluding the meeting key of the *p-th* node; and if *0<p<N-1,* performing the steps of: if p<N-2, sharing or negotiating a *p-th* cryptographic key *K_{P}* with the next adjacent (p+1)-th node in the ring; if *p=N-2,* sharing or negotiating a *p-th* cryptographic key *K_{P}* with the *0-th* node in the ring; generating a p-th meeting key *M_{P}* for the *p-th* node based on combining the p-th cryptographic key *K_{P}* with a previously shared *(p-1)-th* cryptographic key K_{P-1} from the *(p-1)-th* node; and sending the meeting key *M_{P}* to the intermediary, wherein the intermediary computes the *p-th* intermediate key, *X_{P},* based on combining the *p-th* meeting key *M_{P}* with at least one intermediate key of another node; and receiving the *p-th* intermediate key, *X_{P}*, from the intermediary; creating the group key, *K_{G}*, based on combining the p-th cryptographic key *K_{P}* with the *p-th* intermediate key, *X_{P};* and when the node is the (N-1)-th party in the ring, performing the steps of: sharing with the *(N-2)-th* node in the ring the *(N-2)-th* cryptographic key of the *(N-2)-th* node in the ring; receiving the *(N-2)-th* intermediate key of the *(N-2)-th* node in the ring from the intermediary; and creating the group key, *K_{G}*, based on combining the shared *(N-2)-th* cryptographic key of the *(N-2)-th* party in the ring with the received *(N-2)-th* intermediate key.

As a further option, each *p-th* cryptographic key, *K_{P}*, may be a precursor key generated by the *p-th* node prior to sharing.

As another option, sharing may further comprise sharing the *p-th* cryptographic key, *K_{P}*, of the *p-th* node with an adjacent *((P-1+N) mod N)-th* node, wherein after all nodes in the ring have shared, the *p-th* node in the ring has the *((P-1+N) mod N)-th* cryptographic key, *K_{(P-1+N)mod N},* of the *((P-1+N) mod N)-th* node in the ring.

As an option, each *p-th* cryptographic key, *K_{P}*, may be a precursor key negotiated by the *p-th* node with the (p+1)-th node, wherein when *p=N-2, (N-2)-th* cryptographic key, *K*_{*N*-2}, is a precursor key negotiated by the *(N-2)-th* node with the 0-th node, wherein when p=N-1, the *(N-1)-th* cryptographic key, *K_{N-1}*, is a precursor key of the *(N-2)-th* node.

Optionally, negotiating each p-th cryptographic key, *K_{P}*, may further comprise performing, for *0<p<=N-2,* a key exchange or negotiation procedure to negotiate the *p-th* cryptographic key, *K_{P}*, of the *p-th* node with an adjacent *((P-1+N) mod N)-th* node, and when p=0, the *p-th* cryptographic key, *K_{P}*, of the *p-th* node with an adjacent *((P-2+N) mod N)-th* node, wherein for 0<p<N-1, the *p-th* node and the adjacent *((P-1+N) mod N)-th* node share the same *((P-1+N) mod N)-th* cryptographic key, *K_{(P-1+N)mod N},* and for p=0, the *0-th* node and the adjacent *(N-2)-th* node share the same *(N-2)-th* cryptographic key, K_{*(N*-*2)*}.

As an option, generating the *p-th* meeting key, *M_{P},* may further comprise generating the *p-th* meeting key, *M_{P}* based on M*_{P}* = *K_{P} XOR K_{(P-1+N) mod N}* for all p.

As another option, the intermediary may compute the *p-th* intermediate key, *X_{P},* for the *p-th* node based on: for *p = 0, X₀ = XOR{r = 2 to N-1 step 2} Mᵣ;* and for 0 *< p < N, X_{P} = X_{P-1} XOR M_{P}*.

As a further option, creating the group key, *K_{G}*, for the *p-th* node may further comprise creating the group key, *K_{G}*, based on *K_{G} = X_{P} XOR K_{P},* wherein the group key, *K_{G}*, is the same for all nodes.

Optionally, for an even number, N, of nodes in the group, where *N* > 2, all of the N nodes are arranged in an ordered ring, wherein an *(N+1)-th* virtual node is included into the ordered ring between the *(N-1)-th* and *0-th* party, where the *(N+1)-th* virtual node is provided with an *N-th* cryptographic key, agreeing the common encryption key, performed by each *p-th* node of the ring *0<=p<=N,* comprising: when a node is in the ring, performing the steps of: sharing or negotiating the cryptographic key of the node with an adjacent node in the ring, wherein each node in the ring has another cryptographic key of an adjacent node; generating a meeting key for the party based on combining the cryptographic key of the node with a shared cryptographic key of an adjacent node; and sending the meeting key to the intermediary; receiving an intermediate key from the intermediary, wherein the intermediary computes the intermediate key based on combining at least two or more meeting keys of the nodes in the ring; creating the group key based on combining the cryptographic key of the node with the received intermediate key; and when the node is the virtual node, performing the steps of: sharing a cryptographic key of an adjacent node in the ring with the node; and receiving the intermediate key of the adjacent node in the ring from the intermediary; and creating the group key based on combining the shared cryptographic key of the adjacent node with the received intermediate key.

As an option, for an even number, N, of nodes in the group, where N > 2, all of the N nodes are arranged in an ordered ring *0<=p<=N-1,* wherein an *(N+1)-th* virtual node is included into the ordered ring between the *(N-1)-th* and *0-th* node, the method, performed by a node, comprising: if *p=0,* performing the steps of: sharing or negotiating a *p-th* cryptographic key *K_{P}* with the next adjacent *(p+1)-th* node in the ring; and generating a p-th meeting key *M_{P}* for the p-th node based on combining the p-th cryptographic key *K_{P}* with a previously shared *N-th* cryptographic key, *K_{N}*, associated with the *(N+1)-th* virtual node in the ring; sending the meeting key *M_{P}* to the intermediary, wherein the intermediary computes the *p-th* intermediate key, *X_{P},* based on combining meeting keys of two non-adjacent nodes in the ring excluding the meeting key of the *p-th* node; and if *0<p<=N-1,* performing the steps of: if p<N-1, performing the steps of: sharing or negotiating a *p-th* cryptographic key *K_{P}* with the next adjacent *(p+1)-th* node in the ring; generating a p-th meeting key *M_{P}* for the *p-th* node based on combining the p-th cryptographic key *K_{P}* with a previously shared *(p-1)-th* cryptographic key K_{P-1} from the *(p-1)-th* node; and sending the meeting key *M_{P}* to the intermediary, wherein the intermediary computes the *p-th* intermediate key, *X_{P},* based on combining the *p-th* meeting key *M_{P}* with at least one intermediate key of another node; if *p=N-1,* performing the steps of: hosting the *(N+1)-th* virtual node; sharing or negotiating the *N-th* cryptographic key *K_{N}* of the *(N+1)-th* virtual node with the *0-th* node in the ring; generating a *(N-1)-th* meeting key *M_{N-1}* for the *(N-1)-th* node based on combining the (N-1)-th cryptographic key *K_{P}* with a previously shared *(N-2)-th* cryptographic key K_{N-2} from the (N-2)-*th* node; generating a *N-th* meeting key *M_{N}* for the *(N-1)-th* node based on combining the shared or negotiated N-th cryptographic key *K_{N}* of the *(N+1)-th* virtual node with the *(N-1)-th* cryptographic key, K_{N-1}, of the *N-th* node; and sending the meeting keys *M_{N}* and *M_{N-1}* to the intermediary, wherein the intermediary computes the *(N-1)-th* intermediate key, *X_{N-1}*, based on combining the *(N-1)-th* meeting key *M_{N-1}* with the *(N-2)-th* intermediate key, *X_{N-2},* of the *(N-2)-th* party; and receiving the *p-th* intermediate key, *X_{P}*, from the intermediary; and creating the group key, *K_{G}*, based on combining the p-th cryptographic key *K_{P}* with the *p-th* intermediate key, *X_{P}.*

As another option, each *p-th* cryptographic key, *K_{P}*, may be a precursor key generated by the *p-th* node prior to sharing.

As a further option, for *0<=p<N* generating the *p-th* meeting key, *M_{P},* may further comprise generating the *p-th* meeting key, *M_{P}* based on *M_{P}=K_{P} XOR K_{(P+N) mod (N+1)},* ; and for *p=N-1,* performing the steps of: generating the *(N-1)-th* meeting key, *M_{N-1}*, based on *K_{N-1} XOR K_{N-2};* and generating the *N-th* meeting key, *M*_{*N*-*1*}, based on *K_{N}* XOR *K_{N-1}.*

As an option, the intermediary may compute the *p-th* intermediate key, *X_{P},* for the *p-th* node based on: for *p = 0, X₀ = XOR{r = 2 to N-2 step 2} Mᵣ;* and for 0 *< p <= N, Xp = X_{P-1} XOR M_{P}.*

As an option, creating the group key, *K_{G}*, for the *p-th* node further comprising creating the group key, *K_{G}*, based on *K_{G} = X_{P} XOR K_{P},* wherein the group key, *K_{G}*, is the same for all nodes.

Optionally, sharing the cryptographic key may further comprise performing a cryptographic key exchange of the cryptographic key.

As a further option, sharing the cryptographic key may further comprise: securely sharing the p-th cryptographic key *K_{P}* with the next adjacent node *p+1* in the ring; and securely receiving a (p-1)-th cryptographic key K_{P-1} from the previous adjacent node (p-1) in the ring.

As a further option, negotiating the cryptographic key may further comprise: securely negotiating the p-th cryptographic key *K_{P}* with the next adjacent node *p+1* in the ring; and securely negotiating a (p-1)-th cryptographic key K_{P-1} with the previous adjacent node (p-1) in the ring.

Optionally, a node or external actor may notify the intermediary that a group key is required for use by a group of nodes, wherein the notification includes data representative of each of the nodes that are to be included in the group of nodes.

As an option, the intermediary may arrange or organise the nodes of the group of nodes into an ordered ring, assigning an ordered and increasing index to each adjacent node either clockwise or anticlockwise around the ring.

As an option, the intermediary may adjust the size of the ring to an odd number of devices in the ring when there is an even number of parties in the ring.

As another option, the intermediary may arrange or organise the nodes of the group of nodes into a ring and internally assigning a sequential zero-based index, p, to each party and mapping the external reference of each party to its zero-based reference, p.

As a further option, the intermediary may notify each *p-th* node of the external reference or address of the *(p+1)-th* node in the ring for *0<=p<N-1,* wherein the intermediary notifies the *(N-1)-th* node of the external reference or address of the *0-th* node.

Optionally, agreeing the common encryption key may further comprise receiving an additional key from another node of the group or an external party other than the intermediary, wherein calculating the group key further comprises combining the intermediate key with the cryptographic key of said node and the received additional key.

Optionally, the additional key may be an OTP key.

As an option, the *p-th* node in the group may calculate the group key, *K_{G}*, based on *K_{G} = Xp XOR K_{P} XOR* additional key, where *X_{P}* is the intermediate key received by the *p-th* node and *K_{P}* is the cryptographic key of the *p-th* node.

in some embodiments, agreeing the common encryption key may comprise creating a group key for a group of N parties using an intermediary, the creating, performed by the intermediary, comprising: receiving a meeting key from each of the nodes at the intermediary, wherein the meeting key for each node is based on combining the cryptographic key of the node with a shared or negotiated cryptographic key from an adjacent node; computing an intermediate key for each node, wherein the intermediate key for each node is computed based on combining two or more meeting keys of corresponding nodes; transmitting the intermediate key for each node to each node, wherein the intermediate key for said each node is used to create the group key based on combining the cryptographic key of said each node with the received intermediate key of said each node, wherein the created group key comprises a combination of at least N-1 of the cryptographic keys of the nodes.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is issued for designing silicon chips, or for configuring universal programmable chips, to carry out desired functions.

The features and embodiments discussed above may be combined as appropriate, as would be apparent to a person skilled in the art, and may be combined with any of the aspects of the invention except where it is expressly provided that such a combination is not possible or the person skilled in the art would understand that such a combination is self-evidently not possible.

### Brief Description of the Drawings

Embodiments of the present invention are described below, by way of example, with reference to the following drawings.
**Figure 1** depicts a schematic of a mesh network, as described herein.
**Figure 2** depicts a schematic of a node within the mesh network of Figure 1.
**Figure 3** depicts a schematic of a networked system comprising a mesh network and an orchestrator service.
**Figure 4a** is a schematic diagram illustrating an example group key creation formation system.
**Figure 4b** is a flow diagram illustrating an example group key creation/formation process for use with Figure 4a.
**Figure 4c** is a flow diagram illustrating another example group key creation/formation process for use with Figure 4a.
**Figure 4d** is a flow diagram illustrating a further example group key creation/formation process for use with Figure 4a.
**Figure 4e** is a schematic diagram illustrating another example group key creation/formation system.
**Figure 4f** is a schematic diagram illustrating yet another example group key creation/formation system.
**Figure 4g** is a schematic diagram illustrating a further example group key creation/formation system.
**Figure 5** is a schematic diagram illustrating another example group key creation/formation system for odd N.
**Figure 6** is a schematic diagram illustrating another example group key creation/formation system for even N.
**Figure 7** is a schematic diagram illustrating another example group key creation/formation system for even N and a virtual party.
**Figure 8a** is a schematic diagram illustrating an example computing system, device or apparatus for use in implementing one or more portions of an example group key creation/formation protocol/process.
**Figure 8b** is a schematic diagram illustrating an example system for use in implementing an example group key creation/formation protocol/process.
**Figure 9** depicts a sequence diagram of a method for securely communicating between nodes of a mesh network, as described herein.
**Figure 10** shows a method for securely distributing a message to a group of nodes within a network, as described herein.

Common reference numerals are used throughout the figures to indicate the same or similar features.

### Detailed Description

Embodiments of the present invention are described below by way of example only. These examples represent the best mode of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

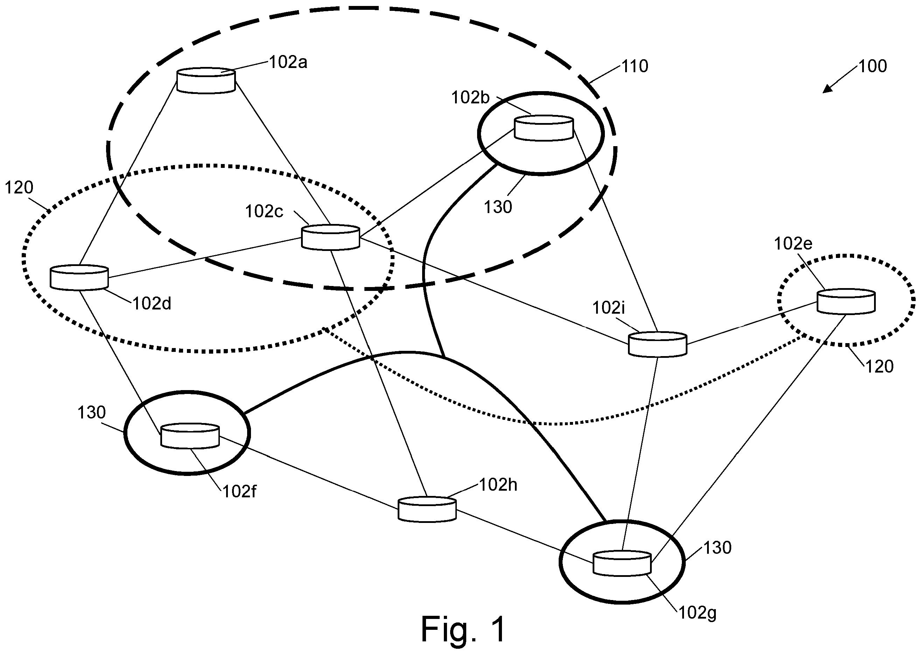

Figure 1 depicts a schematic of a mesh network 100. The mesh network 100 comprises a plurality of nodes 102a-102i. As the skilled person will appreciate, the mesh network 100 may comprise more or fewer nodes than the nine nodes 102a-102i depicted in Figure 1. Each node 102a-102i in the mesh network 100 has a unique ID, *IDₓ.* Each node 102a-102i is identifiable based on its unique ID, *IDₓ.* The mesh network 100 shown in Figure 1 is a partially connected network. In other words, the plurality of nodes 102a-102i are not fully directly interconnected - some of the plurality of nodes, for example a first node 102a, are only directly connected to a subset of the plurality of nodes 102a-102i. In the example shown in Figure 1, the first node 102a is directly connected only to third and fourth nodes 102c, 102d. In other examples, the mesh network 100 may be a fully connected network. In other words, the plurality of nodes 102a-102i are fully directly interconnected - that is, each of the nodes 102a-102i is directly connected to each of the other nodes 102a-102i in the network 100.

In the context of this application, 'directly connected' may be taken to mean 'communicatively linked' and vice versa. That is, two nodes that are directly connected are connected in the sense that they are communicatively linked with one another.

As is discussed in more detail below, the nodes 102a-102i of the mesh network 100 may be arranged into one or more groups 110, 120, 130. In the example shown in Figure 1, first second and third nodes 102a-102c are arranged into a first group 110; third, fourth and fifth nodes 102c-102e are arranged into a second group 120; second, sixth and seventh nodes 102b, 102f, 102g are arranged into a third group 130; and eighth and ninth nodes 102h-102i are not arranged in any of the first, second, or third groups 110, 120, 130. As can be seen in Figure 1, any given node (for example the second node 102b) may be arranged into more than one group (for example both the first and third groups 110, 130). Additionally or alternatively, each of the nodes within a group (for example the first group 110), may be directly connected. Additionally or alternatively, a group (for example the second group 120) may comprise some nodes that are directly connected (for example the third and fourth nodes 102c-102d) and one or more nodes (for example the fifth node 102e) that are not directly connected with the other nodes of arranged in the group. Additionally or alternatively, each of the nodes within a group (for example, the third group 130), may not be directly connected with the other nodes within the group. In other words, the connection between each of the nodes of such as group 130 may be indirect, or via other nodes in the mesh network 100.

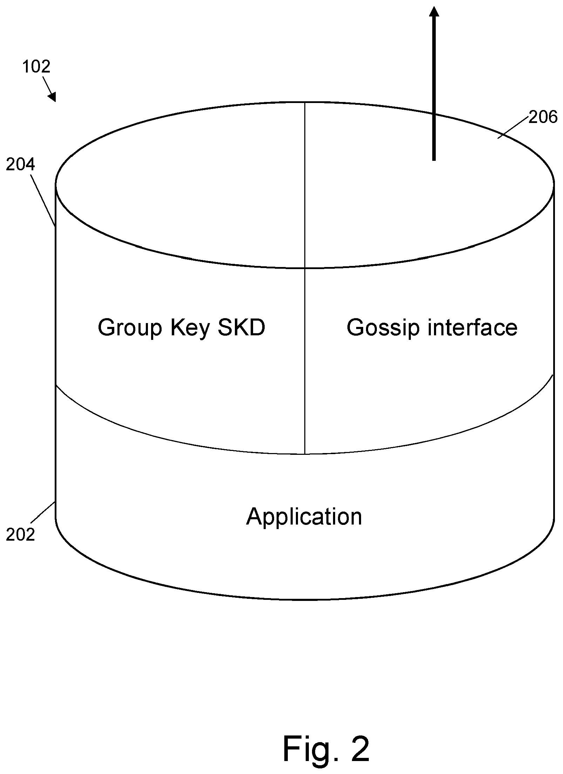

Figure 2 depicts a schematic of a node 102 within the mesh network 100 of Figure 1. The node 102 comprises one or more application services 202. The application services 202 may comprise instructions for the node 102 to execute a particular piece of software. The software may be pre-loaded onto the node 102 or onto a device that is communicatively linked to the node 102. Additionally or alternatively, the application services 102 may comprise instructions for the node 102 to control the activity of a particular piece of hardware or machinery. The node 102 may be installed onto the hardware or machinery or may be communicatively linked to hardware or machinery.

In some examples, the application services 302 may include control software, for example for an Internet of Things (IoT) sensor in an industrial or other setting. In other examples, the application services 302 may include a crypto box in a mobile setting, such as a vehicle and more particularly an aircraft. Such a crypto box may facilitate the establishing of communications across an interconnected mesh of (optionally mobile) nodes. The crypto box may further facilitate the division of the interconnected mesh into one or more sub-groups, each of which may be managed by the same, or by different application services 302.

The node 102 further comprises a Group Key Software Development Kit (Group Key SDK) 204. In some examples, the Group Key SDK 204 is a software service installed on the node 102. The Group Key SDK 204 facilitates the encryption of a message using a Group Key, in accordance with the methods described below in relation to agreeing a Group Key amongst a group 110, 120, 130 of nodes 102a-102i within the mesh network 100. The Group Key SDK 204 further facilitates the decryption of a message that has been encrypted using the Group Key.

The node 102 further comprises a gossip interface 206. In some examples, the gossip interface 206 is a software service installed on the node 202. The gossip interface 206 facilitates the sending of group messages across the mesh network 100 using a gossip protocol. Gossip protocols allow peer-to-peer distribution of messages. Implementing a gossip protocol may facilitate an epidemic-like spread of a message across a network such as the mesh network 100. When a node 102 receives a message to be distributed, or instructions to distribute a message stored on the node 102, the node 102 communicates the message to one or more of its neighbours in the mesh network 100. With each stage, for example each time step of the message distribution, the number of copies of the message being communicated between nodes grows exponentially until all nodes 102a-102i of the mesh network 100 have received the message.

In some examples, the node 102 further comprises an encryption layer (not pictured).The encryption layer may be configured to encrypt messages to be transmitted by the node 102 based on a key obtained from the Group Key SDK 204. The encryption layer may be further configured to transmit the encrypted message to the gossip interface 206 for propagation through the mesh network 100. In this way, the encryption layer may serve to separate the confidentiality and messaging functions of the node 102.

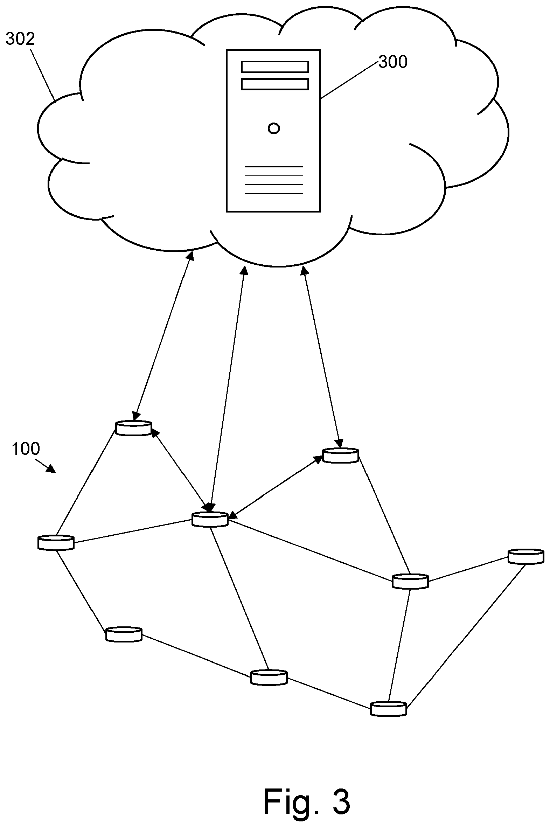

Figure 3 depicts a schematic of a networked system comprising a mesh network 100 and an orchestrator service 300. The orchestrator service 300 is communicatively linked with the mesh network 100. In some examples, the orchestrator service 300 is part of a cloud service 302. Further, the orchestrator service is communicatively linked with each of the nodes 102a-102i of the mesh network 100. For each group 110, 120, 130, orchestration service 300 enables the nodes 102 within the group to securely agree a respective Group Key, in accordance with the methods described below.

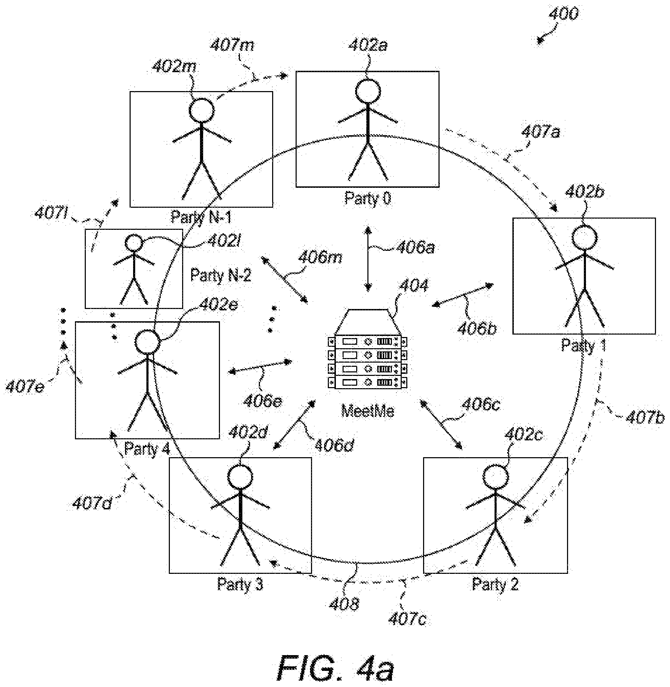

Methods of agreeing the common encryption key, or Group Key, are set out in detail here, in relation to Figures 4a to 8. In the details set out below, the terms "party" and "node" should be considered as being interchangeable with one another. Additionally, it should be noted that the intermediary referred to below in relation to processes of agreeing the common encryption key may be the orchestration service referred to elsewhere herein, or may be a logically distinct device from the orchestration service.

For example, the group key formation may include creating a group key for a group of N parties using an intermediary (e.g. a Chat or MeetMe server, a cloud service/application, a dedicated server, any other single compute device, or an IoT device, etc.). The N parties are arranged in a particular ordering to form a sequentially ordered ring, in which each *n-th* party and *(n+1)-th* party are adjacent to each other for *0<=n<N-1,* and where the *(N-1)-th* party is adjacent the first party or *0-th* party in the ordered ring. Each party in the ring is configured to: share, establish or negotiate a precursor cryptographic key of the party with the next or adjacent party in the ring, where each party in the ring has shared/established or negotiated a precursor cryptographic key with the previous adjacent party. Thus, each party has shared/established or negotiated a precursor key with a previous adjacent party and a next adjacent party in the ring. A meeting key for each party is generated based on combining the precursor cryptographic key of the party with a shared precursor cryptographic key from the previous party; send the meeting key to the intermediary and receive an intermediate key from the intermediary. The intermediary computes the intermediate key based on combining two or more meeting keys from the parties in the ring. Each party in the ring is further configured to: create the group key based on combining the cryptographic precursor key of the party with the received intermediate key. In any event, each of the parties in the group uses the created group key in communications (or for other purposes) with one or more other parties of the group. The intermediary does not have visibility of the final group key and so cannot derive the group key, hence the intermediary may be configured or considered to be an untrusted device or server that assists the group of parties/parties to negotiate the group key. An advantage of the invention provides that the untrusted intermediary is never aware of the group key, nor can the intermediary calculate the group key from the information it has in relation to the parties, nor can an eavesdropper calculate the group key from either the data exchanged between parties or from the data exchanged between any number of parties and the intermediary.

Additional parties not in the ring may be added to the group after a group key has been negotiated, where the additional party connects to one of the parties in the ring and the connected party is configured to: share its precursor cryptographic key with the additional party; provide the intermediate key to the additional party; where the additional party then creates the group key based on combining the shared precursor cryptographic key of the connected party with the received intermediate key. This may be performed for several additional parties, however, this may impact security of the group key. Instead, if multiple additional parties are to join the group of parties, then a new group key may be formed.

As an option and to further secure the group key, the organiser of the meeting may send a one time pad (OTP) key to each of the parties in the ring, where the OTP key is not distributed or shared with the intermediary. When each party in the ring calculates the group key by XORing their intermediate key and their precursor key, they further XOR this result with the received OTP key to further secure the resulting group key. In this manner, this provides the additional advantage of stopping the intermediary device from adding further parties or any unknown parties to the group not agreed by the organiser or instigator, where such unknown parties would not have the OTP key and so cannot derive the secured group key without the organiser knowing.

As described, each party may share, establish or negotiate a precursor cryptographic key with an adjacent party in the ring. Any suitable or secure key sharing, establishment or negotiation protocol or procedure may be implemented to ensure two adjacent parties share the same cryptographic key, which becomes the shared precursor cryptographic key shared/established or negotiated between the two parties. The key sharing, establishment or negotiation protocol may be the same for all parties in the ring to ensure the precursor cryptographic keys that are shared/established or negotiated are in the same form, similar format and/or type such that they may be mathematically compatible to be combined with the meeting keys to form the group key. The key sharing, establishment or negotiation protocol that is used may be based on, without limitation, for example the BB84 protocol; any suitable post-quantum key exchange protocol such as, without limitation, for example Supersingular Isogeny Key Encapsulation (SIKE), Bit Flipping Key Encapsulation (BIKE) and/or any other suitable post-quantum key exchange protocol, combinations thereof, modifications thereto and/or as the application demands; any suitable classical key exchange/sharing/negotiating protocol such as, without limitation, for example Transport Layer Security (TLS)/Diffie-Hellman (DH) protocol and the like used to negotiate a shared key; or have a secured channel is established between the two parties in which they pass a one time pad (OTP) or random key from one to the other; any other quantum key exchange protocol used to establish and/or exchange a shared key between two parties; negotiating or establishing a shared key via a third party such as an intermediary or cloud service and the like; wherein the shared key may be based on quantum key distributed keys and may be a quantum-safe or quantum secure key due to the key establishment protocol being a quantum-secure key establishment protocol that uses quantum distributed keys to establish the shared key between the parties; combinations thereto, modifications thereto and the like. It is assumed herein that each party in the ring has securely shared, negotiated or exchanged and established a first shared precursor key with the previous adjacent party in the ring to said each party and has shared, negotiated or exchanged and established a second shared precursor key with the next adjacent party in the ring to said each party.

A party comprises or represents any entity, computing device, or device capable of performing cryptographic operations and communications and that wishes or is selected to be part of a group for negotiating a group key. Examples of a party may include, without limitation, for example an user device, OGR, server, loT device, component of a fighter jet, smart phone, laptop, personal computer, portable computing device, any communication device etc. that wishes to be part of the group. An intermediary may comprise or represent any untrusted entity, application, device, cloud service, computing device or server and the like that assists a group of parties to negotiate a group key. Examples of an intermediary may include, without limitation, for example, a cloud service/application; a cloud platform; a Chat service or server/application; a MeetMe service or server/application; an untrusted device or entity; a dedicated server; any other single compute device; computing device; an loT device; a network of servers etc.; and/or any other suitable computing apparatus, component and/or platform for acting as an intermediary as described herein for assisting a group of parties in negotiating a group key as described herein; combinations thereof, modifications thereto and/or as the application demands.

Each of the cryptographic keys, precursor keys, meeting keys, intermediate keys and the like may comprise or represent symbol strings or sets of symbol strings (e.g. *n* bit(s) per symbol are represented by *M*=*2ⁿ* different symbols, where *n*≥1). Processing of the symbol strings may include combining of sets of symbol strings, e.g. a first symbol string may be combined with a second symbol string based on, without limitation, for example one-time-pad encryption/decryption, masking, exclusive OR (XOR) operations on bits when symbols are converted to bits, or extended XOR operations on symbols or obfuscated set of the symbol strings. For example, a key may be combined with another key using an XOR operation and/or extended XOR operation on the bits and/or symbols, respectively, of the key and the other key.

That is, combining a first key (or first set of symbols or first symbol string) with a second key (or second set of symbols or a second symbol string) may be performed using, without limitation, for example: exclusive or (XOR) operations on corresponding symbols of the first and second keys (e.g. converting the symbols of the first and second keys into bit strings and performing bitwise XOR); bitwise XOR operations when the symbols of the first and second keys are bit symbols; extended XOR operations on the corresponding symbols of the first and second keys (e.g. using a mathematically defined extended set of "symbol XOR" operations on symbols that preserve the mathematical properties of bitwise XOR operations); OTP functions and the like such as, without limitation, for example, modulo addition or subtraction would be an appropriate alternative *(-(A-B) mod n* -> C, working with symbol values of [0..N-1]); one-time-pad encryption of the set of symbols of the first key and the set of symbols of the second key; and/or any other trapdoor or encryption operation on the set of symbols of the first key and set of symbols of the second key and the like.

Although the following examples describe using XOR and/or XOR-type operations, this is by way of example only and the invention is not so limited, it is to be appreciated by the skilled person that the XOR operations and/or combinations of symbol strings, keys and the like as described herein with reference to figures 1a to 5b may be substituted with any suitable type of function, OTP function and/or operation including, without limitation, for example bitwise XOR operations when the symbols of the first and second keys are bit symbols; extended XOR operations on the corresponding symbols of the first and second keys (e.g. using a mathematically defined extended set of "symbol XOR" operations on symbols that preserve the mathematical properties of bitwise XOR operations); one-time-pad encryption of the set of symbols of the first key and the set of symbols of the second key; and/or any other trapdoor or encryption operation on the set of symbols of the first key and set of symbols of the second key and the like; modulo addition or subtraction would be an appropriate alternative *(-(A-B) mod n ->* C, working with symbol values of [0..N-1]) and the like; and/or any other suitable mathematical function or operation that may be used to cryptographically combine or simply combine symbol strings, first and second keys, intermediate keys, meeting key values, and/or the like to create a suitable group key and the like; combinations thereof; modifications thereto; and/or as herein described and/or as the application demands.

Figure 4a is a schematic diagram illustrating an example group key creation/formation meeting and communication system 400 that includes a plurality of parties 402a-402m in communication with an intermediary (e.g. a Meet Me server or WhatsApp (RTM) server, MS Teams (RTM) server) for arranging a group meeting with the plurality of parties 402a-402m. In this example, there is an N number of distinct parties 402a-402m (e.g. Party 0, Party 1, Party 2, Party 3, Party 4, ... and, Party N-1) that have been arranged to attend the group meeting or a group communication session and the like. In order to secure the group meeting between the N parties 402a-402m, each of the parties 402a-402m are involved in performing a group key formation/negotiation to create a group key that is unknown to the intermediary 404. The intermediary 404 may be configured to arrange the parties 402a-402m into an ordered ring and notify each of the parties 402a-402m over secure communication channels 406a-406m of the reference/address of one or more of the other adjacent parties 402a-402m for use in communicating with the respective or corresponding other adjacent parties 402a-402m for assisting the parties 402a-402m in each negotiating and creating the group key. It is assumed that, when required to do so, each of the parties 402a-402m in the ordered ring may be configured to communicate with an adjacent party of the other parties 402a-402m directly over one of the secure channels 407a-407m and/or through intermediate device 404 via secure channels 406a-406m.

For example, assuming the intermediary orders the plurality of N parties 402a-402m into a ring in which, for simplicity and without limitation, for example party 402a is the first or 0-th party in the ring, party 402b is the second or 1-th party in the ring, and so on, until party 402m is the (N-1)-*th* party in the ring, then each party in the ring is provided with the connection details of the previous adjacent party and next adjacent party to said each party in the ring. For example, the first party 402a in the ring may be configured to connect/communicate with the next adjacent party or second party 402b in the ring in the clockwise direction, and also configured to connect/communicate with the previous adjacent party or *(N-1)-th* party 402m in the ring in the anti-clockwise direction. As well, the second party 402b in the ring may be configured to connect/communicate with the next adjacent party or third party 402c in the ring, and also configured to connect/communicate with the previous adjacent party or 0-th party 402a in the ring, etc. Thus, each party (e.g. party 402a) may then "share", "establish" or "negotiate" a first key with the next adjacent party (e.g. second party 402b) in the ring, and also each party (e.g. party 402a) may be configured to share, establish or negotiate another second key with the previously adjacent party (e.g. party 402m) in the ring. These first and second keys for each party that are shared/negotiated/established with the next adjacent party and previously adjacent party in the ring, respectively, may be shared/negotiated/established using any suitable key sharing/negotiating/establishment protocol/procedure. The key sharing/negotiating/establishment protocol/procedure may be performed between a party and the previous or subsequent adjacent party. This key sharing/negotiation may include using the intermediary 404 or any other third party device/service and the like.

Thus the intermediary 404 notifies each of the parties 402a-402m the reference/address of precisely two other parties 402a-402m, i.e. the previous adjacent party and the subsequent adjacent party in the ring to the party (e.g. the one before it in the ring, and the one after it in the ring) so they may communicate during the group key creation process for sharing/exchanging a key for use in the group key sharing protocol. Each of the secure channels 406a-406m and/or 407a-407m may be, without limitation, for example either a classical/standard secure communication channel (e.g. e.g. symmetric encrypted, public key encrypted, RSA encrypted, AES encrypted) or a quantum secure communication channel (encrypted with a quantum-safe/secure distributed key) depending on the desired security of the outcome. As well, it is assumed that each of the parties 402a-402m can communicate with the intermediary 404 over another secure channel 406a-406m such as, without limitation, for example a classical or standard secure communication channel or a quantum secure communication channel depending on the desired security, which may assist in protecting information about the ring formation rather than protecting the meeting and intermediate keys.

For example, one or more of the secure channels 407a-407m between the parties 402a-402m, and/or one or more secure channels 406a-406m between each party 402a-402m and the intermediary 404, may be a quantum-secure channel. A quantum-secure communications channel may comprise or represent a communications channel that is encrypted with a corresponding quantum safe distributed and/or encrypted with a quantum-safe key derived from one or more quantum-safe distributed keys of the set of quantum-safe distributed keys. A quantum-secure channel may use symmetric encryption based on a quantum-safe key that has been agreed upon by each side of the channel. For simplicity, it is assumed that each of the connections or communications channels between the group of parties and/or intermediary may be secured by a preestablished quantum-safe distributed key.

For example, the quantum-safe distributed keys may be generated and distributed using, without limitation, for example a satellite quantum key distribution system configured to perform a satellite quantum key distribution protocol for generating and communicating data representative of a set of quantum distributed keys over quantum/non-quantum satellite channels with quantum transceivers, respectively. In another example, the quantum-safe distributed keys may be generated and distributed using, without limitation for example a terrestrial-based quantum key distribution system configured to perform a terrestrial quantum key distribution protocol for generating and distributing the set of quantum distributed keys using quantum/non-quantum fibre channels with corresponding quantum transceivers, respectively. Although two types of quantum key distribution system is briefly described, this is by way of example only and the invention is not so limited, it is to be appreciated by the skilled person that any type of quantum key distribution protocol and/or quantum key distribution system may be used such as, without limitation, for example satellite quantum key distribution, terrestrial quantum key distribution, satellite/terrestrial hybrid quantum key distribution, and/or any other type of quantum key distribution system, combinations thereof, modifications thereto, as herein described and/or as the application demands.

Referring to figure 4a, the parties 402a-402m may be configured to communicate with each other over secure channels 406a-406m via the intermediary as a relay or as in a star network. Alternatively or additionally, the parties 402a-402m may be configured to communicate with the intermediary 404 over the secure channel 406a-406m when communicating with the intermediary 404, and may be configured to communicate over secure channels 407a-407m with each other party 402a-402m over a separate direct secure communication channel 407a-407m with each other party 402a-402m without requiring the intermediary 404 to act as relay.

Although the parties 402a-402m are illustrated as communicating over secure channels 406a-406m and/or secure channels 407a-407m, this is by way of example only and the invention is not so limited, it is to be appreciated by the skilled person that any type of configuration or arrangement of communication resources, networks and/or secure channels may be applied and/or implemented according to the invention for connecting each of the N parties to the intermediary 404 and/or each of the N parties with each other for negotiating, creating a group key, and subsequently a set of communication channels for using the group key in securing a group meeting and/or group communication session in relation to the plurality of parties 102a-102m and the like, modifications thereto, combinations thereof, and/or as the application demands.

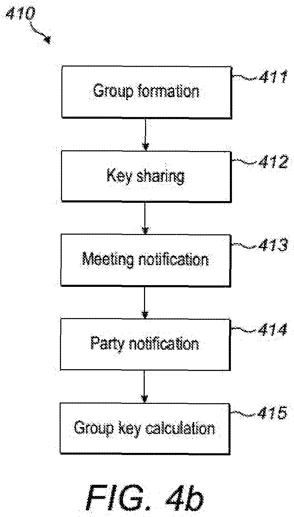

Figure 4b is a flow diagram illustrating an example group key creation process 410 for use with group key meeting and communication system 400 as described with reference to figure 4a according to the invention. For simplicity, reference numerals to features / components / functions and the like of figure 4a are reused for the same and/or similar features / components / functions and the like. Essentially, the goal of the group key creation process 410 is to create a group key, *K_{G}*, known to all of the N parties 402a-402m but which is not known to the intermediary 404 (e.g. Meet Me) such that the N parties 402a-402m may securely communicate with each other during, without limitation, for example a group communication session, group meeting, group video/chat conference call/collaboration system and the like, where no other device such as, without limitation, for example the intermediary 404 or an eavesdropper may access the secure communication between parties 402a-402m. The group key formation process 410 is based on the following steps of:

In step 411, the N parties 402a-402m that are to be in the group communication/meeting are arranged into a group formation such as an ordered ring as illustrated in figure 4a. For example, one of the parties or an external actor may notify the intermediary 404 that a group key is needed for a group meeting/communication etc., where data representative a set of external references (or contact details), {R} of the parties, that are to be included in the group meeting/communication are provided to the intermediary 404. An external reference for a party may comprise or represent any data that enables another device to be able to communicate with said party. For example, an external reference that may include, without limitation, for example data representative of an Internet address of the party, chat identity of the party, an group meeting/communication (Meet Me) service address/identifier provided to the party associated with a group meeting/communication (e.g. Meet Me) application installed on the party; an email address of a user using the party and accessible via an email application on the party, a MAC address of the party and/or any other data that may be used to enable a device to contact/connect/communicate with said party in relation to the group key creation process 410 and/or subsequent group meeting/communication session the like. The set of external references, {R} maybe, without limitation, for example, an Internet address; email address of the party; ID of a party/device; phone number associated with the party, username associated with the party; MAC address; Internet Protocol address; and/or any other unique identifier and/or address/contact details that may be used to identify and communicate with or contact the party; combinations thereof; modifications thereto; and/or as the application demands. For example, the intermediary (e.g. Meet Me server) organises the parties into a numbered sequence that is arranged to be a ring 408, where the first device 402a connects to the last device 402m in the numbered sequence to form the ring 408. Thus, each party 402a-402m is assigned a party identifier such as, without limitation, for example a sequence number or location number, indicating its ordering/location in the ordered ring 408. The intermediary may store the mappings of how each of the parties 402a-102m in the ring 408 is connected to another of the parties 402a-402m in the ring 408 when forming/organising the parties into the ring 408. In the case that the reference does not identify the party (e.g. it identifies a user) then there may instead be a mapping from the reference to the party (e.g. map from email address to device IP address).

Referring to figure 4a, figure 4a illustrates an ordering of N parties 402a-402m (e.g. party 0, to party N-1). In this case, the N parties 402a-402m may be arranged to forms a sequence of {Party 0, Party 1, Party 2, Party 3, Party 4, ... Party p,......Party N-1} for 0≤p≤N-1. The sequence can then form a ring 408 by, for simplicity and by way of example only, connecting Party N-1 to Party 0. Preferably, the intermediary 404 may internally assign a sequential zero-based index, p, to each Party and map the external reference (e.g. contact details) of each party to its zero-based reference, p. In figure 4a, each party is assigned a number from 0 to N-1. Once assigned, the intermediary 404 notifies each of the parties 402a-402m, via the corresponding communication channel 406a-406m, of the corresponding external reference (or contact details) of the next adjacent party in the sequence forming the ring 408. Alternatively, the intermediary may map the external reference of the party to the party identifier and sends the external reference instead. For example, the intermediary 404 notifies party 402a (Party 0) the external communication reference/contact details of party 402b (Party 1); the intermediary 404 notifies party 402b (Party 1) the external communication reference/contact details of party 402c (Party 2); the intermediary 404 notifies party 402c (Party 2) the external communication reference/contact details of party 402d (Party 3); the intermediary 404 notifies party 402d (Party 3) the external communication reference/contact details of party 402e (Party 4); the intermediary 404 notifies party 402e (Party 4) the external communication reference/contact details of the next adjacent party in the sequence of the ordered ring and so on, until the intermediary 404 notifies party 402m (Party N-1) the external communication reference/contact details of party 402a (Party 0). This forms an ordered ring. Although this particular "clockwise" ordering of the parties 402a-402m is described herein, this is for simplicity, by way of example only and the invention is not so limited, it is to be appreciated by the skilled person that an anticlockwise or "descending" ordering of the ring may be used where the first party is party 402m of party N-1 and the last party is party 402a of party 0 and the like.

In step 412, each of the parties 402a-402m in the ring 408 is configured to share, create, negotiate and/or retrieve a precursor cryptographic key with the next adjacent party in the ring 408, or, going in the same direction around the ring 408. For example, for 0<=p<N-1, for the *p-th* party, the next party in the ring 408 is the *(p+1)-th* party, where for *p=N-1,* then for the *(N-1)-th* party 408m, the next party in the ring 408 is the *0-th* party 402a. It is noted that, when *N* is an odd number, each party 402a simply shares, creates and/or negotiates a precursor key with the next adjacent party 402b in the ring 408, where the last party 402m (e.g. party 402m of party N-1) shares, creates and/or negotiates a precursor key with the first party 402a (e.g. party 0) in the ring 408. Thus, each party 402a of the group of parties 402a-402m essentially has a first and second precursor key that has been shared, created and/or negotiated with the next adjacent party 402b and previous adjacent party 402m in the ring 408.

However, for even *N* or an even number *N* of parties, the ring 408 may be adjusted by reducing the size of the number of parties that contribute precursor keys to the group key formation in the ring 408 to an odd number N-1 of parties and/or by increasing the size of the ring 408 by increasing the number of parties that contribute precursor keys to the group key formation (e.g. by adding a virtual party) to an odd number of N+1 parties. Should this be necessary, there are some slight changes to the overall group key creation process 410, where modifications to group key process 410 may be made based on later examples as described with reference to figures 2 to 3, modifications thereof, combinations thereto, and/or as described herein. For simplicity, the concepts of the group creation process 410 will be described for when *N* is an odd number.

Furthermore, as an option and to improve security of the final group key and reduce the risk that unknown Parties may be added to the ring 408 without the organiser of the group knowing, steps 411 or 412 (or, for that matter, any other step in the group creation process 110) may be further modified in which the organising Party 402a of the group of parties or an external actor (e.g. a third party that is different to the intermediary 404) creates and/or sends a one time pad (OTP) key to all other parties 402b-402m in the ring 408 or all parties 402a-402m in the ring 408 to further secure the group key generated by the group key creation process 410. This may be achieved in the final step of the group key creation process 410 in which the received OTP key is used by each party to further secure the group key by XORing the group key with the OTP key received by each party of the group of parties 402a-402m. The secured group key may then be used as the group key by each party of the group of parties 402a-402m as the application demands. Given that the intermediary 404 does not have access to or know the OTP key, as this was not sent to the intermediary, the intermediary 404 cannot add further unknown Parties to the ring 408. Should the intermediary 404 attempt to add unknown Parties to the ring 408, then these unknown Parties would not have the OTP key used to derive the group key and so could never know or derive the final group key.

In step 413, once the precursor key sharing/creation/negotiation is completed, for odd N, then each of the parties 402a-402m has two different precursor keys. In the example of figure 4a, each of the parties has the current precursor key generated by said party and also the precursor key of the previous adjacent party in the ring 408. Alternatively, in the example of figure 4a, each of the parties has the current precursor key negotiated by said party with the next adjacent party in the ring 408, and the previous precursor key of the previous adjacent party in the ring 408 which was negotiated with the current party in the ring 408. Thus, once each party 402a-402m has shared or negotiated its precursor key with the next adjacent party, a meeting notification is created by each of the parties by creating a meeting key of the party based on a combining (e.g. performing an XOR operation) the current precursor key with the previous adjacent precursor key (precursor key of the previous adjacent part device). Each party sends a meeting notification including data representative of the meeting key of the party to the intermediate device 404. Each meeting notification may include data representative of the external reference, R, of the party to enable the intermediate device 404 to store the meeting key with the appropriate sequence number, p, assigned to that party. For example, the intermediary 404 (e.g. Meet Me server) maps the external reference, R, of each party to the internal index, p, which was assigned to said each party during the group formation step 411. This enables the intermediary 404 to store an association of the meeting key, *M_{P},* to the *p-th* party e.g. stores meeting key *M_{P}* vs p.

As an option, the intermediary 104 might also cache all the meeting key values until it's notified that the group key is no longer required. This may enable efficient and/or simple adding or removing of parties, as the only meeting key values that need to be recalculated are those to the left and right of the party being added, where all other meeting key values may stay the same. The new meeting keys and the remaining meeting keys may be used to generate a new set of intermediate key values for all parties, which may then be sent to each party for forming the new group key. If the meeting key values are not cached at the intermediary 404 until the group key is no longer needed, then all meeting key values need to be sent back up from all parties in the ring whenever another party is added or removed from the ring 408. Depending on the security requirements, it may be preferable to cache the meeting key values rather than not caching the meeting key values because of the additional requirement of all parties requiring to send their meeting keys again and this might fail, when one of the parties is offline, which means the whole group key creation/formation process may have to be performed from the beginning for only those parties that are online.

In step 414, once the intermediate device 404 has received all the meeting notifications from each party in the ring 408, the intermediary 404 calculates an intermediate key for each party based on a combination (e.g. XOR operation) of two or more meeting keys of the parties. For each intermediate key calculation for a party, two or more meeting keys are combined (e.g. one or more XOR operation(s)) in such a manner that the calculated intermediate key, when combined (e.g. an XOR operation) with the corresponding precursor key of said party, results in a group key that is the same when each of the other intermediate keys of all other parties are combined with their corresponding precursor keys. The intermediate keys for each party may be different or unique compared with the intermediate keys of one or more of the other parties. Once the intermediate key for each party has been calculated, the intermediate key is sent as a party notification from the intermediary 404 to the corresponding party.

In step 415, once each party receives its party notification from the intermediary 404 with the corresponding intermediate key, said each party calculates a group key based on its received intermediate key and its precursor key that it generated/negotiated/retrieved in step 412. For example, the group key may be calculated by the party based on an XOR operation of the intermediate key with the precursor key. This is performed at each party. Thus, each party, p, has established the group key, *K_{G}*, by XORing the received *p-th* intermediate key, *X_{P}* with its own precursor key, *K_{P}* (e.g. *K_{G}= X_{P} XOR K_{P}).* The group key calculated at each party is the same for all parties. The group key, *K_{G}*, calculated by each of the parties is a combination of all the precursor keys when N is odd.

As an option, if each of the parties 402a-402m in the group received an OTP key from the organiser (e.g. another party in the group) and/or an external party as described in step 412, then the OTP key may be included by each party in the group key calculation *K_{G}*. Thus, each party, p, establishes the group key, *K_{G}*, by firstly, XORing the received *p-th* intermediate key, *X_{P}* with its own precursor key, *K_{P}*, and then, secondly XORing this result with the received OTP key (e.g. *K_{G}= X_{P} XOR K_{P}* XOR *OTP).* The secured group key calculated at each party is the same for all parties, because each party has the same received OTP key. The group key, *K_{G}*, calculated in this manner by each of the parties is a combination of all the precursor keys and the OTP key when N is odd.

Thereafter, the group of parties may use the group key, K_{G}, to, without limitation, for example establish a secure group communication session/meeting and/or for any other suitable purpose and the like; and/or as the application demands.

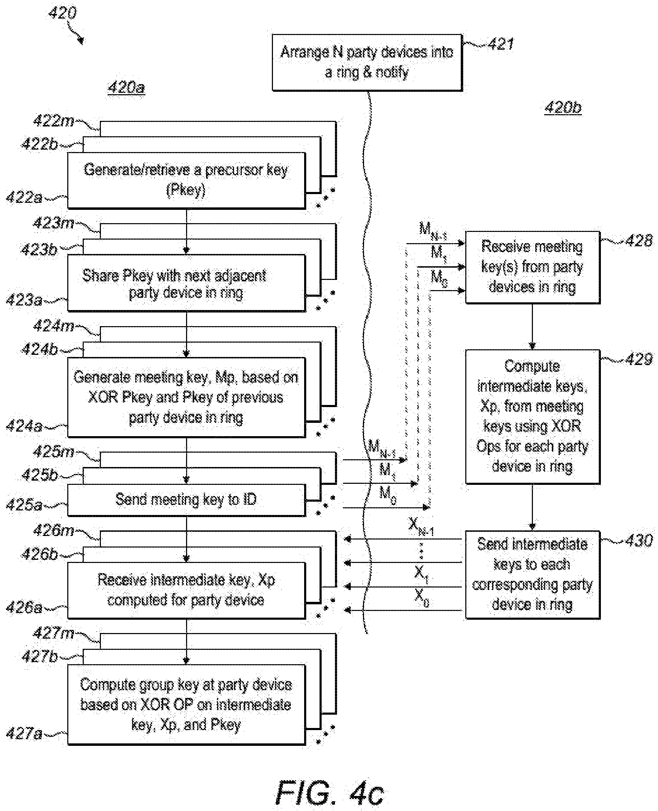

Figure 4c is a flow diagram illustrating another example group key creation process 420 with party group key process 420a and a corresponding intermediary group key process 420b for use with group key meeting and communication system 400 as described with reference to figure 4a according to the invention. The group key creation process 410 may be further modified by one or more features and/or steps of the group key creation process 420 of figure 4c. For simplicity, reference numerals to features / components / functions and the like of figure 4a are reused for the same and/or similar features / components / functions and the like. In this example, there are N parties 402a-402m in communication with an intermediary 404 and/or each other as described previously with reference to figure 4a and/or 4b. Each party 402a-402m is configured to implement/operate a corresponding party group key process 420a and the intermediary 404 may be configured to implement/operate the intermediary group key process 428-130. For simplicity, reference is made to steps 422a-427a of the group key process 420a for party 402a, where each other device 402b to 402m each performs corresponding steps 422b-427b; to steps 422m-427m, respectively, of the group key process 420a. The group key creation process 420 including party group key process(es) 420a and the intermediary group key process 420b is described in the following, where the group key creation process 420 is based on the following steps of:

In step 421, either the intermediary arranges the N parties 402a-402m into an ordered ring 408. Alternatively, another external device, the N-parties and/or an p-th party may be configured to arrange the N parties into an ordered ring 408. In this example, when the number of parties, N, is odd, the following party group key process(es) 420a may be performed for an odd number of parties, where the group key creation process 420 process flow splits into a plurality of corresponding party group creation process(es) 420a performed by each corresponding party, where the party group creation process for party 402a is based on the following steps of:

In step 422a, each p-th party generates a new cryptographic key, *K_{P}*. In step 423a, each party 402a shares their *K_{P}* with the next party 402b in the ring 408 (e.g. Party 0 of party 402a shares its key with Party 1 of party 402b, and so on, where Party N-1 of party 402m shares its key, *K*_{*N*-*1*} with Party 0 of party 402a). Alternatively, in step 422a, each p-th party negotiates a new cryptographic key, *K_{P}*, with the next party 402b in the ring 408, for example using a key-negotiation protocol like TLS (e.g. Party 0 of party 402a negotiates a key with Party 1 of party 402b, and so on, where Party N-1 of party 402m negotiates a key, *K_{N-1}* with Party 0 of party 402a). In step 424a, generating a meeting key in which each party XORs their key, K_{P}, with the key shared/negotiated with it, *K_{(P-1+P) mod N},* to create the meeting key, *M_{P}.* In step 425a, each party 402a sends their meeting key M_{P} to the intermediary 404. For example, meeting keys M₀ for party 402a, M₁ for party 402b, to *M_{N-1}* for party 402m are sent to the intermediary 404. The process flow 420a for each party 402a-402m waits until the intermediary 404 has computed the corresponding intermediate keys based on a novel combination of meeting keys for each party. This computation is outlined in the intermediary group creation process 420b. In any event, once the intermediate key for each party 402a has been computed, the intermediary 404 returns/sends the intermediate key, *X_{P}*, to the corresponding party 402a. In step 426a, each party 402a receives its corresponding intermediate key, *X_{P}.* In step 427a, each party computes a group key, *K_{G}*, based on XOR operation on the intermediate key, *X_{P}*, with the precursor key, *K_{P}*. For example, party 402a XORs its key, *K_{P}*, with *X_{P}* to form the group key *K_{G}*. All other parties 402b-402m do the same with their corresponding intermediate keys and corresponding precursor keys and the like. Thereafter, each of the parties 402a-402m have the same group key, *K_{G}*.

From step 425a-425m to step 426a-426m, the group creation process 420 moves onto the intermediary group creation process 420b for calculating the intermediate keys. The intermediary group creation process 420b is based on the following steps of: In step 428, the intermediary receives meeting key(s) from each of the party(s) (or most of the parties, or all the parties plus a virtual party, when N is even) in the ring to form an odd number of meeting key(s). In step 429, the intermediary computes, for each party, P, the corresponding intermediate key, *X_{P},* based on a novel XOR combination of the meeting key, *M_{P}*, with two or more other meeting keys *Mᵢ*. The intermediate key, *X_{P},* is a value or key related to the *p-th* party. For example, when N is odd, the intermediary computes the intermediate key for the p-th party based on the following: for P = *0, X₀* = *XOR{r = 2 to N-1 step 2}Mᵣ; for 0 < P < N, Xp = X_{P-1} XOR M_{P}.*

Furthermore, as an option and to improve security of the group key, *K_{G}*, and reduce the risk that unknown Parties may be added to the ring 408 without the organiser of the group knowing, prior to the corresponding group key calculation step 427a-427m performed by each of the parties 402a-402m, the party group key process 420a may be further modified in which the organising Party 402a of the group of parties or an external actor (e.g. a third party that is different to the intermediary 404) is configured to include a step of creating and/or sending a one time pad (OTP) key to all other parties 402b-402m in the ring 408 (if the organising party is Party 402a) or all parties 402a-402m in the ring 408 (if it is an external party different to the group of parties and the intermediary 404) to further secure the group key, *K_{G}* generated by the party group key process 420a. Thus, when each of the parties 402a-402m in the group receive the OTP key from the organiser (e.g. another party in the group) and/or an external party, then the OTP key may be included by each party in the group key calculation *K_{G}* of the corresponding step 427a-427m for that party 402a-402m. Thus, in step 427a-427m, each party, p, establishes the group key, *K_{G}*, by firstly, XORing the received *p-th* intermediate key, *X_{P}* with its own precursor key, *K_{P}*, and then, further XORing this result with the received OTP key (e.g. *K_{G}= X_{P} XOR K_{P} XOR OTP key).* The secured group key calculated by each of the parties 402a-402m is the same for all parties, because each party has the same received OTP key. The group key, *K_{G}*, calculated in this manner by each of the parties is a combination of all the precursor keys and the OTP key when N is odd. The secured group key, *K_{G}*, is still the same for all parties 402a-402m and may then be used as the group key by each party of the group of parties 402a-402m as the application demands.

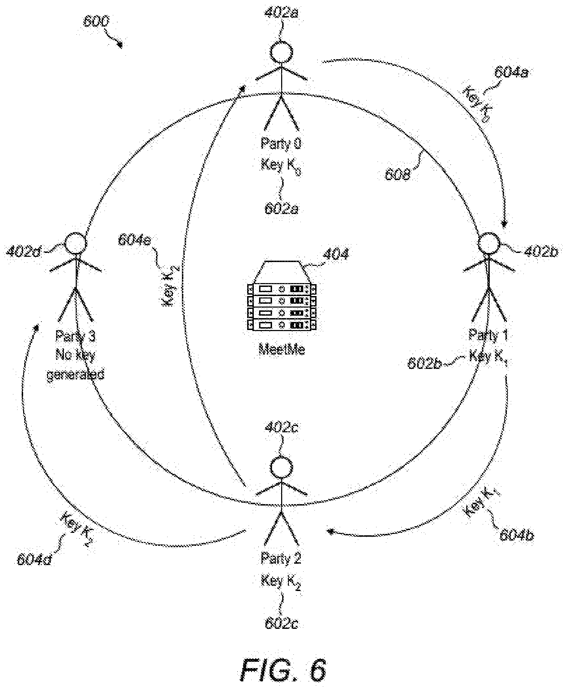

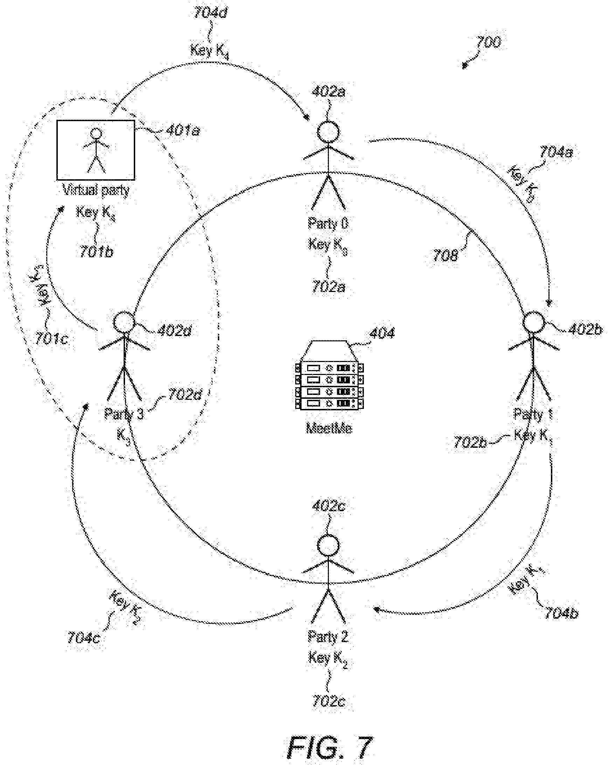

Note that there are slight modifications to process(es) 420a and 420b if the number of parties N is even, where these modifications are described below in the detailed description with reference to figures 6 and 7, with two distinct cases: Even Case A, is based on the final Party of party 402m being omitted from the calculation to temporarily reduce the ring 408 to make an odd number of parties for calculating the group key, but where the final party or party 402m would still receive the group key i.e. it just does not contribute towards its generation; and Even Case B, is based on temporarily increasing the ring 408 by adding an extra precursor key of a virtual party that is "virtually shared" between the last party 402m and first party 402a to make an odd number of parties for calculating the group key.

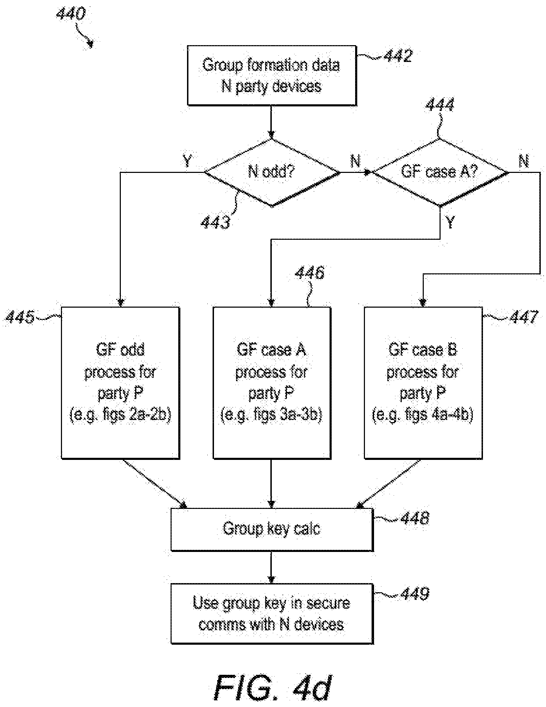

Figure 4d is a flow diagram illustrating another example of a group key creation/formation process 440 for a group of N parties according to the invention. The group key creation/formation process 440 includes the following steps of:

Step 442, each of the parties 402a-402m may be provided with group formation data such as data representative of an indication of the number of devices or whether there is an odd number N of devices, and/or whether there is an even number of devices and which Cases A or B will be performed by each party and intermediary 404 when negotiating and creating the group key for all devices.

Step 443, each of the devices 402a-402m is instructed or determines from the group formation data whether *N* is odd, and if *N* is odd (e.g. Y), then said each of the parties 402a-402m and also the intermediary 404 performs the same corresponding group key formation process 445 for when *N* is an odd number and proceeds to step 445. When each of the devices 402a-402m is instructed or determines from the group formation data whether N is even (e.g. 'N'), then said each of the parties 402a-402m and also the intermediary 404 performs step 444 to determine which Even Case A or B is to be used for performing the group key formation process. Alternatively, the parties don't really need to know the number N, rather the intermediary/node 404 simply instructs the first party 402a and last party 402m about what they need to do if the number N is even (i.e. whether the last party 402m needs to create a virtual node, or whether the first party 402a needs to share/negotiate keys with the penultimate (or last but one) party (e.g. skips the last party 402m).

Step 444, each of the devices 402a-402m is instructed or determines from the group formation data, when N is even, whether Even Case A is selected to be performed or not, otherwise Even Case B is to be performed. When Case A is to be performed (e.g. 'Y') then the group formation process 440 proceeds to step 446 for each of the devices 402a-402m and also the intermediary 404. Otherwise, when Case A is not to be performed (e.g. 'N'), then the process 440 proceeds to step 447, where Even Case B of the group formation process for each party and/also the intermediary is performed.

Step 445, when *N* is odd, the corresponding steps of the group formation process for odd number N of parties is performed by each of the parties 402a-402m and also the corresponding steps of the group formation process for odd number N of parties is performed by the intermediary 404, which outputs the corresponding intermediate keys to each of the parties 402a-402m. Step 445 may be further supplemented and/or modified with the steps of the group key formation process(es) 410 and 420 as described with reference to figures 4a to 5. The process proceeds to step 448 for calculating the group key device on each of the parties 402a-402m.

Step 446, when *N* is even and Case A is selected to be performed, the corresponding steps of the group formation process for an even number N of parties is performed based on case A, where the ring 408/508 is temporarily reduced, by each of the remaining parties 402a-402m in the ring 408/408 and also the corresponding steps of the group formation process for even number N of parties in case A is performed by the intermediary 404, which outputs the corresponding intermediate keys to each of the parties 402a-402l. Step 446 may be further supplemented and/or modified with the corresponding steps of the group key formation process(es) and/or system(s) 400, 410, 600 when *N* is even for case A as described with reference to figures 4a to 6, modifications thereof and/or as herein described. The process proceeds to step 448 for calculating the group key device on each of the parties 402a-402m.

Step 447, when *N* is even and Case B is selected to be performed, the corresponding steps of the group formation process for an even number N of parties is performed based on case B, where the ring 408/508 is temporarily increased by including a virtual party/key, and each of the parties 402a-402m in the ring 408/508 perform the corresponding steps of the group formation process for even number *N* of parties for case B, the reciprocal/corresponding steps of which are also performed by the intermediary 404, which outputs the corresponding intermediate keys to each of the parties 402a-402m. Step 446 may be further supplemented and/or modified with the corresponding steps of the group key formation process(es) and/or system(s) 400, 410, 500 when *N* is even for case B as described with reference to figures 4a to 7, modifications thereof and/or as herein described. The process proceeds to step 448 for calculating the group key device on each of the parties 402a-402m.

In step 448, each of the parties 402a-402m receives an intermediate key and uses this to calculate the same group key based on their precursor key and/or another precursor key depending on whether N is odd (e.g. (e.g. *K_{G}= X_{P} XOR K_{P})* or even and, if even, whether case A or case B is being performed.

In step 449, each of the parties 402a-402m may now use the group key that each has calculated in a secure group communication session and/or meeting with each other and the like.

Furthermore, as an option and to improve security of the group key and reduce the risk that unknown Parties may be added to the ring 408 without the organiser of the group knowing, prior to the corresponding group key calculation step 448 performed by each of the parties 402a-402m, the group key creation/formation process 440 may be further modified in which an organising Party 402a of the group of parties or an external actor (e.g. a third party that is different to the intermediary 404) is configured to include a step of creating and/or sending a one time pad (OTP) key to all other parties 402b-402m in the ring 408 except the intermediary 404 (e.g. when the organising party is Party 402a) or all parties 402a-402m in the ring 408 except the intermediary 404 (when it is an external party different to the group of parties and the intermediary 404) to further secure the group key, K_{G} generated by the party group key creation/formation process 440. Thus, when each of the parties 402a-402m in the group receive the OTP key from the organiser (e.g. another party in the group) and/or an external party, then the OTP key may be included by each party in the group key calculation K_{G} of the corresponding step 448 for that party. For example, in step 448, each party, p, may calculate and establishes the group key based on the received intermediate key, their precursor key, the received OTP key (e.g. *K_{G}= X_{P} XOR* K_{P} XOR *OTP key).* The secured group key calculated by each of the parties 402a-402m is the same for all parties, because each party has the same received OTP key. The group key calculated in this manner by each of the parties is a combination of all the precursor keys and the OTP key when *N* is odd. The secured group key, *K_{G}*, is still the same for all parties 402a-402m and may then be used as the group key by each party of the group of parties 402a-402m as the application demands.

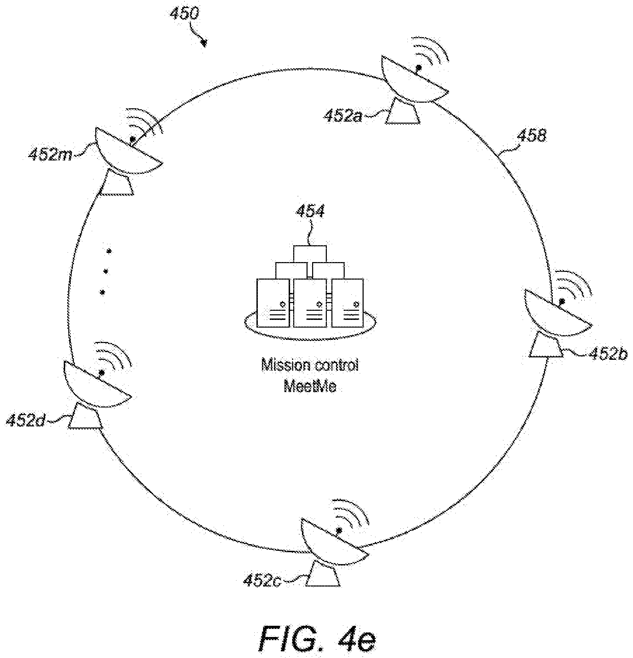

Figure 4e is a schematic diagram illustrating an example system 450 that includes a plurality of party optical ground receiver stations (OGRSs) 452a-452m in communication with an Mission Control/MeetMe intermediary 454 that are configured to implement the group key creation/formation process(es) as described with reference to figures 4a to 4d and/or 5 to 8b for arranging a group key for use by the plurality of party OGRSs 452a-152m. In this example, the group of party OGRs 452a-452m are arranged to form a ring 458 in which the first OGR 452a is arranged to be connected to the last OGR 452m, which is the previous adjacent OGR in the ring 458 to OGR 452a.

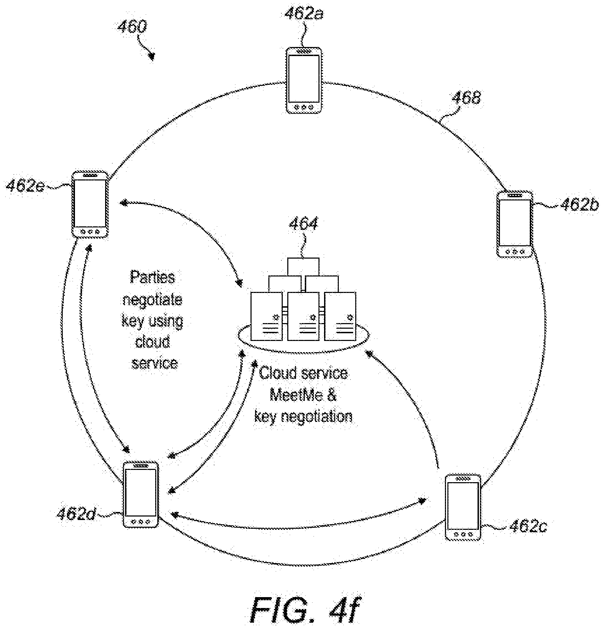

Figure 4f is a schematic diagram illustrating an another example system 460 that includes a plurality of party user devices 462a-462m in communication with an Cloud MeetMe and Key negotiation service intermediary 464 that are configured to implement the group key creation/formation process(es) as described with reference to figures 4a to 4d and/or 5 to 8b for arranging a group key for use by the plurality of party user devices 462a-462e. In this example, the group of party user devices 462a-462e are arranged to form a ring 468 in which the first party device 462a is arranged to be connected to the last party device 462e, which is the previous adjacent party user device 462e in the ring 468 to party user device 462a. As well, in this example, each party user device 462d of the party user devices 462a-462e is configured to communicate with and use the Cloud Key negotiation service intermediary 464 to negotiate and/or share a precursor key with the next adjacent party user device 462e in the ring 468 and also each party user device 462d of the party user devices 462a-462e is configured to communicate with and use the Cloud Key negotiation service intermediary 464 to negotiate and/or share another precursor key with the previous adjacent party user device 462c in the ring 468. The precursor keys are then used in the group key formation process used to implement and form the group key between the user devices 462a-462e and intermediary 464 and the like.

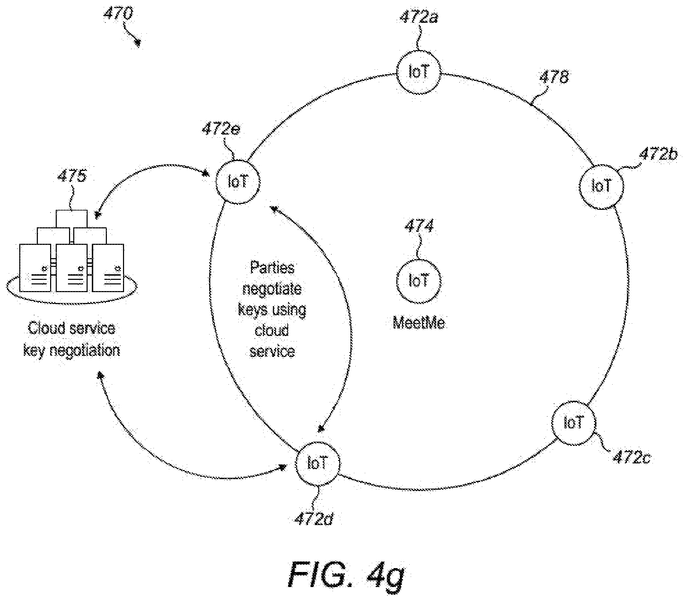

Figure 4g is a schematic diagram illustrating an a further example system 470 that includes a plurality of party internet of things (loT) devices 472a-472e in communication with an Cloud MeetMe loT intermediary 474 that are configured to implement the group key creation/formation process(es) as described with reference to figures 4a to 4d and/or 5 to 8b for arranging a group key for use by the plurality of party loT devices 472a-472e. In this example, the group of loT devices 472a-472e are arranged to form a ring 478 in which the first party loT device 472a is arranged to be connected to the last party loT device 472e, which is the previous adjacent party loT device 472e in the ring 478 to party loT device 472a. As well, in this example, each party loT device 472d of the party loT devices 472a-472e is configured to communicate with and use the Cloud Key negotiation service intermediary 475 (e.g. a third party) to negotiate and/or share a precursor key with the next adjacent party loT device 472e in the ring 478. The Cloud Key negotiation service intermediary 475 is also used by the other loT devices 472a-472e to negotiate precursor keys with the previous and next adjacent loT devices 472a-472e as described herein. The precursor keys are then used in the group key formation process used to implement and form the group key between the loT devices 472a-472e and loT intermediary 474 and the like.

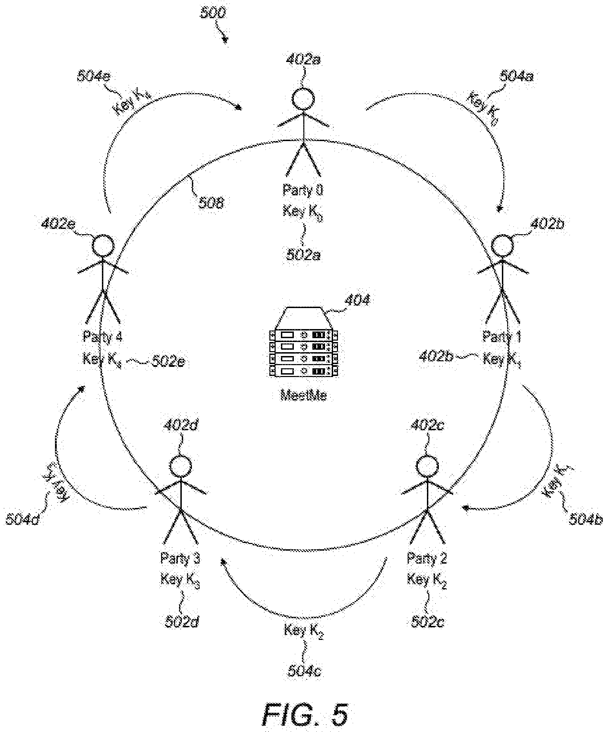

Figure 5 is a schematic diagram illustrating an example group key creation/formation meeting and communication system 500 of figure 4a for an odd number N of parties 402a-402e in communication with intermediary 404 (e.g. a Meet Me server or WhatsApp (RTM) server, MS Teams (RTM) server) that are configured for creating a group key as described with reference to figures 4a to 4d and arranging a group meeting with the parties 402a-402e. In this example, the number of parties is, without limitation, for example N=5 parties 402a-402e (e.g. Party 0, Party 1, Party 2, Party 3, Party 4) that have been arranged to attend the group meeting or a group communication session and the like. In order to secure the group meeting between the N parties 402a-402e, each of the parties 402a-402e are involved in performing a group key formation/negotiation to create a group key that is unknown to the intermediary 404. The intermediary 404 may be configured to arrange and notify each of the parties 402a-402e over secure communication channels (not shown) of the reference/address of one or more of the other parties 402a-402e for use in communicating with the respective or corresponding other parties 402a-402e for assisting the parties 402a-402e in each negotiating and creating the group key. It is assumed that, when required to do so, each of the parties 402a-402e may be configured to communicate with another of the parties 402a-402e directly over one of the secure channels 504a-504e (e.g. similar to channels 407a-407e) and/or through intermediate device 404 via corresponding secure channels and the like and/or as described herein. For example, the intermediary 404 may be a cloud service intermediary, and so each of the parties 402a-402e are configured to negotiate a key or group key through the cloud intermediary service 404.

In this example, the formation of the group and hence the ring 508 may be performed on request by a Party of the N parties 402a-402e, or by an external actor, which notifies the intermediary 404 (e.g. Meet Me) that a group key for the group communication session/meeting is required. This request may include, without limitation, for example, the set of external references/contact details, {R} of the Parties 402a-402e that are to be included in the group. The intermediary and/or other party may arrange or organises the parties 402a-402e of the Parties into a ring 508 as illustrated in figure 5a, where the parties 402a-402e are arranged into a sequence of {Party 0, Party 1, Party 2, Party 3, Party 4}. For example, this may be achieved by the intermediary 404 internally assigning sequential zero-based index, p, to each Party and mapping the external reference of each party of a Party to its zero-based reference, p. The intermediary 404 notifies each of the Parties via the parties 402a-402e of the external reference of the next Party in the ring 508. In this example, Party 0 402a receives the external reference of Party 1 402b, Party 1 402b receives the external reference of Party 2 402c, Party 2 402c receives the external reference of Party 3 402d, Party 3 402d receives the external reference of Party 4 402e, and Party 4 402e receives the external reference of Party 0 402a. Therefore each Party, p, for 0<=p<N (e.g. N=5 in this example) now has the external reference to the next adjacent party in the ring 508.

Thus, all of the parties 402a-402e have the necessary details to begin the precursor key sharing/negotiation stage of the group formation/creation process for creating or forming a group key. In this example, the precursor key sharing proceeds based on the following: Each of a party, p, creates/retrieves a precursor key, *K_{P}*. Once created/retrieved, each of a party shares over a secure communication channel 502a-502e its precursor key, K_{P}, with the next party in the ring 508. Therefore, for 0<=p<N each of a party, p, (or p-th party) now has its precursor key, K_{P}, and the precursor key *K_{(P-1+N) mod N}* from the previous Party in the ring 508. Alternatively in this example, the precursor key negotiation proceeds based on the following: Each of a party, p, negotiates a precursor key, *K_{P}* with the next party, (p+1)mod N using, for example, the services of a quantum-secure service. Therefore, for 0<=p<N each of a party, p, (or p-th party) now has its precursor key, *K_{P}*, and the precursor key *K_{(P-1+N) mod N}* from the previous Party in the ring 508.

Thus, the party 402a-402e may now create a meeting notification (e.g. Meet Me Notification), in which, for 0<=p<N, each party of Party, P, calculates the XOR of its precursor key, K_{P}, and the previous Party's precursor key, *K_{(P-1+N) mod N},* to create a meeting key, *M_{P} = K_{P} XOR K_{(P-1+N) mod N},* of the *p-th* party. Each party of Party, P, sends a meeting notification including data representative of *M_{P}* to the intermediary 404 (e.g. Meet Me) along with its external reference, R, which allows the intermediary 404 to map the *p-th* meeting key to the p-th device/party in the ring 508 that it formed. For example, the intermediary stores a mapping of *M_{P}* vs P.

Now, the intermediary 404 calculates the intermediate keys, X_{P}, for each of the 0<=p<N parties, which are each sent in a party notification to the corresponding party. For example, for each Party, p, 0<=p<N, the intermediary 104 calculates an intermediary key, X_{P}, based on: for party 402a with Party P = 0, the intermediary calculates the intermediate key by XORing together all alternate meeting notifications starting at the third party, as *X₀ = XOR{r = 2 to N-1 step 2}Mᵣ;* for the remaining parties 402b-402e with Party 0 *< P* < N, the intermediary 404 calculates *X_{P} = X_{P-1} XOR* M_{P}. Once calculated, the intermediary 404 (e.g. Meet Me) notifies or sends data representative of the intermediate key, *X_{P},* to *p-th* party of Party P for all N. In this example, *N=5.*

Once each party of the parties 402a-402e receives its intermediate key, that party may calculate the group key, *K_{G}*, using its precursor key, *K_{P}*. For example, each the party of Party, P, (or the *p-th* party) establishes its own group key by XORing the received X_{P} that it received from the intermediary 404 with its own precursor key, K_{P.} Thus, the group key may be calculated at each *p-th* party based on *K_{G}* = *X_{P} XOR K_{P},* for 0<=p<N.

Referring to any of the group key formation/creation process(es) 410, 420, 440 and step 445, and 200 as described with reference to figures 4a to 4g and 5, combinations thereof, modifications thereto and the like, the following is a worked example of creating a group key for a group of N parties when *N* is an odd number greater than 2. Each of the group key formation/creation process(es) 410, 420, 440 and step 445, 500 as described with reference to figures 4a to 4g and 5 may be further modified and/or adapted based on the concepts and/or steps of the following worked example, combinations thereof, modifications thereto and/or as herein described. For simplicity, reference numerals of figures 4a to 5 may be reused for similar or the same features, components, steps and/or process(es) and the like. In the following worked example, the number of parties in the group is N=5, and the 5 parties arranged as Party 0 to Party 4 of corresponding parties 402a-402e as described with reference to figure 5a.

Referring to figures 4a or 5a, after the ring 408 or 508 has been formed for N=5, each party 402a-402e knows (or has been notified by the intermediary 404) of the sequence number or location, *p,* (e.g. *0<=p<=4)* they are positioned within the ordered ring 508 and also the reference/contact details of one or more other parties such as at least the next adjacent party in the ring 508, the group key formation process when N is odd includes the following main steps of: A) Precursor key sharing/negotiating (e.g. steps 422a-422m of process 420a of figure 4c or step 412 of process 410 of figure 4b); B) Meeting notification (e.g. steps 424a-424m and 425a-425m of process 420a and step 428 of process 420b of figure 4c or step 413 of process 410 of figure 4b); C) Party Notification (e.g. steps 429 and 430 of process 420b and steps 426a-426b of process 420a and of figure 4c or step 414 of process 410 of figure 4b); and D) Group key calculation (e.g. steps 427a-427m of process 420a of figure 4c, or step 415 of process 410 of figure 4b).

In step A), the precursor sharing/negotiating step of the group key formation/creation process, each of the parties 402a-402e performs a precursor key sharing/negotiation step with the next adjacent device in the ring 508 which may involve sharing a key from one party to the next party in the ring 508, or negotiation of a key between one party and the next in the ring 508.

For example, with precursor sharing step each of the parties 402a-402e is configured to create/retrieve their corresponding precursor key/cryptographic key, Kₚ, for 0<=p<=4 based on the following:
- Party 402a of Party 0 creates/retrieves precursor key, K₀, 502a;
- Party 402b of Party 1 creates/retrieves precursor key, K₁, 502b;
- Party 402c of Party 2 creates/retrieves precursor key, K₂, 502c;
- Party 402d of Party 3 creates/retrieves precursor key, K₃, 502d; and
- Party 402e of Party 4 creates/retrieves precursor key, *K₄,* 502e;

Thereafter, each of the parties 402a-402e shares their corresponding precursor key, Kₚ, over a secure communications channel 504a-504d with the next adjacent party in the ring 508 based on the following:
- Party 402a of Party 0 shares K₀ with party 402b of Party 1 over channel 504a;
- Party 402b of Party 1 shares K₁ with party 402c of Party 2 over channel 504a;
- Party 402c of Party 2 shares K₂ with party 402d of Party 3 over channel 504a;
- Party 402d of Party 3 shares K₃ with party 402e of Party 4 over channel 504a; and
- Party 402e of Party 4 shares K₄ with party 402a of Party 0 over channel 504a;

For example, with precursor negotiating step each of the parties 402a-402e is configured to negotiate (i.e. perform a cryptographic key exchange) with the previous or the next adjacent party in the ring, where the precursor key/cryptographic key, Kₚ, for 0<=p<=4 is negotiated based on the following:
- Party 402a of Party 0 negotiates (e.g. performs a key exchange) a precursor key, K₀, 502a with Party 402b of Party 1;
- Party 402b of Party 1 negotiates (e.g. performs a key exchange) a precursor key, K₁, 502b with Party 402c of Party 2;
- Party 402c of Party 2 negotiates (e.g. performs a key exchange) a precursor key, K₂, 502c with Party 402d of Party 3;
- Party 402d of Party 3 negotiates (e.g. performs a key exchange) a precursor key, K₃, 502d with Party 402e of Party 4; and
- Party 402e of Party 4 negotiates (e.g. performs a key exchange) a precursor key, *K₄,* 502e with Party 402a of Party 0;

Thereafter, each of the parties 402a-402e has a first and second precursor key stored thereon after the negotiations based on the following:
- Party 402a of Party 0 has *K₄ and K₀;*
- Party 402b of Party 1 has K₀ and K₁;
- Party 402c of Party 2 has K₁ and K₂;
- Party 402d of Party 3 has K₂ and K₃; and
- Party 402e of Party 4 has K₃ and K₄;

In step B), the meeting notification step of the group key formation/creation process, each of the parties 402a-402e calculates their respective meeting keys, *Mₚ,* based on their precursor key, *Kₚ*, and the shared/negotiated precursor key *K_{(p-1+N) mod N}* for 0<=p<N from the previous adjacent party and sends/shares their meeting key, *Mₚ*, with the intermediary 404 based on the following:
- Party 402a of Party 0 shares M₀ = ( *K₀ XOR K₄)* with intermediary 404;
- Party 402b of Party 1 shares *M₁* = *( K₁ XOR K₀)* with intermediary 404;
- Party 402c of Party 2 shares *M₂* = *( K₂ XOR K₁* ) with intermediary 404;
- Party 402d of Party 3 shares *M₃* = ( *K₃ XOR K₂)* with intermediary 404;
- Party 402e of Party 4 shares *M₄ = ( K₄ XOR K₃)* with intermediary 404;

In step C), the intermediary 404 calculates the corresponding intermediate keys, Xₚ, for each of the parties 402a-402e based on a judicious combination of two or more meeting keys of the parties 402a-402e in the ring 508 such that when each Xₚ of the *p-th* party is XOR'ed with the corresponding precursor key Kₚ of the p-th party, the same group key, K_{G}, is formed for each of the parties. For example, a judicious combination of meeting keys may be based on: For party P = 0 (e.g. party 402a) *X₀ = XOR{r = 2 to N-1 step 2}Mᵣ;* and for parties 0 *< P < N* (e.g. parties 402b-402e), *X_{P} = X_{P-1} XOR M_{P}.*In the following, strikethrough is used to indicate terms which cancel out due to the commutative and associate nature of the XOR operation. Thus, the intermediary 404 calculates the corresponding intermediate keys, Xₚ, for each of the parties 402a-402e based on the following:
- Intermediate key for party 402a of Party 0 is calculated as:
   *X₀ = M₂ XOR M₄* = *( K₂ XOR K₁)XOR (K₄ XOR K₃) = K₁ XOR K₂ XOR K₃ XOR K₄*
- Intermediate key for party 402b of Party 1 is calculated as:
   *X₁ = X₀ XOR M₁* = *( XOR K₂ XOR K₃ XOR K₄) XOR ( XOR K₀)* = *K₂ XOR K₃ XOR K₄ XOR K₀*
- Intermediate key for party 402c of Party 2 is calculated as:
   *X₂ = X₁ XOR M₂* = *( XOR K₃ XOR K₄ XOR K₀) XOR ( XOR K₁)* = *K₃ XOR K₄ XOR K₀ XOR K₁*
- Intermediate key for party 402d of Party 3 is calculated as:
   *X₃ = X₂ XOR M₃* = *(XOR K₄ XOR K₀ XOR K₁) XOR (XOR K₂)* = *K₄ XOR K₀ XOR K₁ XOR K₂*
- Intermediate key for party 402e of Party 4 is calculated as:
   *X₄* = *X₃ XOR M₄ = ( XOR K₀ XOR K₁ XOR K₂) XOR (XOR K₃)* = *K₀ XOR K₁ XOR K₂ XOR K₃*

Thereafter, the intermediary 404 sends over a secure communications channel to each of the parties 402a-402e the corresponding calculated intermediate keys based on the following:
- intermediary 404 sends X₀ to party 402a of Party 0;
- intermediary 404 X₁ to party 402b of Party 1;
- intermediary 404 X₂ to party 402c of Party 2;
- intermediary 404 *X₃* to party 402d of Party 3;
- intermediary 404 *X₄* to party 402e of Party 4;

In step D), Group key calculation, each of the parties 402a-402e calculates the same group key, K_{G}, by XORing their received intermediate key, Xₚ, with their precursor key, Kₚ, for *0<=p<N* based on the following:
- Party 402a of Party 0 calculates:
   *K_{G}* =X₀ XOR *K₀* = *K₀ XOR K₁ XOR K₂ XOR K₃ XOR K₄*
- Party 402b of Party 1 calculates:
   *K_{G} =X₁ XOR K₁* = *K₀ XOR K₁ XOR K₂ XOR K₃ XOR K₄*
- Party 402c of Party 2 calculates:
   *K_{G} =X₂ XOR K₂* = *K₀ XOR K₁ XOR K₂ XOR K₃ XOR K₄*
- Party 402d of Party 3 calculates:
   *K_{G}* = X₃ XOR *K₃* = *K₀ XOR K₁ XOR K₂ XOR K₃ XOR K₄*
- Party 402e of Party 4 calculates:
   *K_{G} = X₄ XOR K₄* = *K₀ XOR K₁ XOR K₂ XOR K₃ XOR K₄*

Thus, all parties now have the same group key which is the XOR of all 5 precursor keys.

Furthermore, as an option and to improve security of the group key and reduce the risk that unknown Parties may be added to the ring 508 without the organiser of the group knowing, prior to the corresponding group key calculation step D) performed by each of the parties 402a-402e, the group key creation/formation meeting and/or communication system 500 may be further modified and configured to include an organising Party 402a of the group of parties or an external actor (e.g. a third party that is different to the intermediary 404) creating and/or sending a one time pad (OTP) key, K_{OTP}, to all other parties 402b-402e in the ring 508 except the intermediary 404 (e.g. when the organising party is Party 402a) or all parties 402a-402e in the ring 508 except the intermediary 404 (when it is an external party different to the group of parties and the intermediary 104). The OTP Key, K_{OTP}, may be further used to secure the group key, K_{G} generated by each party. Thus, when each of the parties 102a-102e in the group receive the OTP key, K_{OTP}, from the organiser (e.g. another party in the group) and/or an external party, which is not the intermediary, then the OTP key, K_{OTP}, may be included by each party in the group key calculation K_{G} for 0<=p<N based on the following:
- Party 402a of Party 0 calculates:
   *K_{G}=X₀ XOR K₀ XOR K_{OTP}* = K₀ XOR *K₁ XOR K₂ XOR K₃ XOR K₄ XOR K_{OTP}*
- Party 402b of Party 1 calculates:
   *K_{G} =X₁ XOR K₁ XOR K_{OTP}* = *K₀ XOR K₁ XOR K₂ XOR K₃ XOR K₄ XOR K_{OTP}*
- Party 402c of Party 2 calculates:
   *K_{G} =X₂ XOR K₂* XOR *K_{OTP}* = K₀ XOR *K₁ XOR K₂ XOR K₃ XOR K₄ XOR K_{OTP}*
- Party 402d of Party 3 calculates:
   *K_{G}=X₃ XOR K₃ XOR K_{OTP}* = K₀ XOR *K₁ XOR K₂ XOR K₃ XOR K₄ XOR K_{OTP}*
- Party 402e of Party 4 calculates:
   *K_{G} =X₄ XOR K₄ XOR K_{OTP}* = *K₀ XOR K₁ XOR K₂ XOR K₃ XOR K₄ XOR K_{OTP}*

Thus, all parties 402a-402e in ring 508 now have the same group key which is the XOR of all 5 precursor keys of the ring 508 and the OTP key. This forms a secured group key, K_{G}, that is same for all parties 402a-402e and may then be used as the group key by each party of the group of parties 402a-402e as the application demands.

Figure 6 is a schematic diagram illustrating an example group key creation/formation meeting and communication system 600 of figure 6 for an even number N of parties 402a-402d in communication with intermediary 404 (e.g. a Meet Me server or WhatsApp (RTM) server, MS Teams (RTM) server) that are configured for creating a group key as described with reference to figures 4a to 4g and arranging a group meeting with the parties 402a-402d. Figure 6 is an illustration of an example Case A group formation/creation process in which the ring 608 that is formed for all the parties 402a-402d is reduced or temporarily reduced during the group key creation/formation process. In this example, the number of parties is, without limitation, for example N=4 parties 402a-402d (e.g. Party 0, Party 1, Party 2, Party 3) that have been arranged to attend the group meeting or a group communication session and the like.

In order to secure the group meeting between the N parties 402a-402d, each of the parties 402a-402c are configured to be involved in performing the group key formation/negotiation to create a group key that is unknown to the intermediary 404, where party 402d receives data representative of the derived group key from the previous adjacent device 402c in the ring 508. The intermediary 404 may be configured to arrange and notify each of the parties 402a-402d over secure communication channels (not shown) of the reference/address of one or more of the other parties 402a-402d for use in communicating with the respective or corresponding other parties 402a-402d for assisting the parties 402a-402d in each negotiating and creating the group key. It is assumed that, when required to do so, each of the parties 402a-402d may be configured to communicate with another of the parties 402a-402d directly over one of the secure channels 604a-604e (e.g. similar to channels 407a-407e) and/or through intermediate device 404 via corresponding secure channels and the like.

In this example, the formation of the group and hence the ring 608 may be performed on request by a Party of the N parties 402a-402d, by an external actor, which notifies the intermediary 404 (e.g. Meet Me) that a group key for the group communication session/meeting is required. This request may include, without limitation, for example, the set of external references/contact details, {R} of the Parties 402a-402d that are to be included in the group. The intermediary and/or other party may arrange or organises the parties 402a-402d of the Parties into a ring 608 as illustrated in figure 6a, where the parties 402a-402d are arranged into a sequence of {Party 0, Party 1, Party 2, Party 3}. For example, this may be achieved by the intermediary 404 internally assigning sequential zero-based index, p, to each Party and mapping the external reference of each party of a Party to its zero-based reference, p. The intermediary 404 notifies each of the Parties via the parties 402a-402d of the external reference of the next Party in the ring 608. In this example, Party 0 of party 402a receives the external reference of Party 1 of party 402b, Party 1 of party 402b receives the external reference of Party 2 of party 402c, Party 2 of party 402c receives the external reference of Party 3 of party 402d, and Party 3 of party 402d receives the external reference of Party 4 of party 402e. Therefore each of a party, p, for 0<=p<N (e.g. N=4 in this example) now has the external reference to the next adjacent party in the ring 608.

However, for the Case A group formation/creation process of system 600, the ring 608 is virtually reduced by removing the last party 402d (e.g. Party 3) to form an odd number of parties 402a-402c that will take part in the group key formation from the precursor formation, meeting notification and party notification steps of the group formation/creation process. Thus, the intermediary 404 also provides the penultimate party, i.e. party 402c or Party 2, with the external reference/contact details of the first party 402a (e.g. Party 0) in the ring 608. Thus, the ring 608 is effectively reduced to the following circular sequence {Party 0, Party 1, Party 2} for performing the precursor formation, meeting notification and party notification steps of the group formation/creation process. The last party 402d (e.g. Party 3) is brought back into the ring 608 during the group key creation step as described below.

Thus, all of the parties 402a-402c have the necessary details to begin the precursor key sharing/negotiation stage of the group formation/creation process for creating or forming a group key. In this example, the precursor key sharing, proceeds based on the following: Each of a party, p, apart from the N-1 party of the ring 608 creates/retrieves a precursor key, K_{P}, 602a-602c. Once created/retrieved, each of a party P, for 0<=p<N-1, of the ring 608 (e.g. parties 602a-602c) shares over a secure communication channel 604a-604e its precursor key, K_{P}, with the next party in the ring 308. In addition, the penultimate party 402c, when p=N-2, (e.g. Party 2) shares its precursor key, K_{P}, with the first Party 0 or first party 402a over channel 604e. The last party N-1 or last party 402d does not share/negotiate anything. For example, each of a party shares its precursor key with the party of the next Party in the ring 608, except for the last party and where the party 402c of the penultimate Party *P_{N-2}*(e.g. device 402c) shares/negotiates its precursor key with the first party (e.g. party 402a) in the ring 608. Therefore, for 0<=p<N-1 each of a party, p, (or p-th party) now has its precursor key, K_{P}, and the precursor key *K_{(P-1+N) mod N}* from the previous Party in the ring 608, except for the first Party in the ring 608 which has the precursor key from the penultimate Party, *K*_{*N*-2}. The last Party in the ring 608 only has the precursor key, *K*_{*N*-2}, shared with it over channel 604d, so *K*_{*N*-2} becomes the precursor key of N-1 party 402d (e.g. = *K_{N-2}).*

Thus, the parties 402a-402c may now create a meeting notification (e.g. Meet Me Notification), in which, for 0<p<N-1, each party of Party, p, calculates the XOR of its precursor key, K_{P}, and the previous Party's precursor key, *K_{(P-1+N) mod N},* to create a meeting key, *M_{P}=K_{P} XOR K_{(P-1+N) mod N},* of the *p-th* party, where the 0-th party 102a, p=0, calculates fpr meeting key, M₀ , the XOR of its precursor key, K₀, with the precursor key, K_{(N-2)}, of the penultimate party 402c, that is in this example M₀ *= K₀ XOR K₂.* Each party of Party, *p,* for *0<=p<N-1,* sends a meeting notification including data representative of *M_{P}* to the intermediary 404 (e.g. Meet Me) along with its external reference, R, which allows the intermediary 404 to map the *p-th* meeting key to the p-th device/party in the ring 608 that it formed. For example, the intermediary stores a mapping of *M_{P}* vs p. It is noted that the last Party (e.g. party 402d of Party 3) sends nothing to the intermediary 404.

Now, the intermediary 404 calculates the intermediate keys, X_{P}, for each of the 0<=p<N-1 parties 402a-402c, which are each sent in a party notification to the corresponding party. For example, for each Party, p, 0<=p<N-1, the intermediary 404 calculates an intermediary key, X_{P}, based on: for party 402a with Party P = 0, the intermediary calculates the intermediate key as *X₀ = XOR{r = 2 to N-1 step 2}Mᵣ;* for the remaining parties 402b-402c in the reduced ring 608 with Party 0 *< P < N-*1, the intermediary 404 calculates Xp *= X_{P-1} XOR* M_{P}. Once calculated, the intermediary 404 (e.g. Meet Me) notifies or sends data representative of the intermediate key, *X_{P},* to *p-th* party of Party P for 0<=p<N-1. In addition, the intermediary 104 sends the intermediate key, *X_{N-2},* of the penultimate party 402c to the (N-1)-th party 402d of Party P for P *= N-1,* so the N-1-th intermediate key for N-1-th party is *X_{N-1}= X_{N-2}.* In this example, N=4.

Once each party of the parties 402a-402d receives its intermediate key, that party may calculate the group key, K_{G}, using its precursor key, *K_{P}*. For example, each the party of Party, P, (or the *p-th* party) establishes its own group key by XORing the received X_{P} that it received from the intermediary 404 with its own precursor key, K_{P}. Thus, the group key may be calculated at each *p-th* party based on *K_{G} = X_{P} XOR K_{P},* for 0<=p<N-1. For the *(N-1)-th* party or the last party 402d, the group key may be calculated by using the *(n-2)-th* intermediate key of the penultimate party 402c, e.g. X_{N-2}, where the group key may be based on *K_{G}* = *X_{N-2} XOR K₂,* for p=N-1.

Referring to any of the group key formation/creation systems/process(es) 400, 410, 420, 440 and step 445, and 600 when *N* is even as described with reference to figures 4a to 6 combinations thereof, modifications thereto and the like, the following is a worked example of creating a group key for a group of N parties when N is an even number greater than 2 for the case (e.g. Case A) in which the ring 608 is temporarily reduced from N parties to N-1 parties (e.g. the last party 402d is removed from the ring 608 during precursor sharing/negotiation, and group key creation/formation). Each of the group key formation/creation process(es) 410, 420, 440 and step 445, 600 as described with reference to figures 4a to 9 may be further modified and/or adapted based on the concepts and/or steps of the following worked example, combinations thereof, modifications thereto and/or as herein described. For simplicity, reference numerals of figures 4a to 6 may be reused for similar or the same features, components, steps and/or process(es) and the like. In the following worked example, the number of parties in the group is N=4, and the 4 parties arranged as Party 0 to Party 3 of corresponding parties 402a-402d in ring 608 as described with reference to figure 6.

Referring to figures 4a or 6, after the ring 608 has been formed for N=4, each party 402a-402d knows (or has been notified by the intermediary 404) of the sequence number or location, p, (e.g. *0<=p<=3)* they are positioned within the ordered ring 608 and also the reference/contact details of one or more other parties such as at least the next adjacent party in the ring 608 and/or the previous adjacent party in the ring, the group key formation process when *N* is even for Case A includes the following main steps of: A) Precursor key sharing/negotiating (e.g. described in steps 446 of process 440 of figure 1d); B) Meeting notification (e.g. described in steps 446 of process 440 of figure 1d); C) Party Notification (e.g. (e.g. described in steps 446 of process 440 of figure 1d)); and D) Group key calculation (e.g. described in steps 448 of process 440 of figure 1d).

In step A), the precursor sharing/negotiating step of the group key formation/creation process, each of the parties 402a-402d performs a precursor key sharing/negotiation step with the next adjacent device in the ring 608 which may involve sharing a key from one party to the next party in the ring 308, or negotiation of a key between one party and the next in the ring 608.

For example, with precursor sharing step each of the parties 402a-402d is configured to create/retrieve their corresponding precursor key/cryptographic key, *Kₚ*, for 0<=p<=3 based on the following:
- Party 402a of Party 0 creates/retrieves precursor key, *K₀*, 602a;
- Party 402b of Party 1 creates/retrieves precursor key, *K₁*, 602b;
- Party 402c of Party 2 creates/retrieves precursor key, *K₂*, 602c;
- Party 402d of Party 3 does not create a precursor key.

Thereafter, each of the parties 402a-402c for 0<=p<3 shares their corresponding precursor key, *Kₚ*, over a secure communications channel 604a-604e with the next adjacent party in the ring 608 based on the following:
- Party 402a of Party 0 shares *K₀* with party 402b of Party 1 over channel 604a;
- Party 402b of Party 1 shares *K₁* with party 402c of Party 2 over channel 604b;
- Party 402c of Party 2 shares *K₂* with party 402a of Party 0 over channel 604e; and
- Party 402c of Party 2 shares *K₂* with party 402d of Party 3 over channel 504d.

For example, with precursor negotiating step each of the parties 402a-402d is configured to negotiate (i.e. perform a cryptographic key exchange) with the previous or the next adjacent party in the ring, where the precursor key/cryptographic key, *Kₚ*, for 0<=p<=3 is negotiated based on the following:
- Party 402a of Party 0 negotiates (e.g. performs a key exchange) a precursor key, *K₀*, 602a with Party 402b of Party 1;
- Party 402b of Party 1 negotiates (e.g. performs a key exchange) a precursor key, *K₁*, 602b with Party 402c of Party 2;
- Party 402c of Party 2 negotiates (e.g. performs a key exchange) a precursor key, *K₂*, 602c with Party 402a of Party 0; and
- Party 402c of Party 2 shares precursor key, *K₂*, with Party 402d of Party 3.

Thereafter, each of the parties 102a-102d has a first and second precursor key stored thereon after the negotiations based on the following:
- Party 402a of Party 0 has *K₂ and K₀;*
- Party 402b of Party 1 has *K₀* and *K₁*;
- Party 402c of Party 2 has *K₁* and *K₂*; and
- Party 402d of Party 3 has *K₂*.

In step B), the meeting notification step of the group key formation/creation process, each of the parties 402a-402c for 0<=p<3 calculates their respective meeting keys, *Mₚ,* based on their precursor key, *Kₚ*, and the shared/negotiated precursor key *K_{(p-1+N) mod N}* for 0<=p<N-1 from the previous adjacent party and sends/shares their meeting key, *Mₚ*, with the intermediary 404 based on the following:
- Party 402a of Party 0 shares *M₀* = *( K₀ XOR K₂)* with intermediary 404;
- Party 402b of Party 1 shares *M₁* = *( K₁ XOR K₀)* with intermediary 404;
- Party 402c of Party 2 shares *M₂* = *( K₂ XOR K₁* ) with intermediary 404;
- Party 402d of Party 3 does not share anything.

In step C), the intermediary 404 calculates the corresponding intermediate keys, Xₚ, for each of the parties 402a-402c, for 0<=p<3, based on a judicious combination of two or more meeting keys of the parties 402a-402c in the ring 608 such that when each Xₚ of the *p-th* party is XOR'ed with the corresponding precursor key Kₚ of the p-th party, the same group key, K_{G}, is formed for each of the parties, for 0<=p<3. For example, a judicious combination of meeting keys may be based on: For party P = 0 (e.g. party 102a) *X₀ = XOR{r = 2 to N-1 step 2}Mᵣ;* and for parties *0 < P < N-1* (e.g. parties 402b-402c), *Xp = X_{P-1} XOR M_{P}.* In the following, strikethrough is used to indicate terms which cancel out due to the commutative and associate nature of the XOR operation. Thus, the intermediary 404 calculates the corresponding intermediate keys, Xₚ, for each of the parties 402a-402c based on the following:
- Intermediate key for party 402a of Party 0 is calculated as:
   *X₀* = *M₂* = *(K₂ XOR K₁ )* = *K₁ XOR K₂*
- Intermediate key for party 402b of Party 1 is calculated as:
   *X₁ = X₀ XOR M₁* = *(XOR K₂) XOR* (XOR *K₀)* = *K₂ XOR K₀*
- Intermediate key for party 402c of Party 2 is calculated as:
   *X₂ = X₁ XOR M₂* = *(XOR K₀) XOR (XOR K₁)* = *K₀ XOR K₁*

Thereafter, the intermediary 404 sends over a secure communications channel to each of the parties 402a-402c the corresponding calculated intermediate keys based on the following:
- intermediary 404 sends *X₀* to party 102a of Party 0;
- intermediary 404 *X₁* to party 102b of Party 1;
- intermediary 404 *X₂* to party 102c of Party 2;

In step D), Group key calculation, each of the parties 402a-402c calculates the same group key, *K_{G}*, by XORing their received intermediate key, *Xₚ*, with their precursor key, *Kₚ*, for *0<=p<N-1* based on the following:
- Party 402a of Party 0 calculates:
   *K_{G}* =*X₀* XOR *K₀* = *K₀ XOR K₁ XOR K₂*
- Party 402b of Party 1 calculates:
   *K_{G} = X₁ XOR K₁* = *K₀ XOR K₁ XOR K₂*
- Party 402c of Party 2 calculates:
   *K_{G} = X₂ XOR K₂* = *K₀ XOR K₁ XOR K₂*
- Party 402c of Party 2 sends *X₂* to Party 3 and Party 102d of Party 3 calculates:
   *K_{G} =X₂ XOR K₂* = *K₀ XOR K₁ XOR K₂*

Thus, all parties now have the same group key which is the XOR of all 3 precursor keys of the "reduced" ring 608.

Furthermore, as an option and to improve security of the group key and reduce the risk that unknown Parties may be added to the ring 608 without the organiser of the group knowing, prior to the corresponding group key calculation step D) performed by each of the parties 402a-402d, the group key creation/formation meeting and/or communication system 600 may be further modified and configured to include an organising Party 402a of the group of parties or an external actor (e.g. a third party that is different to the intermediary 404) creating and/or sending a one time pad (OTP) key, *K_{OTP},* to all other parties 402b-402d in the ring 608 except the intermediary 404 (e.g. when the organising party is Party 402a) or all parties 402a-402d in the ring 608 except the intermediary 404

(when it is an external party different to the group of parties and the intermediary 404). The OTP Key, *K_{OTP},* may be further used to secure the group key, *K_{G}* generated by each party. Thus, when each of the parties 402a-402d in the group receive the OTP key, *K_{OTP},* from the organiser (e.g. another party in the group) and/or an external party, then the OTP key, *K_{OTP},* may be included by each party in the group key calculation *K_{G}* for 0<=p<N-1 based on the following:
• Party 402a of Party 0 calculates:
   *K_{G}* =*X₀ XOR K₀ XOR K_{OTP}* = *K₀ XOR K₁ XOR K₂ XOR K_{OTP}*
• Party 402b of Party 1 calculates:
   *K_{G} =X₁ XOR K₁ XOR K_{OTP}* = *K₀ XOR K₁ XOR K₂ XOR K_{OTP}*
• Party 402c of Party 2 calculates:
   *K_{G} =X₂ XOR K₂ XOR K_{OTP}* = *K₀ XOR K₁ XOR K₂ XOR K_{OTP}*
• Party 402c of Party 2 sends *X₂* to Party 3 and Party 402d of Party 3 calculates:
   *K_{G} =X₂ XOR K₂ XOR K_{OTP}* = *K₀ XOR K₁ XOR K₂ XOR K_{OTP}*

Thus, all parties 402a-402d in ring 608 now have the same group key which is the XOR of all 3 precursor keys of the "reduced" ring 608 and the OTP key. This forms a secured group key, *K_{G}*, that is same for all parties 402a-402d and may then be used as the group key by each party of the group of parties 402a-402d as the application demands.

Figure 7 is a schematic diagram illustrating an example group key creation/formation meeting and communication system 700 for an even number N of parties 402a-402d in communication with intermediary 404 (e.g. a Meet Me server or WhatsApp (RTM) server, MS Teams (RTM) server) that are configured for creating a group key as described with reference to figures 4a to 4d and arranging a group meeting with the parties 402a-402d. Figure 7 is an illustration of an example Case B group formation/creation process in which the ring 708 that is formed for all the parties 402a-402d is extended to include a "virtual party" or "virtual party" 701a that is hosted, without limitation, for example by the (N-1)-th party 402d of party (N-1) (e.g. Party 3). In this example, the number of parties is, without limitation, for example N=4 parties 402a-402d (e.g. Party 0, Party 1, Party 2, Party 3) that have been arranged to attend the group meeting or a group communication session and the like. In order to secure the group meeting between the N parties 402a-402d, each of the parties 402a-402c are configured to be involved in performing the group key formation/negotiation to create a group key that is unknown to the intermediary 404, where party 402d is further configured to host a "virtual party" or "virtual party" 701a that increases the number of parties into the ring 708 to N+1, which is an odd number of parties. The intermediary 104 may be configured to arrange and notify each of the parties 402a-402d over secure communication channels (not shown) of the reference/address of one or more of the other parties 402a-402d for use in communicating with the respective or corresponding other parties 402a-402d for assisting the parties 402a-402d in each negotiating and creating the group key. It is assumed that, when required to do so, each of the parties 402a-402d may be configured to communicate with another of the parties 402a-402d directly over one of the secure channels 704a-704d (e.g. similar to channels 407a-407e) and/or through intermediate device 404 via corresponding secure channels and the like.

In this example, the formation of the group and hence the ring 708 may be performed on request by a Party of the N parties 402a-402d, by an external actor, which notifies the intermediary 404 (e.g. Meet Me) that a group key for the group communication session/meeting is required. This request may include, without limitation, for example, the set of external references/contact details, {R} of the Parties 402a-402d that are to be included in the group. The intermediary and/or other party may arrange or organise the parties 402a-402d of the Parties into a ring 708 as illustrated in figure 7a, where the parties 402a-402d are arranged into a sequence of {Party 0, Party 1, Party 2, Party 3}. For example, this may be achieved by the intermediary 404 internally assigning sequential zero-based index, p, to each Party and mapping the external reference of each party of a Party to its zero-based reference, p. The intermediary 404 notifies each of the Parties via the parties 402a-402d of the external reference of the next Party in the ring 708. In this example, Party 0 of party 402a receives the external reference of Party 1 of party 402b, Party 1 of party 402b receives the external reference of Party 2 of party 402c, Party 2 of party 402c receives the external reference of Party 3 of party 402d, and Party 3 of party 402d receives the external reference of Party 4 of party 402e. Therefore each of a party, p, for 0<=p<N (e.g. N=4 in this example) now has the external reference to the next adjacent party in the ring 708.

However, for the Case B group formation/creation process of system 700, the ring 708 is virtually increased by adding a "virtual party or device" 701a that is hosted by the last party 402d, i.e. Party 3, and including the virtual party or device 701a in the precursor formation, meeting notification and party notification steps of the group formation/creation process. Thus, with the "virtual party or device " 701a added, the ring 708 is effectively increased to the following circular sequence {Party 0, Party 1, Party 2, Party 3, Virtual Party} for performing the precursor formation, meeting notification and party notification steps of the group formation/creation process. The last party 402d (e.g. Party 3) hosts the virtual party 701a as described below.

Thus, all of the parties 402a-402d have the necessary details to begin the precursor key sharing/negotiation stage of the group formation/creation process for creating or forming a group key. In this example, the precursor key sharing, proceeds based on the following: Each of a party, p, of the ring 708 creates/retrieves a precursor key, *K_{P}*, 702a-702d. In addition, Party *P_{N-1}* which, in this example, is party 702d, creates the "virtual Party/party", *P_{N}*, 701a, and thus creates a second precursor key, *K_{N}*, 701b, which it will share with the first party 702a in the ring 708 instead of the precursor key, *K_{N-1}*, 702d.

Once created/retrieved, each of a party P, for 0<=p<N-1, of the ring 708 (e.g. parties 402a-402c) shares over a secure communication channel 404a-404c its precursor key, *K_{P}*, with the next party in the ring 708. In addition, for p=N-1, the last party p (i.e. p=N-1), or the N-1-th party 402d, shares the second precursor key, *K_{N}*, with the first Party 0 or first party 402a over channel 704d. For example, each of a party shares its precursor key with the party of the next Party in the ring 478, except for the last party 402d, which instead shares the second precursor key 701b of the virtual device/party 701a that it is hosting with the first party (e.g. party 402a) in the ring 708. Therefore, for 0<p<=N-1 each of a party, p, (or p-th party) now has its precursor key, *K_{P}*, and the precursor key *K_{(P-1+N) mod N}* from the previous Party in the ring 708, except for the first Party in the ring 608 which has its precursor key *K₀* and the second precursor key, *K_{N}*, 701b of the "virtual Party" 401a shared with it by the last party 402d (or last (N-1)-th party/party).

Thus, the parties 402a-402d may now create a meeting notification (e.g. Meet Me Notification), in which, for 0<=p<=N-1, each party of Party, p, calculates the XOR of its precursor key, *K_{P}*, and the previous Party's precursor key, *K_{(P+N) mod (N+1)},* to create a meeting key, M*_{P} = K_{P} XOR K_{(P+N) mod (N+1)},* of the *p-th* party, where the last party 402d of Party *P = N-1* (which is hosting the "virtual party" 701a also calculates *M_{P}* = *K_{P} XOR K_{(P+N) mod (N+1)}* for P = *N,* i.e. M*_{N}*, which is the meeting key for the "virtual party" 701a.

Each party of Party, *p,* for *0<=p<N-1,* sends a meeting notification including data representative of *M_{P}* to the intermediary 404 (e.g. Meet Me) along with its external reference, R, which allows the intermediary 404 to map the *p-th* meeting key to the p-th device/party in the ring 708 that it formed. However, the last party 402a of party N-1 sends both *M_{N-1}* and *M_{N}* in a meeting notification including data representative of *M_{N-1}* and *M_{N}* to the intermediary 404 (e.g. Meet Me) along with its external reference, R, which allows the intermediary 404 to map the *N-1-th* meeting key(s) to the N-1-th device/party in the ring 708 that it formed. For example, the intermediary stores a mapping of *M_{P}* vs P.

Now, the intermediary 404 calculates the intermediate keys, *X_{P}*, for each of the 0<=p<=N parties 402a-402d including virtual party 701a, which are each sent in a party notification to the corresponding party. For example, for each Party, p, 0<=p<N-1, the intermediary 404 calculates an intermediary key, *X_{P},* based on: for party 102a with Party *P =* 0, the intermediary calculates the intermediate key as *X₀ = XOR{r = 2 to N-2 step 2}Mᵣ;* and for the remaining parties 102b-102d (and the "virtual party" N 401a) in the ring 408 with Party 0 *< P <= N,* the intermediary 104 calculates *X_{P}* = *X_{P-1} XOR* M_{P}, where for p=N, the intermediary 404 uses the meeting key *M_{N}* received from (N-1)-th party 402d. Once calculated, the intermediary 404 (e.g. Meet Me) notifies or sends data representative of the intermediate key, *X_{P},* to *p-th* party of Party P for 0<=p<N-1. For *(N-1)<=p<=N,* as the (N-1)-th party 402d is hosting the N-th "virtual party/party" 401a, the intermediate device 404 sends both intermediate keys *X_{N-1}* and *X_{N}* to the (N-1)-th party 402d. In this example, N=4, but it applicable for any even N.

Once each party of the parties 402a-402d receives its intermediate key(s), that party may calculate the group key, *K_{G}*, using its precursor key, *K_{P}* and the received intermediate key, *X_{P}*. For example, each party of Party, P, (or the *p-th* party) establishes its own group key by XORing the received *X_{P}* that it received from the intermediary 404 with its own precursor key, *K_{P}*. Thus, the group key, which is the same for each of the N parties 402a-402d, is calculated independently at each *p-th* party based on *K_{G} = Xp XOR K_{P},* for *0<=p<N.*

Referring to any of the group key formation/creation systems/process(es) 400, 410, 420, 440 and step 447, and 700 when *N* is even as described with reference to figures 4a to 7 combinations thereof, modifications thereto and the like, the following is a worked example of creating a group key for a group of N parties when *N* is an even number greater than 2 for the case (e.g. Case B) in which the ring 708 is temporarily increased by virtue of a virtual party from N parties to N+1 parties (e.g. the last party 402d hosts a virtual party 701a that is included into the ring 708 during precursor sharing/negotiation, and group key creation/formation). Each of the group key formation/creation process(es) 410, 420, 440 and step 445, 700 as described with reference to figures 4a to 7 may be further modified and/or adapted based on the concepts and/or steps of the following worked example, combinations thereof, modifications thereto and/or as herein described. For simplicity, reference numerals of figures 4a to 7 may be reused for similar or the same features, components, steps and/or process(es) and the like. In the following worked example, the number of parties in the group (not including the virtual party) is N=4, and the 4 parties arranged as Party 0 to Party 3 of corresponding parties 402a-402d in ring 708 as described with reference to figure 7. Referring to figures 4a or 7, after the ring 708 has been formed for N=4, each party 402a-402d knows (or has been notified by the intermediary 404) of the sequence number or location, *p,* (e.g. *0<=p<=3)* they are positioned within the ordered ring 708 accordingly and also the reference/contact details of one or more other parties such as at least the next adjacent party in the ring 708 and/or the previous adjacent party in the ring, the group key formation process when *N* is even for Case B includes the following main steps of: A) Precursor key sharing/negotiating (e.g. described in steps 447 of process 440 of figure 4d); B) Meeting notification (e.g. described in steps 447 of process 440 of figure 4d); C) Party Notification (e.g. (e.g. described in steps 447 of process 440 of figure 4d)); and D) Group key calculation (e.g. described in steps 448 of process 440 of figure 4d).

In step A), the precursor sharing/negotiating step of the group key formation/creation process, each of the parties 402a-402d performs a precursor key sharing/negotiation step with the next adjacent device in the ring 708 which may involve sharing a key from one party to the next party in the ring 408, or negotiation of a key between one party and the next in the ring 708.

For example, with precursor sharing step each of the parties 402a-402d is configured to create/retrieve their corresponding precursor key/cryptographic key, *Kₚ*, for 0<=p<=3 based on the following:
- Party 402a of Party 0 creates/retrieves precursor key, *K₀*, 702a;
- Party 402b of Party 1 creates/retrieves precursor key, *K₁*, 702b;
- Party 402c of Party 2 creates/retrieves precursor key, *K₂*, 702c;
- Party 402d of Party 3 creates/retrieves precursor key, *K₃*, 702d; and
- Party 402d of Party 3 also creates/hosts a virtual party 701a and creates/retrieves precursor key, *K₄,* 701b, thus the ring 708 is increased to include the virtual party 701a, which is now the previous adjacent party to Party 402a of Party 0.

Thereafter, each of the parties 402a-402d for 0<=p<=3 and virtual party 701a shares their corresponding precursor key, *Kₚ*, over a secure communications channel 704a-704c, 701c, and 704d with the next adjacent party in the increased ring 708 based on the following:
- Party 402a of Party 0 shares *K₀* with party 402b of Party 1 over channel 704a;
- Party 402b of Party 1 shares *K₁* with party 402c of Party 2 over channel 704b;
- Party 402c of Party 2 shares *K₂* with party 402d of Party 3 over channel 704c;
- Party 402d of Party 3 "shares" *K₃* with virtual party 701a over "virtual channel" 701c;
- Party 402d of Party 3 shares *K₄* via virtual party 701a with Party 0 over channel 704d.

For example, with precursor negotiating step each of the parties 402a-402d is configured to negotiate (i.e. perform a cryptographic key exchange) with the previous or the next adjacent party in the ring, where the precursor key/cryptographic key, *Kₚ*, for 0<=p<=3 is negotiated based on the following:
- Party 402a of Party 0 negotiates (e.g. performs a key exchange) a precursor key, *K₀*, 602a with Party 402b of Party 1;
- Party 402b of Party 1 negotiates (e.g. performs a key exchange) a precursor key, *K₁*, 602b with Party 402c of Party 2;
- Party 402c of Party 2 negotiates (e.g. performs a key exchange) a precursor key, *K₂*, 602c with Party 402d of Party 3; and
- Party 402d of Party 3 creates/hosts a virtual party 701a and then "negotiates/creates" a precursor key, *K₃*, 702d with virtual party 701a hosted by Party 3; and
- Party 402d of Party 3 also, via a virtual party 701a, "negotiates/creates" a precursor key, *K₄,* 701b with Party 702a of Party 0.

Thereafter, each of the parties 402a-402d and the virtual party has a first and second precursor key stored thereon after the negotiations based on the following:
- Party 402a of Party 0 has *K₄ and K₀;*
- Party 402b of Party 1 has *K₀* and *K₁*;
- Party 402c of Party 2 has *K₁* and *K₂*;
- Party 402d of Party 3 has *K₂* and *K₃*; and
- Virtual party 401a hosted by Party 3 has *K₃* and *K₄,*

In step B), the meeting notification step of the group key formation/creation process, each of the parties 402a-402d for 0<=p<=3 calculates their respective meeting keys, *Mₚ,* based on their precursor key, *Kₚ*, and the shared/negotiated precursor key *K_{(p-1+N) mod N}* for 0<=p<=N-1 from the previous adjacent party and sends/shares their meeting key, *Mₚ*, with the intermediary 404, where the (N-1)-th party 402d (e.g. Party 3) generates two meeting keys, one for itself the other for the virtual party 701a. The meeting keys are created and notified/shared based on the following:
- Party 402a of Party 0 creates and shares *M₀* = *( K₀ XOR K₄)* with intermediary 404;
- Party 402b of Party 1 creates and shares *M₁* = *( K₁ XOR K₀)* with intermediary 404;
- Party 402c of Party 2 creates and shares *M₂* = *( K₂ XOR K₁* ) with intermediary 404;
- Party 402d of Party 3 creates and shares *M₃* = *( K₃ XOR K₂)* with intermediary 404; and
- Party 402d of Party 3 via the hosted virtual party 701a creates and shares *M₄* = *( K₄ XOR K₃* ) with intermediary 404.

In step C), the intermediary 404 calculates the corresponding intermediate keys, Xₚ, for each of the parties 402a-402d, for 0<=p<=N-1 and also an intermediate key X_{N} for the virtual party 701a hosted by the last party 402d based on a judicious combination of two or more meeting keys of the parties 402a-402d and 701a in the increased ring 708 such that when each Xₚ of the *p-th* party is XOR'ed with the corresponding precursor key Kₚ of the p-th party, the same group key, K_{G}, is formed for each of the parties, for 0<=p<=3. For example, a judicious combination of meeting keys may be based on: For party *P =* 0 (e.g. party 402a) *X₀ = XOR{r = 2 to N step 2}Mᵣ;* and for parties 0 *< P <= N* (e.g. parties 402b-402d and 701a), *X_{P} = X_{P-1} XOR M_{P}.* In the following, strikethrough is used to indicate terms which cancel out due to the commutative and associate nature of the XOR operation. Thus, the intermediary 404 calculates the corresponding intermediate keys, Xₚ, for each of the parties 402a-402d and intermediate key X_{N} for the virtual party based on the following:
- Intermediate key for party 402a of Party 0 is calculated as:
   *X₀ = M₂ XOR M₄* = *(K₂ XOR K₁)XOR (K₄ XOR K₃) = K₁ XOR K₂ XOR K₃ XOR K₄*
- Intermediate key for party 402b of Party 1 is calculated as:
   *X₁ = X₀ XOR M₁* = *(XOR K₂ XOR K₃ XOR K₄) XOR ( XOR K₀)* = *K₂ XOR K₃ XOR K₄ XOR K₀*
- Intermediate key for party 402c of Party 2 is calculated as:
   *X₂ = X₁ XOR M₂* = *(XOR K₃ XOR K₄ XOR K₀) XOR (XOR K₁)* = *K₃ XOR K₄ XOR K₀ XOR K₁*
- Intermediate key for party 402d of Party 3 is calculated as:
   *X₃ = X₂ XOR M₃* = *(XOR K₄ XOR K₀ XOR K₁) XOR (XOR K₂)* = *K₄ XOR K₀ XOR K₁ XOR K₂*
- Intermediate key for virtual party 701a hosted by Party 3 is calculated as:
   *X₄* = *X₃ XOR M₄ = ( XOR K₀ XOR K₁ XOR K₂) XOR ( XOR K₃)* = *K₀ XOR K₁ XOR K₂ XOR K₃*

Thereafter, the intermediary 404 sends over a secure communications channel to each of the parties 402a-402d the corresponding calculated intermediate keys based on the following:
- intermediary 404 sends *X₀* to party 102a of Party 0;
- intermediary 404 *X₁* to party 402b of Party 1;
- intermediary 404 *X₂* to party 402c of Party 2;
- intermediary 404 *X₃* to party 402d of Party 3; and
- intermediary 404 *X₄* to virtual party 701a hosted by party 402d of Party 3.

In step D), Group key calculation, each of the parties 402a-402c calculates the same group key, *K_{G}*, by XORing their received intermediate key, *Xₚ*, with their precursor key, *Kₚ*, for *0<=p<=N-1* based on the following:
- Party 402a of Party 0 calculates:
   *K_{G}* =*X₀* XOR *K₀* = *K₀ XOR K₁ XOR K₂ XOR K₃ XOR K₄*
- Party 402b of Party 1 calculates:
   *K_{G}* = *X₁ XOR K₁* = *K₀XOR K₁ XOR K₂ XOR K₃ XOR K₄*
- Party 402c of Party 2 calculates:
   *K_{G} = X₂ XOR K₂* = *K₀XOR K₁ XOR K₂ XOR K₃ XOR K₄*
- Party 402d of Party 3 calculates:
   *K_{G}* = *X₃* XOR *K₃* = *K₀XOR K₁ XOR K₂ XOR K₃ XOR K₄*

Thus, all real parties 402a-402d in ring 708 now have the same group key which is the XOR of all 5 precursor keys of the "increased" ring 708 or the ring 708 including the virtual party 701 a.

Furthermore, as an option and to improve security of the group key and reduce the risk that unknown Parties may be added to the ring 708 without the organiser of the group knowing, prior to the corresponding group key calculation step D) performed by each of the parties 402a-402d, the group key creation/formation meeting and/or communication system 700 may be further modified and configured to include an organising Party 402a of the group of parties or an external actor (e.g. a third party that is different to the intermediary 404) creating and/or sending a one time pad (OTP) key, *K_{OTP}*, to all other parties 402b-402d in the ring 708 except the intermediary 404 (e.g. when the organising party is Party 402a) or all parties 402a-402d in the ring 708 except the intermediary 404 (when it is an external party different to the group of parties and the intermediary 404). The OTP Key, *K_{OTP}*, may be further used to secure the group key, *K_{G}* generated by each party. Thus, when each of the parties 402a-402d in the group receive the OTP key, *K_{OTP}*, from the organiser (e.g. another party in the group) and/or an external party, then the OTP key, *K_{OTP}*, may be included by each party in the group key calculation *K_{G}* for 0<=p<=N-1 based on the following:
- Party 402a of Party 0 calculates:
   *K_{G}=X₀XOR K₀ XOR K_{OTP}* = *K₀XOR K₁ XOR K₂ XOR K₃ XOR K₄ XOR K_{OTP}*
- Party 402b of Party 1 calculates:
   *K_{G} = X₁ XOR K₁ XOR K_{OTP}* = *K₀XOR K₁ XOR K₂ XOR K₃ XOR K₄ XOR K_{OTP}*
- Party 402c of Party 2 calculates:
   *K_{G} =X₂ XOR K₂* XOR *K_{OTP}* = *K₀XOR K₁ XOR K₂ XOR K₃ XOR K₄ XOR K_{OTP}*
- Party 402d of Party 3 calculates:
   *K_{G} = X₃ XOR K₃ XOR K_{OTP}* = *K₀XOR K₁ XOR K₂ XOR K₃ XOR K₄ XOR K_{OTP}*

Thus, all real parties 402a-402d in ring 708 now have the same group key which is the XOR of all 5 precursor keys of the "increased" ring 708 or the ring 708 including the virtual party 701 a and the OTP key. This forms a secured group key, *K_{G}*, that is same for all parties 402a-402d and may then be used as the group key by each party of the group of parties 402a-402d as the application demands.

As described above with reference to figures 4a to 7 and/or as described herein, the sharing and/or negotiation of the cryptographic or precursor keys between each of the parties in the group of parties in the ring may use any suitable type of sharing, key exchange, and/or negotiation type protocol or receiver. As described above, each party may share, establish or negotiate a precursor cryptographic key with an adjacent party in the ring. Thus, each party has a first precursor cryptographic key, i.e. a cryptographic key shared/negotiated or exchanged by the previous adjacent party in the ordered ring to said each party, and a second precursor cryptographic key, i.e. a cryptographic key shared/negotiated or exchanged by the next adjacent party in the ordered ring to said each party. Any suitable or secure key sharing, establishment or negotiation protocol or procedure may be implemented to ensure two adjacent parties share or establish/negotiate the same cryptographic key. The key sharing, establishment or negotiation protocol may be the same for all parties in the ring to ensure the precursor cryptographic keys that are shared/established or negotiated are in the same form, similar format and/or type such that they may be mathematically compatible to be combined with the meeting keys to form the group key. The key sharing, establishment or negotiation protocol that is used may be based on, without limitation, for example the BB84 protocol; any suitable classical key exchange/sharing/negotiating protocol such as, without limitation, for example Transport Layer Security (TLS)/Diffie-Hellman (DH) protocol and the like to negotiate a shared key; or have a secured channel is established between the two parties in which they pass a one time pad (OTP) or random key from one to the other; any other quantum key exchange protocol used to establish and/or exchange a shared key between two parties; negotiating or establishing a shared key via a third party or the intermediary or cloud service and the like; wherein the shared key may be based on quantum key distributed keys and may be a quantum-safe or quantum secure key due to the key establishment protocol being a quantum-secure key establishment protocol that uses quantum distributed keys to establish the shared key between the parties; combinations thereto, modifications thereto and the like. It is assumed herein that each party in the ring has securely shared, negotiated or exchanged and established a first shared precursor key with the previous adjacent party in the ring to said each party and has shared, negotiated or exchanged and established a second shared precursor key with the next adjacent party in the ring to said each party.

For example, the BB84 QKD protocol is a well-known QKD protocol using photon polarisation bases to transmit the information that may be used to exchange a shared key between a first and second party. This may be applied to each party in the group of parties in which, for example, said each party and the next adjacent party negotiate a key or exchange a shared key based on using the BB84 protocol. The BB84 QKD protocol uses a set of bases including least two pairs of conjugate photon polarisation bases (e.g. a set of bases including, without limitation, for example a rectilinear photon basis (e.g. vertical (0°) and horizontal (90°) polarisations) and diagonal photon basis (e.g. 45° and 135° polarisations) or the circular basis of left- and right-handedness etc.) In the BB84 protocol, QKD is performed between a sender device (or third party/intermediary) (e.g. often referred to as Alice) and a first party (e.g. often referred to as Bob) and a second party (e.g. often referred to as Carol). The BB84 protocol is a key exchange protocol using quantum communication channel between the first party and the sender device, and the second party and the sender device in which the first party and second party exchange and share the same cryptographic key. The sender device and first party are connected by a quantum communication channel which allows quantum information (e.g. quantum states) to be transmitted. As well, the sender device and second party are connected by another quantum communication channel which allows quantum information (e.g. quantum states) to be transmitted. Each quantum channel may be, without limitation, for example, an optical fibre or optical free space. Furthermore, the sender device and first party (and sender device and second party) also communicate over a non-quantum channel or public classical channel, without limitation, for example a fibre optic channel, telecommunications channel, radio channel, broadcast radio or the internet and/or any other wireless or wired communications channel and the like. As well, when negotiating the key the first and second parties may communicate over a non-quantum channel or classical channel for exchanging the final shared cryptographic key between the first and second parties. Sheng-Kai Liao, et. al. "Satellite-to-ground quantum key distribution", Nature volume 549, pages 43-47, 07 September 2017, describes satellite-based QKD system using the BB84 protocol for distributing keys, where a satellite free-space optical quantum channel is produced using a 300-mm aperture Cassegrain telescope, which sends a light beam from a Micius satellite (e.g. Alice) to a optical ground receiving station (OGR) (e.g. Bob or Carol), which uses a Ritchey Chretien telescope for receiving the QKD photons over the satellite free-space optical quantum channel. The BB84 protocol requires that the third party or intermediary that is used to perform the key exchange/establishment between the first and second parties is trusted.

In another example, a modified version of BB84 protocol as described in GB Patent Application No. 1916311.2 entitled "Quantum Key Distribution Protocol" filed on 8 November 2019 and incorporated herein by reference, and/or any type of QKD protocol may be used to exchange and/or transmit the quantum encoded keys and share a quantum-secure cryptography key between a pair of parties. The modified version of the BB84 protocol may be configured or implemented such that the sender device (e.g. third party device / intermediary) and the like does not have knowledge of the final agreed quantum-secure key between the first and second parties. This means that the level of trust required by the sender device may be reduced or untrusted but where the shared key between first and second parties is only known to the first and second parties. In the modified version of the BB84 protocol, the sender device (e.g. a satellite or terrestrial fibre optic device) may transmit a first QKD key to a first party over a first quantum channel (e.g. optical channel) together with the transmitted basis sent to the first party (e.g. an OGR or endpoint device) over a first classical channel, where the first party does not reveal the received basis used by the first party to receive the QKD key over the first quantum channel. This means the sender device only knows approximately 50% of the received bits of the first QKD key. The process is repeated with the second party and sender device for a second QKD key. That is, the sender device may transmit the second QKD key to the second party over a second quantum channel (e.g. optical channel) together with the transmitted basis sent to the second party over a second classical channel, where the second party does not reveal the received basis used by the second party to receive the second QKD key over the second quantum channel. This means the sender device only knows approximately 50% of the received bits of the second QKD key too. The sender device then XORs the first and second QKD keys together and sends these to the second party or even to both parties. The first and second parties communicate to discover the correctly-measured bases, generating a new raw key of about 25% of the original bits transmitted, where they then perform error correction and the like to generate a final shared key, which becomes a precursor key negotiated between the first and second parties.

Alternatively or additionally, each of the first and second party devices then sends only an indication of what they consider to be the correctly received symbols of the QKD keys. The sender device then sends the actual basis used for transmitting these correctly received symbols to each corresponding first and second party. The sender device then XORs the two QKD keys and sends the correctly received symbols of the XOR'd QKD keys to the second party. The first and second parties communicate to discover the correctly-measured bases, generating a new raw key of about 25% of the original bits transmitted, where they then perform error correction and the like to generate a final shared key, which becomes a precursor key negotiated between the first and second parties.

As another example, the above example QKD protocol that modifies the BB84 protocol may be for when each symbol represents 2ⁿ binary bits, for n>=1. When each symbol represents a binary bit for n=1, the steps of this QKD protocol may be based on the following: the sender device is configured to transmit a first secret bit string (e.g. QKD key) over a first quantum channel to the first party, each bit of the first secret bit string modulated by a basis state randomly selected from a set of base; the sender device also transmits a first basis set over a first classical communication channel to the first party, the first basis set comprising data representative of the randomly selected bases used to modulate each bit of the first secret bit string; the sender device may also transmit a second secret bit string (e.g. second QKD key) over a second quantum channel to the second party, each bit of the second secret bit string modulated by a basis state randomly selected from the set of bases; the sender device also transmits a second basis set over a second classical communication channel to the second party, the second basis set comprising data representative of the randomly selected bases used to modulate each bit of the second secret bit string. The sender device then generates a third bit string based on combining the first and second secret bit strings, and transmits the third bit string to the second device via the second communication channel.

The first party and second party perform a quantum key exchange to establish a shared key based on: the first party using the received first basis set to determine a first received set of secret bits comprising bits of the first secret bit string transmitted over the first quantum channel that were successfully received by the first party; the second party uses the received second basis set to determine a second received set of secret bits comprising bits of the second secret bit string transmitted over the second quantum channel that were successfully received by the second party; the second party generates a fourth set of bits based combining the second received set of secret bits with the received third bit string, wherein one or more bits of the fourth set of bits correspond to one or more bits of the first bit string; the first party and second party perform bit sifting operations and the like over a third classical communication channel therebetween based on the first received set of secret bits at the first party and the fourth set of bits at the second party for generating a common set of sifted bits for forming a shared cryptographic key at the first and second parties.

This QKD protocol minimises interactions between the sender device and the first and second parties, which means the sender device receives nearly no information associated with what secret symbols the first and second parties validly received, which means this may result in a higher level of security than those QKD protocols such as BB84 that share information with the sender device. However, this tradeoff is typically at the expense of reliability and/or a reduction in the number of viable symbols that may be used for generating the common set of sifted symbols and subsequent formation of the cryptographic key using the common set of sifted symbols. The reliability and/or viable symbols successfully and validly received of the QKD protocol may be further improved whilst being provably secure and not impacting the security of the QKD protocol by having the first and second parties share a "small amount" of information associated with the successfully received symbols at the first and second parties (e.g. successfully received symbol positions) with the sender device.

In another example secure key sharing, establishment or negotiation protocol or procedure, each party may share, establish or negotiate a precursor cryptographic key with an adjacent party in the ring using a secure cloud platform/service. The example secure key sharing, establishment or negotiation protocol or procedure may be implemented to ensure two adjacent parties, or a pair of parties, share or establish/negotiate the same cryptographic key. The secure key sharing, establishment or negotiation protocol is used to establish the same cryptographic key or a key between a first party and a second party, each party in communication with one or more key-serving nodes (KNodes) within a communication network. The key that is established between the first and second parties or that results from the key establishment protocol is referred to herein interchangeably as a precursor key, which is derived by the first and second parties at the end of the example secure key establishment protocol. Each of the first and second parties are in communication with a corresponding first and second key-serving node, where each key serving node has access to the same set of distributed keys (also referred to as a set of keys), which are inaccessible to the first and second parties. Each set of keys having been established or distributed to each key serving node of the first and second parties in a secure manner. For example, each set of keys may be distributed and/or formed based on, without limitation, for example using a classical key distribution protocol to form the set of keys; using quantum key distribution protocol to form a set of keys that comprise quantum distributed keys; and/or any other type of key distribution protocol that is suitable for providing a set of keys to the KNodes for use with the secure key establishment protocol for establishing a key (e.g. established key or final key) between the first and second party in a trustless manner.

As an example, the communication network may be based on, without limitation, for example a classical communication network (e.g. a cloud network/infrastructure and the like) in which communication channels within the network are secured using classical encryption/cryptography or non-quantum encryption/cryptography to form a classical secured communication network or classical-secure network (also referred to as a secure network). For example, the one or more key-serving nodes (KNodes) are part of the classical-secure network and communicate with each other over classical-secure communication channels. The set of keys used in the secure key establishment protocol may be distributed to the classical-secure network (e.g. stored in one or more HSMs or secure servers and the like) using one or more of the various key distribution protocols to form a set of keys. The KNodes may thus have secure access to the set of keys over secure channels in the secure network. Each classical-secure communication channel between KNodes and/or other computing devices, nodes and/or components of the secure network may be based on a communication channel encrypted with, without limitation, for example a key from the set of keys, a key derived from the set of keys, or even a distributed key derived from a manual keyfill process and the like. Each of the first and second parties may have a classical-secure communication channel set up with each respective KNode during the secure key establishment protocol, where these classical-secure communication channels may comprise or represent a communication channel encrypted by, without limitation, for example a key from the set of keys; a key derived from the set of keys, even a distributed key derived from a manual keyfill process; a key exchanged between the respective KNode and party; and/or any other manner of securing a communication channel between the KNode and the party; the like and/or as the application demands.

The set of distributed keys (or set of keys) may be stored within two or more servers within the classical-secure network (e.g. HSMs, secure servers, and the like), each server having a distinct or different geographic location to the other servers, where a secure key establishment protocol generates and securely distributes a set of distributed keys to each server. The secure key establishment protocol may be used between a first party and a second party such they receive the same key from different geographical locations (e.g. different servers/KNodes), but rooted in a distributed key that was delivered to the geographical locations (e.g. servers/KNodes) in a secure manner.

Alternatively or additionally, the communication network may be based on, without limitation, for example a quantum-secure network (e.g. Quantum Cloud) and/or a classical communication network. For example, if the one or more key-serving nodes (KNodes) are within the quantum-secure network, they may communicate with each other over respective quantum-secure communication channels. The set of keys may be distributed to the quantum-secure network using quantum key distribution protocols and so forms a set of quantum distributed keys. The KNodes may thus have quantum-secure access to the set of keys, which are a set of quantum distributed keys. Each quantum-secure communication channel between KNodes and/or parties may comprise or represent a communication channel encrypted with a quantum distributed key or even a distributed key derived from a manual keyfill process and the like.

However, to ensure quantum security, the quantum distributed key may be from the set of quantum distributed keys or a key securely derived from one or more quantum distributed keys of the set of quantum distributed keys; and/or derived in any quantum secure manner using one or more quantum distributed keys and the like or a quantum secure keyfill process. The set of quantum distributed keys may be stored within two or more quantum servers within the quantum-secure network (e.g. OGRs/terrestrial transceivers and the like), each quantum server having a distinct or different geographic location to the other quantum servers, where a quantum key distribution system generates and distributes a set of quantum distributed keys to each quantum server. The secure key establishment protocol may be used between an first party and a second party such they receive the same key from different geographical locations (e.g. different quantum servers/KNodes), but rooted in a quantum distributed key that was delivered to the geographical locations (e.g. quantum servers/KNodes) in a quantum safe manner (e.g. photonically).

For example, a quantum distributed key may be delivered to quantum servers in different geographical locations using a quantum key distribution system/protocol based on, without limitation, for example a satellite quantum key distribution system with photonic/satellite links between a satellite and two or more optical ground receivers in different geographical locations; or a terrestrial quantum key distribution system with photonic fibre channels between at least two different geographically located terrestrial transceivers; combinations thereof; modifications thereto; as herein described; and the like and/or as the application demands.

Nevertheless, regardless of the communication network or set of distributed keys (set of keys) that are used by each of the first and second key nodes, the secure key establishment process/protocol is based on the following procedure in which the first party requests for the second party to provide: a) the identity (ID) of the second party (e.g. ID_R); the ID of the KNode that the second party wishes to negotiate with (e.g. KID_R); and a first nonce generated by the second party (e.g. N_R). The second party responds with data representative of: a) the generated first nonce (e.g. N_R); b) the ID of the second party (e.g. ID_R); c) and the ID of its KNode (e.g. KID_R). The first party then generates a second nonce (e.g. N_I) and requests an Intermediate Bilocation Key (e.g. Int_Bilocation_Key) from a different KNode than that of the Knode used by the second party, in which the request includes data representative or passes data representative of: a) the ID of the second party (e.g. ID_R); b) the ID of second party's KNode (e.g. KID_R); and c) a third nonce which is derived from the first and second nonces. The third nonce may be based on a combination or function based on the first nonce and the second nonce (e.g. an XOR-type operation using the first and second nonces; i.e. N_IR = N_R XOR N_I, when binary symbols are used).

The KNode used by the first party (or first key node) calculates an Intermediate Bilocation Key based on the request for the Intermediate Bilocation Key. In this example, the first key node includes a set of distributed keys (or set of keys) and are the same as the set of distributed keys of the KNode used by the second party (e.g. second key node). For example, when the secure network is a quantum network, the set of distributed keys is a set of quantum distributed keys. Thus, the first key node receives from the first party the request to generate an Intermediate Bilocation Key, in which the request includes data representative of: a) the ID of the second party (ID_R); b) the ID of second key node or KNode used by the second party (KID_R); and c) a third nonce (e.g. N_IR) which is derived from a first random nonce (e.g. N_R) generated by the second party and a second random nonce (e.g. N_I) generated by the first party. The third nonce may be based on a combination or function based on the first nonce and the second nonce (e.g. an XOR-type operation using the first and second nonces; i.e. N_IR=N_R XOR N_I, when binary symbols are used). On receipt of the Intermediate Bilocation Key request, the first key node selects a key from the set of distributed keys (or set of keys) using a key selection algorithm/function based at least on the ID_R, KID_R, the ID of the first party (ID_I), the ID of the first key node (KID_I) or KNODE used by the first party, and the third nonce. The ID_I of the first party may be received or derived during authentication of the first party with the first key node. The key selection algorithm/function may be based on a hash function. For example, when the secure network is a quantum-secure network, the selected key is selected from the set of quantum distributed keys and so is a quantum distributed key. After selecting the selected key from the set of keys, the first key node generates a first random anti-replay nonce for use in deriving/generating the Int_Bilocation_Key. The first key node then generates the Int_Bilocation_Key based on the selected key, the first anti-replay nonce, and at least on ID_R, KID_R, ID_I, KID_I, and the received third nonce (e.g. N_IR). For example, the Int_Bilocation_Key may be based on a hash of at least the selected key, the first anti-replay nonce, and at least on ID_R, KID_R, ID_I, KID_I, and the received third nonce. The first key node then sends the Int_Bilocation_Key and the first anti-replay nonce (e.g. fourth nonce in step 236 of process 230) to the first party for use by the first party and second party in establishing/negotiating the precursor key therebetween.

In response to the Intermediate Bilocation Key request, the first party is returned or receives from the KNode used by the first party (or first key node) the following: an Intermediate Bilocation Key (e.g. Int_Bilocation_Key) and a fourth nonce (e.g. a first anti-replay nonce) used in its creation from the KNode or first key node. The first party sends or passes data representative of: a) the second and fourth nonces (e.g. N_I and first anti-replay nonce); b) the ID of the first party (ID_I); and c) the ID of the KNode used by the first party (e.g. KID_I); to the second party. The second party generates the third nonce (e.g. N_IR) from the received second nonce and its generated first nonce (e.g. N_IR = N_I XOR N_R).

The second party requests a Bilocational Key from its KNode and sends/passes data representative of: a) the third and fourth nonces; b) ID_I; and c) KID_I; to the KNode used by the second party, which is configured to generate the Bilocational Key.

The KNode used by the second party, or second key node, calculates the Bilocation Key on receiving from the second party the request to generate the Bilocation Key, in which the request includes data representative of: a) the ID of the first party (ID_I); b) the ID of KNode used by the first party i.e. the first key node (KID_I); c) a third nonce (e.g. N_IR) which is derived from a first random nonce (e.g. N_R) generated by the second party and a second random nonce (e.g. N_I) generated by the first party. The third nonce may be based on a combination or function based on the first nonce and the second nonce (e.g. an XOR-type operation using the first and second nonces; i.e. N_IR= N_R XOR N_I, when binary symbols are used); and an first anti-replay nonce received by the first party from the first key node.

The second key node, or KNode used by the second party, then selects a key from the set of distributed keys using a key selection algorithm/function based at least on the ID_I, KID_I, the ID of the second party (ID_R), the ID of the second key node (KID_R) or KNode used by the second party, and the third nonce (e.g. N_IR). It is noted that the ID_R of the second party may be received or derived previously by the second key node during authentication of the second party with the second key node. The key selection algorithm/function used by the second key node is the same as the key selection algorithm/function used by the first key node. The key selection algorithm/function may be based on a hash function. This means, that given the first and second key nodes have the same set of distributed keys, and given that the second key node is passed a set of inputs that enables it to provide the key selection algorithm/function with the same inputs, then the key selected by the second key node is the same as the key selected by the first key node.

The second key node generates a random receiver anti-replay nonce for use in deriving/generating the Bilocation Key. The second key node calculates the Bilocation Key by first generating the Int_Bilocation_Key based on the selected key and at least on the ID_I, KID_I, the ID of the second party (ID_R), the ID of the second key node (KID_R), the third nonce (e.g. N_IR), and the received first anti-replay nonce. For example, the Int_Bilocation_Key may be based on a hash of at least the selected key, the first anti-replay nonce, and at least on ID_R, KID_R, ID_I, KID_I, and the received third nonce. The second key node then generates the Bilocation Key based on combining the Int_Bilocation_Key with the second anti-replay nonce. For example, this may be based on a hash of the Int_Bilocation_Key and the second anti-replay nonce. The second key node sends the Bilocation Key and the second anti-replay nonce or fifth nonce to the second party for use by the second party and first party in negotiating/establishing the precursor cryptographic key.

The second party is sent/passed a Bilocational Key and a fifth nonce (e.g. second anti-replay nonce) used in its creation from the KNode used by the second party. The second party sends/passes the fifth nonce (e.g. second anti-replay nonce) back to the first party. The first party combines the fifth nonce (e.g. second anti-replay nonce) and the Intermediate Bilocation Key to form the shared Bilocation Key. The Bilocation Key received by the second party from the KNode used by the second party is the same as the Bilocation Key calculated at the first party using the Intermediate Bilocation Key received from the KNode used by the second party, so has been shared therebetween. Thus the Bilocation Key at each of the first and second parties is a shared Bilocation Key.

Finally, the first party and second party may form or generate the precursor key based on agreeing to either: a) combine the Bilocation Key with an agreed nonce (e.g. the third nonce, which is a combination of the first and second nonces) to form the precursor key; or b) use a challengeresponse protocol to form the precursor cryptographic key. Thus, this example secure key may be used to enable each party in the group of parties to share or negotiate/establish a precursor key with the previous adjacent party in the ring and the next adjacent party in the ring.

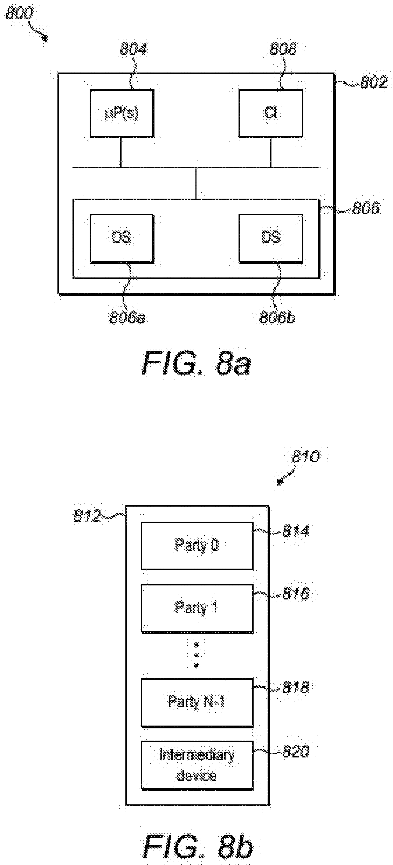

Figure 8a is a schematic diagram of an example computing system 800 for use in implementing and/or performing a group key formation/creation process according to aspects of the invention. Computing system 800 may be used to implement one or more aspects of the systems, apparatus, parties, intermediary methods, group key formation/.creation process(es), party group key formation/creation process(es), intermediary group key formation/creation process(es), and/or use cases as described with reference to figures 4a to 7, combinations thereof, modifications thereto, as herein describe and/or as the application demands. Computing system 800 includes a computing device or apparatus 802 (e.g. QS server, first or second key node, first and/or second device(s)). The computing device or apparatus 802 includes one or more processor unit(s) 804, memory unit 806 and a communication interface 808 in which the one or more processor unit(s) 804 are connected to the memory unit 806, the communication interface 808. The communications interface 808 may connect the computing device or apparatus 802 with one or more other computing devices and/or apparatus (e.g. parties, intermediary and the like (not shown) to establish a group key between the parties via the intermediary based on the group key formation/creation system(s), apparatus, process(es) as described with reference to figures 4a to 7 according to the invention as described herein, combinations thereof, modifications thereto as the application demands. The memory unit 806 may store one or more program instructions, code or components such as, by way of example only but not limited to, an operating system 806a for operating computing device 802, and a data store 806b for storing computer program instructions, executable code, code and/or components associated with implementing the functionality and/or one or more function(s) or functionality associated with one or more portions of the group key formation/creation process(es), one or more parties, one or more intermediary(ies), one or more method(s) and/or process(es) of performing a group key formation/creation process or protocol for creating a group key that is the same for all parties in the group according to the invention, system(s)/platforms, combinations thereof, modifications there to, and/or as described herein with reference to at least any one of figure(s) 4a to 7.

Figure 8b is a schematic diagram of another example group key formation/creation system 820 for facilitating and/or implementing a group key formation/creation protocol and/or process(es) 812 for use by a group of N parties 814-818, where the N parties 814-818 are configured to perform corresponding party group key formation process(es), and the intermediary 820 is configured to perform the reciprocal/corresponding intermediary group key formation process for creating/forming a group key that is the same for all N parties 814-818. The intermediary 820 is unable to derive or calculate the group key from the information exchanged between the parties 812-818 and the intermediary 820, which only calculates intermediate keys for each party 812-818. Each party 812-818 calculates the same group key based on XORing their corresponding intermediate value with their own precursor key. The group key formation/creation system 820 may include a plurality of computing devices or apparatus 802 that includes at least N parties 812-818 and an intermediary 820 that may be configured to operate and/or implement/perform the corresponding steps and/or functions of the group key formation/creation process(es) according to the invention for creating a group key that is the same for all N parties 814-818 in the group as described with reference to said one or more systems 400, 500, 600, and/or 700 of figures 4a, 5, 6, 7 one or more group key formation/creation process(es) /method(s), party group key formation/creation process(es) /method(s) and/or intermediary group key formation/creation process(es)/method(s) 410, 420, 440 of figures 4a to 7, combinations thereof, modifications thereto and/or as herein described with reference to any one of figures 4a to 7 and/or as the application demands.

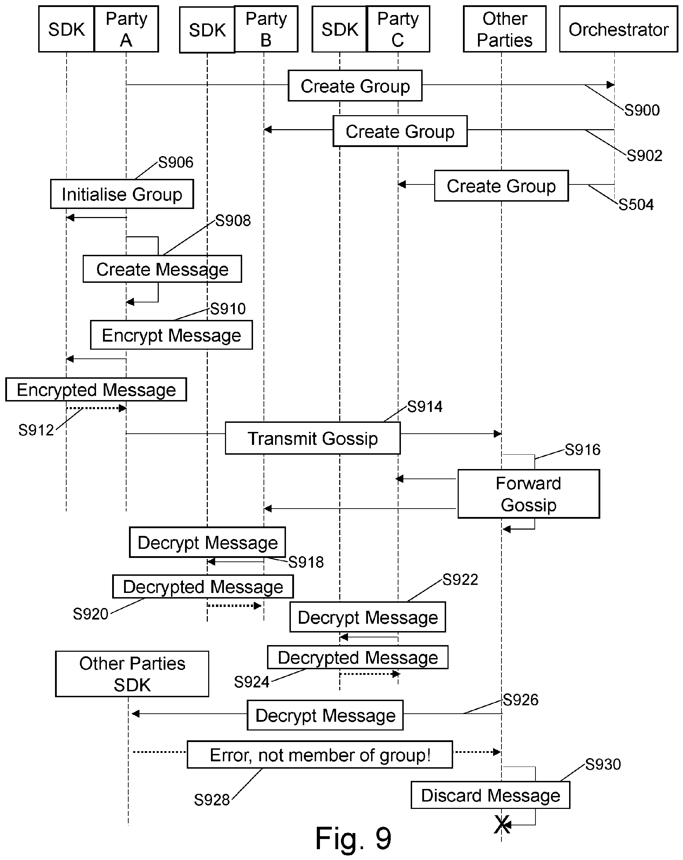

Figure 9 depicts a sequence diagram of a method for securely communicating between nodes 102a-102i of a mesh network 100. In a first operation, S900 a first Party (i.e., a first node 102) - Party A (or Alice) transmits a request to the orchestration service 300 to form a group with two or more other Parties (i.e., two or more other nodes 102). In the example shown in Figure 9, the request transmitted in the first step S900 is a request to form a group comprising three parties: Party A (Alice, Party B (Bob), and Party C (Charlie). The request comprises the unique IDs, *ID_{A}, ID_{B}, ID_{C}* associated with and identifying each of Parties A, B and C respectively; and a Group Key ID, GKID, used to identify a group key to be agreed between Parties A, B and C. The group key is agreed between the parties according to the methods described above in relation to Figures 4 to 8.

In response to operation S900, the orchestration service 300 - in operations S902 and S904 - communicates with Parties B and C (and, Party A as required) to create the group comprising Parties A, B and C. The communication between the orchestration service 300 and Parties B and C comprises the unique IDs, *ID_{A}, ID_{E}, ID_{C},* and the Group Key ID, GKID. Operations S902 and S904 may be performed simultaneously. Alternatively, operations S902 and S904 may be performed consecutively in any order.

Subsequent to operations S902 and S904, once the group has been created, Party A accesses its respective Group Key SDK 204 (or more simply - SDK 204) to initialise the group comprising Parties A, B and C. The request, or command, to initialise the group comprises the Group Key ID, GKID. Initialising the group involves Parties A, B and C agreeing a group key, for example according to the methods described above in relation to Figures 4 to 8, and associating the agreed group key with the Group Key ID, *GKID,* in the initialisation request or command. The group key may, in other examples, be agreed via another appropriate method.

Once the group has been initialised (and the group key associated with its ID, *GKID,* has been agreed), Party A can subsequently carry out operation S908 of creating a message to be distributed, according to a gossip protocol, across the mesh network 100. Following the creation of the message in operation S508, Party A - in operation S910 - accesses the SDK 204 to encrypt the message using the Group Key. The request or command to encrypt the message sent to the SDK comprises the message and the Group Key ID, *GKID.*

In response to receiving the request or command to encrypt the message based on the group key associated with the Group Key ID, *GKID,* the SDK 204 - in operation S512 - returns the message as an encrypted messaged, encrypted with the group key, to Party A.

Subsequent to the encrypted message being returned to Party A, Party A - in operation S514 - transmits the encrypted message across mesh network 100 to other Parties (i.e., other nodes 102 that may or not be members of the group) using a gossip communication protocol. The other Parties subsequently - in operation S916 - forward the gossip on to further parties iteratively until every Party (i.e., nodes 102a-102i of the mesh network 100) has received a copy of the encrypted message. The messages transmitted between each of the Parties, or nodes 102a-102i, comprises the encrypted message and the Group Key ID, GKID, associated with the group key agreed between the Parties, or nodes 102, of the group.

Once a Party, or node 102, has received the encrypted message via the gossip protocol, the Party accesses its respective SDK 204 to decrypt the message. For example, in operations S918 and S922, Parties B and C respectively access their associated SDKs 204. Similarly, in operation S926, each of the Other Parties can respectively access their associated SDKs 204. The request or command to decrypt the encrypted message comprises the encrypted message and the Group Key ID, GKID, associated with the group key agreed between the Parties, or nodes 102, of the group.

In response to the requests for decryption from Parties B and/or C, the respective SDK 204 recognises that the unique IDs, *ID_{B}, ID_{C},* associated therewith correspond to Parties that are members of the group that agreed the group key identified by the Group Key ID, *GKID.* In operations S920 and S924, the respective SDKs 204 return the decrypted message to Parties B and C respectively. In order to facilitate this, the each of the SDKs may store a respective copy of the group key for the corresponding party, or node 102, of the group.

In contrast, in response to the requests for decryption from the other Parties, that are not members of the group identified by the group key, GKID, the respective SDK does not have the group key corresponding to the Group Key ID, *GKID,* and so is unable to decrypt the message. In operation S926, the respective SDKs 204 return an error message indicative that the request or command to decrypt the encrypted message originated from a Party that is not a member of the group that agreed the group key associated with the Group Key ID, *GKID.*

In response to the error message, each of the other Parties - in operation S930 - subsequently discards the encrypted message.

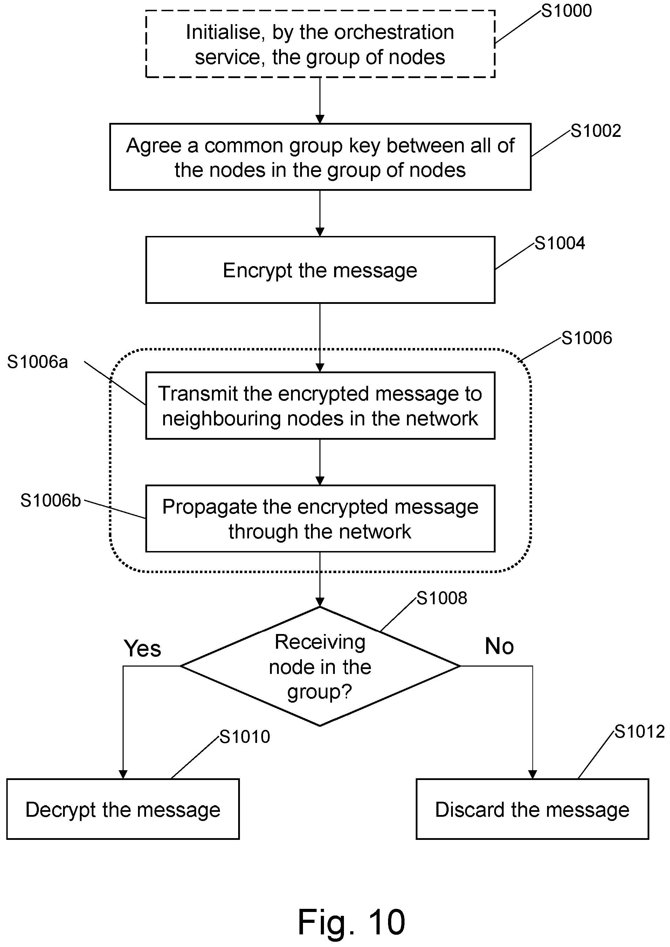

Figure 10 shows a method for securely distributing a message to a group of nodes within a network, as described herein. In a first operation S1000, the orchestration service 300 initialises the groups of nodes 110, 120, 130 amongst the plurality of nodes 102a-102i of the network 100. Operation S1000 corresponds to operations S900, S902 and S904 of Figure 9.

Subsequently, in operation S1002, a common group key is agreed between all of the nodes in the group. Operation S1002 corresponds to operation S906 of Figure 9. Agreeing the group key may include carrying out the methods described in relation to Figures 4 to 8 above.

Subsequently, in operation S1004, a first node amongst the group 110, 120, 130 encrypts a message. This may be done in accordance with operations S908, 910 and 912 discussed above in relation to Figure 9.

Subsequently in operation S1006, the encrypted message is distributed through the mesh network 100 using a gossip-based protocol. Distributing the encrypted message S1006 may involve transmitting the encrypted message from the first node to neighbouring nodes in the mesh network 100, in operation S1006a; and subsequently propagating the encrypted message through the mesh network 100, in operation S1006b, by forwarding the encrypted message from each node that receives the encrypted message on to further nodes that are adjacent to said node in the network. In some examples, the encrypted message will not be forwarded on to adjacent nodes that have already received the encrypted message from another node in the mesh network 100. Operation S1006 corresponds to operations S914 and S916 discussed above in relation to Figure 9.

Subsequently, in operation S1008, at each node that receives the encrypted message, it is determined whether the node is a member of the group 110, 120, 130 that agreed the common group key (in operation S1002). If the node is a member of the group 110, 120, 130 then the node decrypts the message in operation S1010. If, on the other hand, the node is not a member of the group 110, 120, 130 then the node discards the encrypted message in operation S1012. Operations S1008, S1010 and S1012 correspond to operations S918, S920, S922, S924, S926, S928 and S930 discussed above in relation to Figure 9.

In the embodiments described above, the server may comprise a single server or network of servers. In some examples, the functionality of the server may be provided by a network of servers distributed across a geographical area, such as a worldwide distributed network of servers, and a user may be connected to an appropriate one of the network servers based upon, for example, a user location.

The above description discusses embodiments of the invention with reference to a single user for clarity. It will be understood that in practice the system may be shared by a plurality of users, and possibly by a very large number of users simultaneously.

The embodiments described above are fully automatic. In some examples a user or operator of the system may manually instruct some steps of the method to be carried out.

In the described embodiments of the invention the system may be implemented as any form of a computing and/or electronic device. Such a device may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system or any other suitable platform software may be provided at the computing-based device to enable application software to be executed on the device.

Various functions described herein can be implemented in hardware, software, or any combination thereof. If implemented in software, the functions can be stored on or transmitted over as one or more instructions or code on a computer-readable medium. Computer-readable media may include, for example, computer-readable storage media. Computer-readable storage media may include volatile or non-volatile, removable or non-removable media implemented in any method or technology for storage of information such as computer readable instructions, data structures, program modules or other data. A computer-readable storage media can be any available storage media that may be accessed by a computer. By way of example, and not limitation, such computer-readable storage media may comprise RAM, ROM, EEPROM, flash memory or other memory devices, CD-ROM or other optical disc storage, magnetic disc storage or other magnetic storage devices, or any other medium that can be used to carry or store desired program code in the form of instructions or data structures and that can be accessed by a computer. Disc and disk, as used herein, include compact disc (CD), laser disc, optical disc, digital versatile disc (DVD), floppy disk, and Blu-ray (RTM) disc (BD). Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fibre optic cable, twisted pair, DSL, or wireless technologies such as infrared, radio, and microwave are included in the definition of communication medium. Combinations of the above should also be included within the scope of computer-readable media.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), Systemon-a-chip systems (SOCs). Complex Programmable Logic Devices (CPLDs), etc.

Although illustrated as a single system, it is to be understood that the computing device may be a distributed system. Thus, for instance, several devices may be in communication by way of a network connection and may collectively perform tasks described as being performed by the computing device.

Although illustrated as a local device it will be appreciated that the computing device may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages. Variants should be considered to be included into the scope of the invention.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, as used herein, the term "exemplary" is intended to mean "serving as an illustration or example of something".

Further, to the extent that the term "includes" is used in either the detailed description or the claims, such term is intended to be inclusive in a manner similar to the term "comprising" as "comprising" is interpreted when employed as a transitional word in a claim.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

## Claims

1. A method of securely distributing a message to a group (110, 120, 130) of nodes (102a - 102i) within a network (100), wherein the network (100) comprises a plurality of nodes, and the group (110, 120, 130) of nodes (102a - 102i) comprises a subset of the plurality of nodes, the method comprising:
agreeing a common group key between all of the nodes (102a - 102i) in the group (110, 120, 130) of nodes, wherein agreeing the common group key comprises:
arranging the group (110, 120, 130) of nodes (102a - 102i) in an ordered ring (408, 508, 608, 708);
sharing or negotiating a cryptographic key of said node with an adjacent node in the ordered ring (408, 508, 608, 708), wherein each node has another cryptographic key of an adjacent node;
generating a meeting key for said node based on combining the cryptographic key of said node with a shared cryptographic key from an adjacent node;
sending the meeting key to an intermediary (404, 454, 464, 474, 820);
receiving an intermediate key from the intermediary (404, 454, 464, 474, 820), wherein the intermediary (404, 454, 464, 474, 820) computes the intermediate key based on combining two or more meeting keys of corresponding nodes; and
creating the group key based on combining the cryptographic key of said node with the received intermediate key, wherein the created group key comprises a combination of at least N-1 of the cryptographic keys of the nodes, wherein the group (110, 120, 130) of nodes (102a - 102i) comprises N nodes;
encrypting, by a first node amongst the group (110, 120, 130) of nodes (102a - 102i), a message with the group key such that only nodes that are members of the group (110, 120, 130) of nodes (102a - 102i) are able to decrypt and read the message; and
distributing the encrypted message through the network (100) using a gossip-based protocol.

2. The method according to claim 1, wherein distributing the encrypted message through the network (100) using a gossip-based protocol comprises:
transmitting, from the first node to neighbouring nodes in the network (100), the encrypted message; and
propagating the encrypted message through the network (100) by forwarding the encrypted message from each node that receives the encrypted message on to further nodes that are adjacent to said node in the network (100).

3. The method according to claim 2, wherein when propagating the encrypted message through the network (100), each node that receives the encrypted message does not forward the encrypted message to adjacent nodes that have already received the encrypted message.

4. The method according to any preceding claim, further comprising:
before agreeing the common group key, initialising, by an orchestration service, the group (110, 120, 130) of nodes (102a - 102i) by providing each of the nodes amongst the group (110, 120, 130) of nodes (102a - 102i), a plurality of unique IDs, wherein each of the unique IDs identifies a respective node amongst the group (110, 120, 130) of nodes (102a - 102i).

5. The method according to claim 4, wherein initialising the group (110, 120, 130) of nodes by the orchestration service is performed in response to receiving a request from a first node to initialise a group (110, 120, 130) of nodes (102a - 102i) comprising the first node and two or more other nodes within the network (100).

6. The method according to any preceding claim, wherein distributing the encrypted message through the network (100) includes: one or more nodes that are not members of the group (110, 120, 130) of nodes (102a - 102i) receiving the encrypted message.

7. The method according to claim 6, further comprising: discarding, by the one or more nodes that are not members of the group (110, 120, 130) of nodes (102a - 102i), the encrypted message.

8. The method according to claim 7, wherein:
the discarding of the encrypted message is performed in response to determining that the encrypted message has been encrypted with the group key associated with the group (110, 120, 130) of nodes (102a - 102i); and/or
discarding, by the one or more nodes that are not members of the group (110, 120, 130) of nodes (102a - 102i), is carried out after forwarding the encrypted message from each of the one or more nodes that are not members of the group (110, 120, 130) of nodes (102a - 102i) on to further nodes that are adjacent to said node in the network (100).

9. The method according to any preceding claim, wherein:
the group (110, 120, 130) of nodes (102a - 102i) comprises a plurality of nodes that are directly connected to one another; and/or
the group (110, 120, 130) of nodes (102a - 102i) comprises one or more nodes that are not directly connected to the other nodes amongst the group (110, 120, 130) of nodes (102a - 102i).

10. The method according to any preceding claim, further comprising: receiving at one or more of the nodes amongst the group (110, 120, 130) of nodes (102a - 102i), the encrypted message; and decrypting, by said one or more nodes, the encrypted message, wherein decrypting the encrypted message is performed in response to verifying that the encrypted message has been encrypted with the group key associated with the group (110, 120, 130) of nodes (102a - 102i).

11. A network (100) comprising a plurality of nodes, wherein the plurality of nodes are each configured to carry out the method according to any preceding claim.

12. The network (100) according to claim 11, wherein the network (100) is a mesh network (100).

13. A computer comprising a processor configured to operate as a node in the network (100) of claim 11 or 12.

14. A computer-readable medium comprising instructions that, when executed by a computer, cause the computer to carry out the method of any of claims 1 to 10.

15. A computer program product comprising logic that, when executed by a computer, causes the computer to carry out the method of any of claims 1 to 10.

## Patentansprüche

1. Verfahren zum sicheren Verteilen einer Nachricht an eine Gruppe (110, 120, 130) von Knoten (102a - 102i) innerhalb eines Netzwerks (100), wobei das Netzwerk (100) eine Vielzahl von Knoten umfasst und die Gruppe (110, 120, 130) von Knoten (102a - 102i) einen Teilsatz der Vielzahl von Knoten umfasst, wobei das Verfahren Folgendes umfasst:
Vereinbaren eines gemeinsamen Gruppenschlüssels zwischen allen Knoten (102a - 102i) in der Gruppe (110, 120, 130) von Knoten, wobei Vereinbaren des gemeinsamen Gruppenschlüssels Folgendes umfasst:
Anordnen der Gruppe (110, 120, 130) von Knoten (102a -102i) in einem geordneten Ring (408, 508, 608, 708);
Teilen oder Verhandeln eines kryptographischen Schlüssels des Knotens mit einem benachbarten Knoten im geordneten Ring (408, 508, 608, 708), wobei jeder Knoten einen anderen kryptographischen Schlüssel eines benachbarten Knotens besitzt;
Erzeugen eines Sitzungsschlüssels für den betreffenden Knoten auf der Grundlage des Kombinierens des kryptografischen Schlüssels des betreffenden Knotens mit einem gemeinsamen kryptografischen Schlüssel eines benachbarten Knotens;
Senden des Sitzungsschlüssels an einen Vermittler (404, 454, 464, 474, 820);
Empfangen eines Zwischenschlüssels vom Vermittler (404, 454, 464, 474, 820), wobei der Vermittler (404, 454, 464, 474, 820) den Zwischenschlüssel durch Kombinieren von zwei oder mehr Sitzungsschlüsseln entsprechender Knoten berechnet; und
Erstellen des Gruppenschlüssels basierend auf Kombinieren des kryptografischen Schlüssels des Knotens mit dem empfangenen Zwischenschlüssel, wobei der erstellte Gruppenschlüssel eine Kombination aus mindestens N-1 der kryptografischen Schlüssel der Knoten umfasst, wobei die Gruppe (110, 120, 130) von Knoten (102a -102i) N Knoten umfasst;
Verschlüsseln einer Nachricht mit dem Gruppenschlüssel durch einen ersten Knoten der Gruppe (110, 120, 130) von Knoten (102a - 102i), sodass nur Knoten, die Mitglieder der Gruppe (110, 120, 130) von Knoten (102a - 102i) sind, die Nachricht entschlüsseln und lesen können; und
Verteilen der verschlüsselten Nachricht über das Netzwerk (100) mittels eines Gossip-basierten Protokolls.

2. Verfahren nach Anspruch 1, wobei Verteilen der verschlüsselten Nachricht über das Netzwerk (100) mittels eines Gossip-basierten Protokolls Folgendes umfasst:
Übertragen der verschlüsselten Nachricht vom ersten Knoten an benachbarte Knoten im Netzwerk (100); und
Verbreiten der verschlüsselten Nachricht durch das Netzwerk (100) durch Weiterleiten der verschlüsselten Nachricht von jedem Knoten, der die verschlüsselte Nachricht empfängt, an weitere Knoten, die diesem Knoten im Netzwerk (100) benachbart sind.

3. Verfahren nach Anspruch 2, wobei beim Verbreiten der verschlüsselten Nachricht durch das Netzwerk (100) jeder Knoten, der die verschlüsselte Nachricht empfängt, die verschlüsselte Nachricht nicht an benachbarte Knoten weiterleitet, die die verschlüsselte Nachricht bereits empfangen haben.

4. Verfahren nach einem vorstehenden Anspruch, weiter umfassend:
vor Vereinbaren des gemeinsamen Gruppenschlüssels Initialisieren der Gruppe (110, 120, 130) von Knoten (102a - 102i) durch einen Orchestrierungsdienst, indem jedem Knoten der Gruppe (110, 120, 130) von Knoten (102a - 102i) eine Vielzahl eindeutiger IDs bereitgestellt wird, wobei jede der eindeutigen IDs einen entsprechenden Knoten innerhalb der Gruppe (110, 120, 130) von Knoten (102a - 102i) identifiziert.

5. Verfahren nach Anspruch 4, wobei Initialisieren der Gruppe (110, 120, 130) von Knoten durch den Orchestrierungsdienst als Reaktion auf Empfangen einer Anfrage von einem ersten Knoten zur Initialisierung einer Gruppe (110, 120, 130) von Knoten (102a - 102i) erfolgt, die den ersten Knoten und zwei oder mehr andere Knoten innerhalb des Netzwerks (100) umfasst.

6. Verfahren nach einem vorstehenden Anspruch, wobei Verteilen der verschlüsselten Nachricht über das Netzwerk (100) Folgendes beinhaltet: ein oder mehrere Knoten, die nicht Mitglieder der Gruppe (110, 120, 130) von Knoten (102a - 102i) sind, empfangen die verschlüsselte Nachricht.

7. Verfahren nach Anspruch 6, weiter umfassend: Verwerfen der verschlüsselten Nachricht durch einen oder mehrere Knoten, die nicht Mitglieder der Gruppe (110, 120, 130) von Knoten (102a - 102i) sind.

8. Verfahren nach Anspruch 7, wobei:
das Verwerfen der verschlüsselten Nachricht als Reaktion auf Feststellen erfolgt, dass die verschlüsselte Nachricht mit dem Gruppenschlüssel verschlüsselt wurde, der der Gruppe (110, 120, 130) von Knoten (102a -102i) zugeordnet ist; und/oder
das Verwerfen durch den einen oder die mehreren Knoten, die nicht Mitglieder der Gruppe (110, 120, 130) von Knoten (102a - 102i) sind, erfolgt, nachdem die verschlüsselte Nachricht von jedem der einen oder mehreren Knoten, die nicht Mitglieder der Gruppe (110, 120, 130) der Knoten (102a - 102i) sind, an weitere Knoten weitergeleitet worden ist, die dem jeweiligen Knoten im Netzwerk (100) benachbart sind.

9. Verfahren nach einem vorstehenden Anspruch, wobei:
die Gruppe (110, 120, 130) von Knoten (102a - 102i) eine Vielzahl von Knoten umfasst, die direkt miteinander verbunden sind; und/oder
die Gruppe (110, 120, 130) von Knoten (102a - 102i) einen oder mehrere Knoten umfasst, die nicht direkt mit den anderen Knoten der Gruppe (110, 120, 130) der Knoten (102a - 102i) verbunden sind.

10. Verfahren nach einem vorstehenden Anspruch, weiter umfassend: Empfangen der verschlüsselten Nachricht an einem oder mehreren Knoten der Gruppe (110, 120, 130) von Knoten (102a - 102i); und Entschlüsseln der verschlüsselten Nachricht durch den einen oder die mehreren Knoten, wobei die Entschlüsselung der verschlüsselten Nachricht erfolgt, nachdem überprüft worden ist, ob die verschlüsselte Nachricht mit dem Gruppenschlüssel verschlüsselt wurde, der der Gruppe (110, 120, 130) von Knoten (102a - 102i) zugeordnet ist.

11. Netzwerk (100) mit einer Vielzahl von Knoten, wobei jeder Knoten so konfiguriert ist, dass er das Verfahren nach einem vorstehenden Anspruch ausführt.

12. Netzwerk (100) nach Anspruch 11, wobei es sich bei dem Netzwerk (100) um ein vermaschtes Netzwerk (100) handelt.

13. Computer, umfassend einen Prozessor, der so konfiguriert ist, dass er als Knoten im Netzwerk (100) nach Anspruch 11 oder 12 fungiert.

14. Computerlesbares Medium, das Anweisungen umfasst, die, wenn sie von einem Computer ausgeführt werden, den Computer veranlassen, das Verfahren nach einem der Ansprüche 1 bis 10 durchzuführen.

15. Computerprogrammprodukt, das eine Logik enthält, die, wenn sie von einem Computer ausgeführt wird, den Computer veranlasst, das Verfahren nach einem der Ansprüche 1 bis 10 durchzuführen.

## Revendications

1. Procédé de distribution sécurisée d'un message à un groupe (110, 120, 130) de nœuds (102a - 102i) au sein d'un réseau (100), dans lequel le réseau (100) comprend une pluralité de nœuds et le groupe (110, 120, 130) de nœuds (102a - 102i) comprend un sousensemble de la pluralité de nœuds, le procédé comprenant :
l'acceptation d'une clé de groupe commune entre tous les nœuds (102a - 102i) du groupe (110, 120, 130) de nœuds, dans lequel l'acceptation de la clé de groupe commune comprend :
l'agencement du groupe (110, 120, 130) de nœuds (102a -102i) dans un anneau ordonné (408, 508, 608, 708) ;
le partage ou la négociation d'une clé cryptographique dudit nœud avec un nœud adjacent dans l'anneau ordonné (408, 508, 608, 708), dans lequel chaque nœud possède une autre clé cryptographique d'un nœud adjacent ;
la génération d'une clé de réunion pour ledit nœud en combinant la clé cryptographique dudit nœud avec une clé cryptographique partagée provenant d'un nœud adjacent ;
l'envoi de la clé de réunion à un intermédiaire (404, 454, 464, 474, 820) ;
la réception d'une clé intermédiaire de l'intermédiaire (404, 454, 464, 474, 820), dans lequel l'intermédiaire (404, 454, 464, 474, 820) calcule la clé intermédiaire en combinant deux ou plusieurs clés de réunion de nœuds correspondants ; et
la création de la clé de groupe basée sur la combinaison de la clé cryptographique dudit nœud avec la clé intermédiaire reçue, dans lequel la clé de groupe créée comprend une combinaison d'au moins N-1 des clés cryptographiques des nœuds, dans lequel le groupe (110, 120, 130) de nœuds (102a -102i) comprend N nœuds ;
le chiffrement, par un premier nœud du groupe (110, 120, 130) de nœuds (102a - 102i), d'un message avec la clé du groupe de telle sorte que seuls les nœuds membres du groupe (110, 120, 130) de nœuds (102a - 102i) soient en mesure de déchiffrer et de lire le message ; et
distribution du message chiffré sur le réseau (100) à l'aide d'un protocole basé sur le bavardage.

2. Procédé selon la revendication 1, dans lequel la distribution du message chiffré sur le réseau (100) à l'aide d'un protocole basé sur le bavardage comprend :
la transmission, du premier nœud aux nœuds voisins du réseau (100), du message chiffré ; et
la propagation du message chiffré à travers le réseau (100) en transmettant le message chiffré de chaque nœud qui reçoit le message chiffré à d'autres nœuds qui sont adjacents audit nœud dans le réseau (100).

3. Procédé selon la revendication 2, dans lequel, lors de la propagation du message chiffré à travers le réseau (100), chaque nœud qui reçoit le message chiffré ne transmet pas le message chiffré aux nœuds adjacents qui ont déjà reçu le message chiffré.

4. Procédé selon une quelconque revendication précédente, comprenant en outre :
avant d'accepter la clé de groupe commune, l'initialisation, par un service d'orchestration, du groupe (110, 120, 130) de nœuds (102a - 102i) en fournissant à chacun des nœuds du groupe (110, 120, 130) de nœuds (102a - 102i), une pluralité d'identifiants uniques, dans lequel chacun des identifiants uniques identifie un nœud respectif parmi le groupe (110, 120, 130) de nœuds (102a - 102i).

5. Procédé selon la revendication 4, dans lequel l'initialisation du groupe (110, 120, 130) de nœuds par le service d'orchestration est effectuée en réponse à la réception d'une requête d'un premier nœud pour initialiser un groupe (110, 120, 130) de nœuds (102a - 102i) comprenant le premier nœud et deux ou plusieurs autres nœuds au sein du réseau (100).

6. Procédé selon une quelconque revendication précédente, dans lequel la distribution du message chiffré à travers le réseau (100) inclut : un ou plusieurs nœuds qui ne sont pas membres du groupe (110, 120, 130) de nœuds (102a - 102i) recevant le message chiffré.

7. Procédé selon la revendication 6, comprenant en outre : le rejet, par le ou les nœuds qui ne sont pas membres du groupe (110, 120, 130) de nœuds (102a - 102i), du message chiffré.

8. Procédé selon la revendication 7, dans lequel :
le rejet du message chiffré est effectué en réponse à la détermination que le message chiffré a été chiffré avec la clé de groupe associée au groupe (110, 120, 130) de nœuds (102a -102i) ; et/ou
le rejet, par un ou plusieurs nœuds qui ne sont pas membres du groupe (110, 120, 130) de nœuds (102a - 102i), est effectué après avoir transmis le message chiffré de chacun des un ou plusieurs nœuds qui ne sont pas membres du groupe (110, 120, 130) de nœuds (102a - 102i) à d'autres nœuds qui sont adjacents audit nœud dans le réseau (100).

9. Procédé selon une quelconque revendication précédente, dans lequel :
le groupe (110, 120, 130) de nœuds (102a - 102i) comprend une pluralité de nœuds qui sont directement connectés les uns aux autres ; et/ou
le groupe (110, 120, 130) de nœuds (102a - 102i) comprend un ou plusieurs nœuds qui ne sont pas directement connectés aux autres nœuds du groupe (110, 120, 130) de nœuds (102a- 102i).

10. Procédé selon une quelconque revendication précédente, comprenant en outre : la réception, par un ou plusieurs nœuds du groupe (110, 120, 130) de nœuds (102a - 102i), du message chiffré ; et le déchiffrement, par ledit ou les plusieurs nœuds, du message chiffré, dans lequel le déchiffrement du message chiffré est effectué après vérification que le message chiffré a été chiffré avec la clé de groupe associée au groupe (110, 120, 130) de nœuds (102a - 102i).

11. Réseau (100) comprenant une pluralité de nœuds, dans lequel la pluralité de nœuds est configurée pour exécuter le procédé selon une quelconque revendication précédente.

12. Réseau (100) selon la revendication 11, dans lequel le réseau (100) est un réseau maillé (100).

13. Ordinateur comprenant un processeur configuré pour fonctionner comme un nœud dans le réseau (100) selon la revendication 11 ou 12.

14. Support lisible par ordinateur comprenant des instructions qui, lorsqu'elles sont exécutées par un ordinateur, amènent l'ordinateur à mettre en œuvre le procédé selon l'une quelconque des revendications 1 à 10.

15. Produit de programme informatique comprenant une logique qui, lorsqu'elle est exécutée par un ordinateur, amène l'ordinateur à mettre en œuvre le procédé selon l'une quelconque des revendications 1 à 10.
